# EUROPEAN PATENT APPLICATION

(11) **EP 4 325 871 A1**
(43) Date of publication of application: **21.02.2024**
(21) Application number: 22788214.9
(22) Date of filing: 15.04.2022
(51) Int. Cl.: H04N 21/44, H04N 21/235, H04N 21/84

(54) **INFORMATION PROCESSING DEVICE AND METHOD**

(30) Priority: 15.04.2021 US 202163175149 P
(71) Applicant: Sony Group Corporation, Tokyo 108-0075 (JP)
(72) Inventor: KIYAMA, Yuka, Tokyo 108-0075 (JP); TAKAHASHI, Ryohei, Tokyo 108-0075 (JP)
(74) Representative: D Young & Co LLP
(86) International application number: PCT/JP2022/017890
(87) International publication number: WO 2022/220291

(57) **Abstract**

The present disclosure relates to an information processing device and a method capable of playing back content using a scene description corresponding to a plurality of playback methods.

In the scene description, a property corresponding to the method of playing back 3D data is selected on the basis of an extension and used for playback. In addition, in the scene description, an alternatives array corresponding to the method of playing back the 3D data is selected, and a property that is an element of the array is used for playback. In addition, a scene description file storing an extension for identifying a property for each method of playing back 3D data is generated. In addition, a scene description file storing a plurality of alternatives arrays having properties corresponding to the mutually same method of playing back 3D data as elements is generated. The present disclosure can be applied to, for example, an information processing device, an information processing method, or the like.

## Description

### TECHNICAL FIELD

The present disclosure relates to an information processing device and a method, and more particularly, to an information processing device and a method capable of playing back content using a scene description corresponding to a plurality of playback methods.

### BACKGROUND ART

In the related art, there is the GL transmission format (glTF) (registered trademark) 2.0 that is a format of a scene description (Scene Description) for disposing and rendering a 3D (three-dimensional) object in a three-dimensional space (for example, see Non Patent Document 1) .

Furthermore, in the moving picture experts group (MPEG)-I Scene Description, a method of expanding the glTF 2.0 and handling dynamic content in the time direction has been proposed (for example, see Non Patent Document 2).

Meanwhile, as a method of encoding a point cloud (point cloud), video based point cloud compression (V-PCC) has been proposed in which a region is formed by segmenting a point cloud, planar projection is performed for each region, and encoding is performed by a video codec (see, for example, Non Patent Document 3). A point cloud is 3D data representing a three-dimensional structure of an object by a set of points having position information and attribute information (color, reflection, and the like) in a three-dimensional space.

In addition, a method of storing a V3C bit stream including coded data of a point cloud encoded by the V-PCC in an ISOBMFF has been studied (see, for example, Non Patent Document 4).

In recent years, a method of using a V3C bit stream stored in an ISOBMFF as actual data of a 3D object disposed in a scene has been studied. As a method of playing such content, a method of reconstructing 3D data by a media access function (MAF) and a method of reconstructing 3D data by a presentation engine (PE) have been studied.

### CITATION LIST

### NON PATENT DOCUMENT

Non Patent Document 1: Saurabh Bhatia, Patrick Cozzi, Alexey Knyazev, Tony Parisi, "Khronos glTF2.0", https://github.com/KhronosGroup/glTF/tree/master/specific ation/2.0, June 9, 2017
Non Patent Document 2: "Text of ISO/IEC CD 23090-14 Scene Description for MPEG Media", ISO/IEC JTC 1/SC 29/WG 3 N00026, 2020-11-30
Non Patent Document 3: "ISO/IEC FDIS 23090-5 Visual Volumetric Video-based Coding and Video-based Point Cloud Compression", ISO/IEC JTC 1/SC 29/ WG 11 N19579, 2020-09-21
Non Patent Document 4: "Draft text of ISO/IEC FDIS 23090-10 Carriage of Visual Volumetric Video-based Coding Data", INTERNATIONAL ORGANIZATION FOR STANDARDIZATION ORGANISATION INTERNATIONALE DE NORMALISATION ISO/IEC JTC 1/SC 29/WG 03 MPEG SYSTEMS, ISO/IEC JTC 1/SC 29/WG 03 N0163, 19995, 2021-03-25

### SUMMARY OF THE INVENTION

### PROBLEMS TO BE SOLVED BY THE INVENTION

However, the configuration of the scene description is different between the case where the 3D data is reconstructed by the MAF and the case where the 3D data is reconstructed by the PE. Therefore, one scene description cannot be used in both playback methods. Therefore, in order to support both playback methods, it is necessary to prepare respective scene description files for one content.

The present disclosure has been made in view of such a situation, and is to enable content to be played back using a scene description corresponding to a plurality of playback methods.

### SOLUTIONS TO PROBLEMS

An information processing device according to an aspect of the present technology is an information processing device including a file processing unit that selects a property corresponding to a method of playing back 3D data on the basis of an extension specified in a scene description, and processes the 3D data by the playback method using the selected property.

An information processing method according to an aspect of the present technology is an information processing method including selecting a property corresponding to a method of playing back 3D data on the basis of an extension specified in a scene description; and processing the 3D data by the playback method using the selected property.

An information processing device according to another aspect of the present technology is an information processing device including a file processing unit that selects an alternatives array corresponding to a method of playing back 3D data from among the alternatives arrays specified in a scene description, and processes the 3D data by the playing method using a property that is an element of the selected alternatives array.

An information processing method according to another aspect of the present technology is an information processing method including selecting an alternatives array corresponding to a method of playing back 3D data from among the alternatives arrays specified in a scene description, and processing the 3D data by the playback method using a property that is an element of the selected alternatives array.

An information processing device according to still another aspect of the present technology is an information processing device including a file generation unit that generates a scene description file that stores an extension for identifying a property for each method of playing back 3D data.

An information processing method according to still another aspect of the present technology is an information processing method including generating a scene description file storing an extension for identifying a property for each method of playing back 3D data.

An information processing device according to still another aspect of the present technology is an information processing device including a file generation unit that generates a scene description file that stores a plurality of alternatives arrays having properties corresponding to the mutually same method of playing back 3D data as elements.

An information processing method according to still another aspect of the present technology is an information processing method including generating a scene description file that stores a plurality of alternatives arrays having properties corresponding to the mutually same method of playing back 3D data as elements.

In an information processing device and a method according to an aspect of the present technology, a property corresponding to a method of playing back 3D data is selected on the basis of an extension specified in a scene description, and the selected property is used, and the 3D data by the playback method is processed.

In an information processing device and a method according to another aspect of the present technology, an alternatives array corresponding to a method of playing back 3D data is selected from among alternatives arrays specified in a scene description, and a property that is an element of the selected alternatives array is used to process 3D data by the playback method.

In an information processing device and a method according to still another aspect of the present technology, a scene description file storing an extension for identifying a property for each method of playing back 3D data is generated.

In an information processing device and a method according to still another aspect of the present technology, a scene description file storing a plurality of alternatives arrays having properties corresponding to the mutually same method of playing back 3D data as elements is generated.

### BRIEF DESCRIPTION OF DRAWINGS

Fig. 1 is a diagram illustrating a main configuration example of a glTF 2.0.
Fig. 2 is a diagram illustrating an example of a glTF object and a reference relationship.
Fig. 3 is a diagram illustrating a description example of a scene description.
Fig. 4 is a diagram for explaining a method of accessing binary data.
Fig. 5 is a diagram illustrating a description example of a scene description.
Fig. 6 is a diagram illustrating a relationship between a buffer object, a buffer view object, and an accessor object.
Fig. 7 is a diagram illustrating description examples of a buffer object, a buffer view object, and an accessor object.
Fig. 8 is a diagram illustrating a configuration example of an object of a scene description.
Fig. 9 is a diagram illustrating a description example of a scene description.
Fig. 10 is a diagram for explaining an object extension method.
Fig. 11 is a diagram illustrating a configuration of a client process.
Fig. 12 is a diagram illustrating a configuration example of an extension for handling timed metadata.
Fig. 13 is a diagram illustrating a description example of a scene description.
Fig. 14 is a diagram illustrating a description example of a scene description.
Fig. 15 is a diagram illustrating a configuration example of an extension for handling timed metadata.
Fig. 16 is a diagram illustrating a main configuration example of a client.
Fig. 17 is a flowchart illustrating an example of a flow of a client process.
Fig. 18 is a diagram for explaining an outline of a V-PCC.
Fig. 19 is a diagram illustrating a main configuration example of a V-PCC bit stream.
Fig. 20 is a diagram illustrating a configuration example of tracks of an ISOBMFF in the case of a multi-track structure.
Fig. 21 is a diagram illustrating a description example of an MPD in the case of a multi-track structure.
Fig. 22 is a diagram illustrating an example of a client process.
Fig. 23 is a diagram illustrating a configuration example of an object in a scene description in a case where the 3D data is reconstructed by the MAF.
Fig. 24 is a diagram illustrating a configuration example of an object in a scene description in a case where the 3D data is reconstructed by the PE.
Fig. 25 is a diagram illustrating a configuration example of an object in a scene description in a case where the 3D data is reconstructed by the PE.
Fig. 26 is a diagram illustrating an example of a scene description corresponding to a plurality of playback methods.
Fig. 27 is a diagram illustrating an object configuration example of a scene description.
Fig. 28 is a diagram illustrating a description example of a scene description.
Fig. 29 is a diagram illustrating an object configuration example of a scene description.
Fig. 30 is a diagram illustrating a description example of a scene description.
Fig. 31 is a diagram illustrating an object configuration example of a scene description.
Fig. 32 is a diagram illustrating a description example of a scene description.
Fig. 33 is a diagram illustrating an object configuration example of a scene description.
Fig. 34 is a diagram illustrating a description example of a scene description.
Fig. 35 is a diagram illustrating an example of a scene description corresponding to a plurality of playback methods.
Fig. 36 is a diagram illustrating an object configuration example of a scene description.
Fig. 37 is a diagram illustrating an example of a scene description corresponding to a plurality of playback methods.
Fig. 38 is a diagram illustrating an object configuration example of a scene description.
Fig. 39 is a block diagram illustrating a principal configuration example of a file generation device.
Fig. 40 is a flowchart illustrating an example of a flow of a file generation process.
Fig. 41 is a flowchart illustrating an example of a flow of a file generation process.
Fig. 42 is a block diagram illustrating a main configuration example of a client device.
Fig. 43 is a flowchart illustrating an example of a flow of a playback process.
Fig. 44 is a block diagram illustrating a main configuration example of a computer.

### MODE FOR CARRYING OUT THE INVENTION

Hereinafter, modes for carrying out the present disclosure (hereinafter referred to as embodiments) will be described. Note that the description will be made in the following order.
1. Documents and the like supporting technical content and technical terms
2. MPEG-I scene description
3. Scene description corresponding to a plurality of playback methods
4. First embodiment (file generation device)
5. Second embodiment (client device)
6. Appendix

### <1. Documents and the like supporting technical content and technical terms>

The scope disclosed in the present technology includes not only the content described in the embodiments but also the content described in the following non Patent Documents and the like that are known at the time of filing, content of other documents referred to in the following non Patent Documents, and the like.

Non Patent Document 1: (described above)
Non Patent Document 2: (described above)
Non Patent Document 3: (described above)
Non Patent Document 4: (described above)

That is, the content described in the above-described Non Patent Documents, the content of other documents referred to in the above-described Non Patent Documents, and the like are also basis for determining the support requirement. For example, even in a case where syntax and terms such as the glTF 2.0 and its extension described in Non Patent Documents 1 to 3 are not directly defined in the present disclosure, they are within the scope of the present disclosure and satisfy the support requirements of the claims. Furthermore, for example, technical terms such as parsing, syntax, and semantics are similarly within the scope of the present disclosure and satisfy the support requirements of the claims even in a case where not directly defined in the present disclosure.

### <2. MPEG-I scene description>

### <gltf2.0>

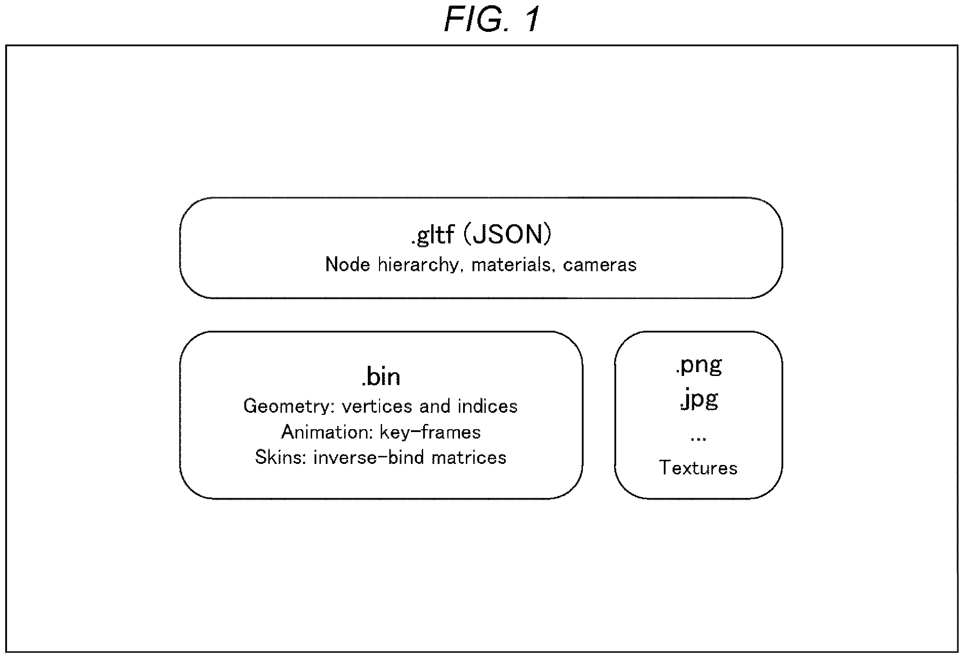

In the related art, for example, as described in Non Patent Document 1, there is the GL Transmission Format (registered trademark) (glTF) 2.0 that is a format for disposing a 3D (three-dimensional) object in a three-dimensional space. For example, as illustrated in Fig. 1, the glTF 2.0 includes a JSON format file (glTF), a binary file (.bin), and an image file (.png,.jpg, and the like). The binary file stores binary data such as geometry and animation. The image file stores data such as texture.

The JSON format file is a scene description file (scene description file) described in JSON (JavaScript (registered trademark) Object Notation). The scene description is metadata describing (a description of) a scene of the 3D content. The description of the scene description defines what kind of scene the scene is. The scene description file is a file that stores such a scene description. In the present disclosure, the scene description file is also referred to as a scene description file.

The description of the JSON format file includes a list of pairs of a key (KEY) and a value (VALUE). An example of the format will be described below.
"KEY":"VALUE"

The key includes a character string. The value includes a numerical value, a character string, a true/false value, an array, an object, null, or the like.

In addition, a plurality pairs of a key and a value ("KEY":"VALUE") can be put together using {} (braces). The object put together in braces is also referred to as a JSON object. An example of the format will be described below.
"user":{"id":1, "name":"tanaka"}

In this example, a JSON object in which a pair of "id":1 and a pair of "Name":"tanaka" are put together is defined as a value corresponding to a key (user).

In addition, zero or more values can be disposed using [] (square brackets). This array is also referred to as a JSON array. For example, a JSON object can be applied as an element of this JSON array. An example of the format will be described below.

```
        test":["hoge", "fuga", "bar"]
        "users":[{"id":1,
 "name": "tanaka"}, {"id": 2, "name": "yamada"}, {"id": 3,
 "name":"sato"}]
```

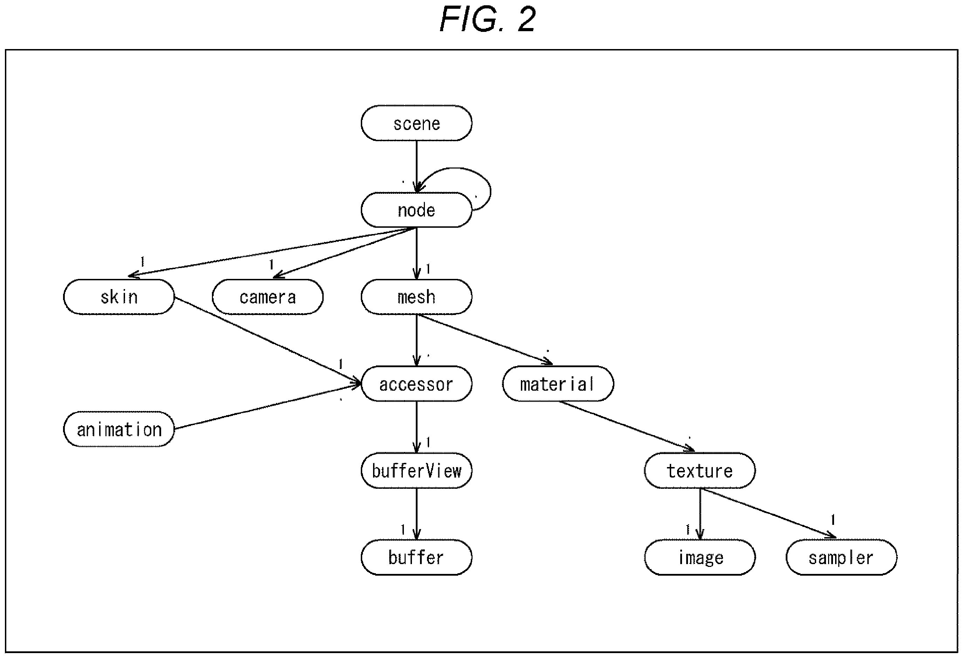

Fig. 2 illustrates glTF objects (glTF object) that can be described at the top of the JSON format file and a reference relationship that they have. Long circles in the tree structure shown in Fig. 2 indicate objects, and arrows between the objects indicate reference relationships. As illustrated in Fig. 2, objects such as "scene", "node", "mesh", "camera", "skin", "material", and "texture" are described at the top of the JSON format file.

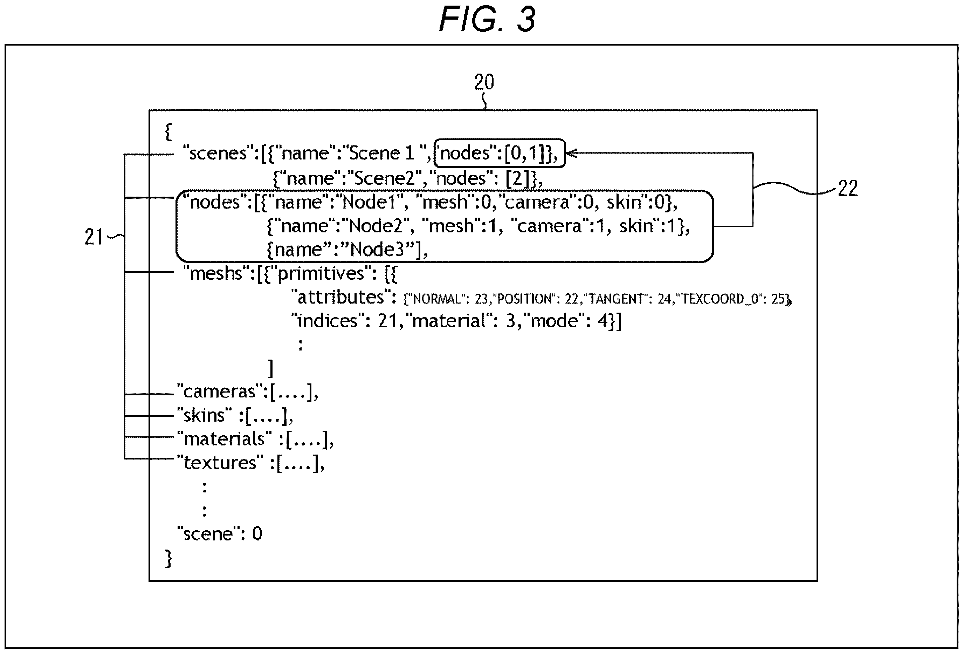

A description example of such a JSON format file (scene description) is illustrated in Fig. 3. A JSON format file 20 of Fig. 3 illustrates a description example of part of the top. In the JSON format file 20, all the used top-level objects (top-level object) 21 are described at the top. The top-level object 21 is the glTF object illustrated in Fig. 2. Furthermore, in the JSON format file 20, a reference relationship between objects (object) is indicated as indicated by an arrow 22. More specifically, the reference relationship is indicated by designating an index (index) of an element of the array of the object to be referred to with the property (property) of the superior object.

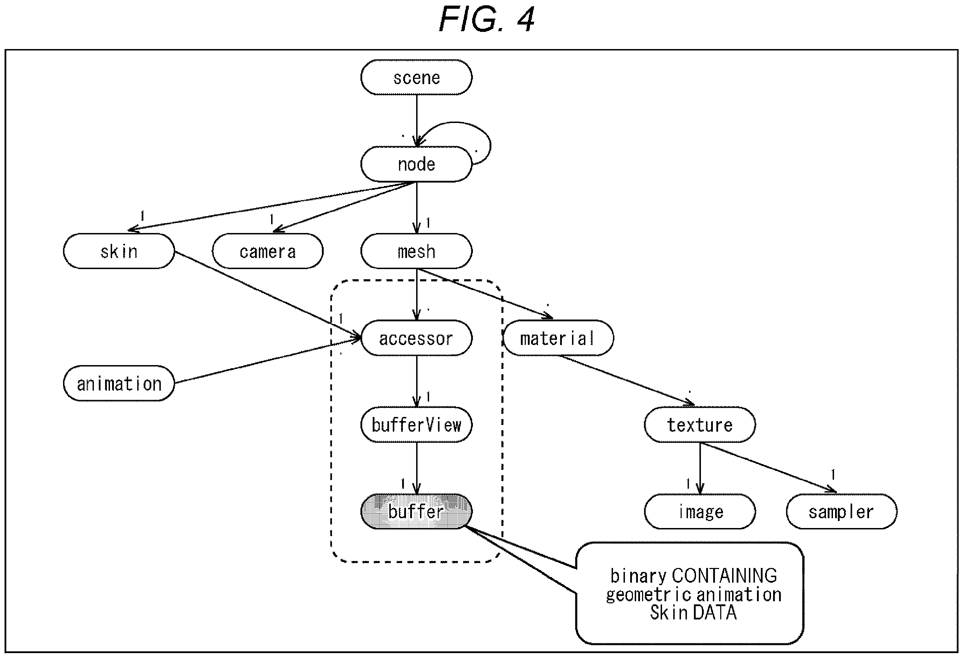

Fig. 4 is a diagram illustrating a method of accessing binary data. As illustrated in Fig. 4, the binary data is stored in the buffer object (buffer object). That is, information (for example, a uniform resource identifier (URI) or the like) for accessing the binary data in the buffer object is indicated. In the JSON format file, as illustrated in Fig. 4, it is possible to access the buffer object via an accessor object (accessor object) and a buffer view object (bufferView object), for example, from objects such as a mesh (mesh), a camera (camera), and a skin (skin).

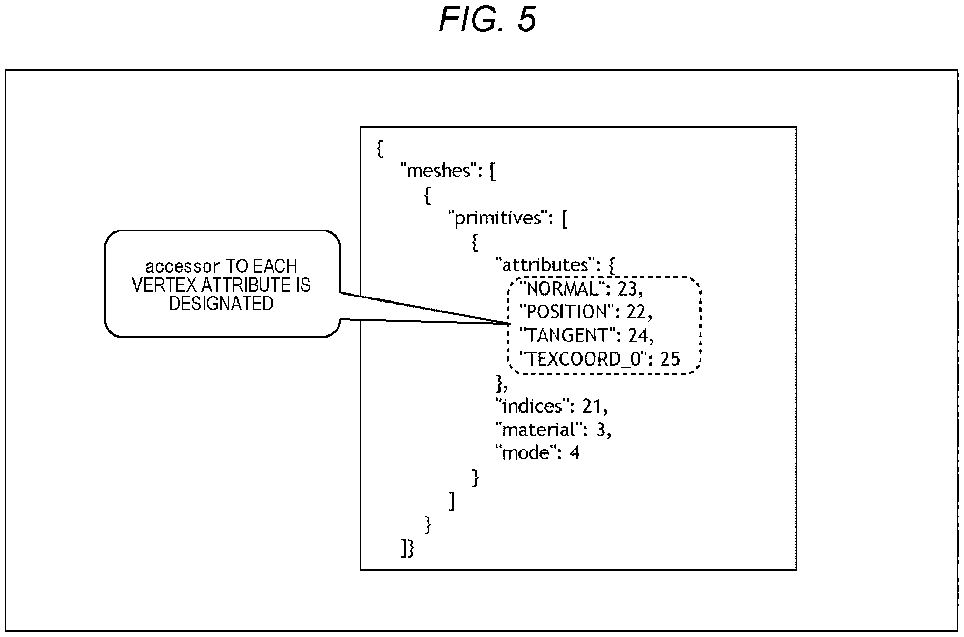

That is, in an object such as the mesh (mesh), the camera (camera), or the skin (skin), an accessor object to be referred to is designated. Fig. 5 illustrates a description example of the mesh object (mesh) in the JSON format file. For example, as illustrated in Fig. 5, in the mesh object, attributes (attribute) of vertices such as NORMAL, POSITION, TANGENT, and TEXCORD_0 are defined as keys, and an accessor object to be referred to is designated as a value for each attribute.

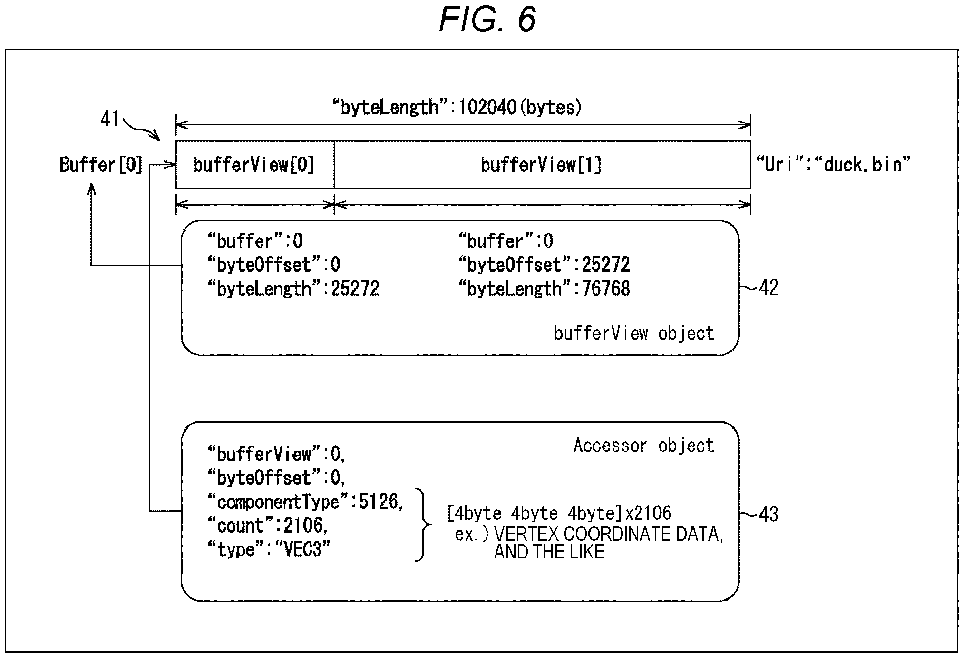

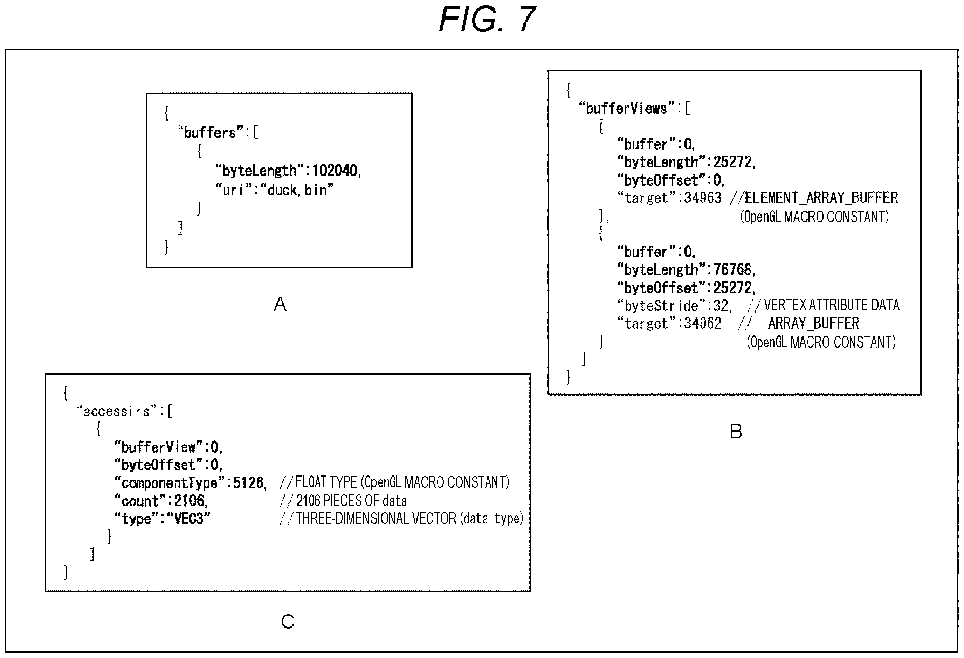

A relationship between the buffer object, the buffer view object, and the accessor object is illustrated in Fig. 6. Furthermore, a description example of these objects in the JSON format file is illustrated in Fig. 7.

In Fig. 6, a buffer object 41 is an object that stores information (such as URI) for accessing binary data that is actual data, and information indicating a data length (for example, byte length) of the binary data. A of Fig. 7 illustrates a description example of the buffer object 41. ""bytelength":102040" illustrated in A of Fig. 7 indicates that the byte length of the buffer object 41 is 102040 bytes (bytes) as illustrated in Fig. 6. Furthermore, ""uri":"duck.bin"" illustrated in A of Fig. 7 indicates that the URI of the buffer object 41 is "duck.bin" as illustrated in Fig. 6.

In Fig. 6, a buffer view object 42 is an object that stores information related to a subset (subset) region of binary data designated in the buffer object 41 (that is, information related to a partial region of the buffer object 41). B of Fig. 7 illustrates a description example of the buffer view object 42. As illustrated in B of Fig. 6 or 7, the buffer view object 42 stores, for example, information such as identification information about the buffer object 41 to which the buffer view object 42 belongs, an offset (for example, a byte offset) indicating a position of the buffer view object 42 in the buffer object 41, and a length (for example, a byte length) indicating a data length (for example, a byte length) of the buffer view object 42.

As illustrated in B of Fig. 7, in a case where there is a plurality of buffer view objects, information is described for each buffer view object (that is, for each subset region). For example, information such as ""buffer":0", ""bytelength":25272", and ""byteOffset":0" illustrated on the upper side in B of Fig. 7 is information about the first buffer view object 42 (bufferView[0]) illustrated in the buffer object 41 in Fig. 6. Further, the information such as ""buffer":0", ""bytelength":76768", and ""byteOffset":25272" illustrated on the lower side in B of Fig. 7 is information about the second buffer view object 42 (bufferView[1]) illustrated in the buffer object 41 in Fig. 6.

""Buffer":0" of the first buffer view object 42 (bufferView[0]) illustrated in B of Fig. 7 indicates that the identification information about the buffer object 41 to which the buffer view object 42 (bufferView[0]) belongs is "0" (Buffer[0]) as illustrated in Fig. 6. Further, ""bytelength":25272" indicates that the byte length of the buffer view object 42 (bufferView[0]) is 25272 bytes. Further, ""byteOffset":0" indicates that the byte offset of the buffer view object 42 (bufferView[0]) is 0 bytes.

""Buffer":0" of the second buffer view object 42 (bufferView[1]) illustrated in B of Fig. 7 indicates that the identification information about the buffer object 41 to which the buffer view object 42 (bufferView[0]) belongs is "0" (Buffer[0]) as illustrated in Fig. 6. Further, ""bytelength":76768" indicates that the byte length of the buffer view object 42 (bufferView[0]) is 76768 bytes. Further, ""byteOffset":25272" indicates that the byte offset of the buffer view object 42 (bufferView[0]) is 25272 bytes.

In Fig. 6, an accessor object 43 is an object that stores information related to a method of interpreting data of the buffer view object 42. C of Fig. 7 illustrates a description example of the accessor object 43. As illustrated in C of Fig. 6 or 7, the accessor object 43 stores, for example, information such as identification information about the buffer view object 42 to which the accessor object 43 belongs, an offset (for example, byte offset) indicating a position of the buffer view object 42 in the buffer object 41, a component type of the buffer view object 42, the number of pieces of data stored in the buffer view object 42, a type of data stored in the buffer view object 42, and the like. These pieces of information are described for each buffer view object.

In the example in C of Fig. 7, information such as ""bufferView":0", ""byteOffset":0", ""componentType":5126", ""count":2106", and ""Type":"VEC3"" is illustrated. ""bufferView": 0" indicates that the identification information about the buffer view object 42 to which the accessor object 43 belongs is "0" (bufferView[0]), as illustrated in Fig. 6. Further, ""byteOffset":0" indicates that the byte offset of the buffer view object 42 (bufferView[0]) is 0 bytes. Further, ""componentType":5126" indicates that the component type is a FLOAT type (OpenGL macro constant). Further, ""count":2106" indicates that the number of pieces of data stored in the buffer view object 42 (bufferView[0]) is 2106. Further, ""Type":"VEC3"" indicates that (the type of) the data stored in the buffer view object 42 (bufferView[0]) is a three-dimensional vector.

All accesses to data other than the image (image) are defined by reference to the accessor object 43 (by designating an accessor index).

Next, a method of designating a 3D object of a point cloud in a scene description (JSON format file) conforming to such a glTF 2.0 will be described. A point cloud is a 3D content expressing a three-dimensional structure (three-dimensional shaped object) as a set of a large number of points. The data of the point cloud includes position information (also referred to as a geometry) and attribute information (also referred to as an attribute) of each point. The attribute can include any information. For example, color information, reflectance information, normal line information, and the like of each point may be included in the attribute. As described above, the point cloud has a relatively simple data structure, and can express any three-dimensional structure with sufficient accuracy by using a sufficiently large number of points.

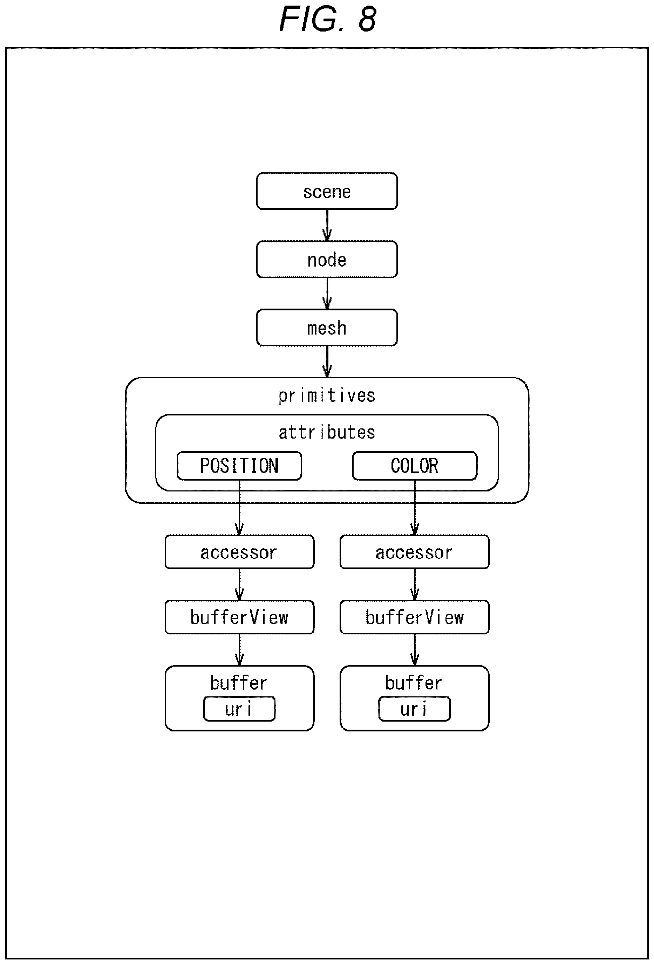

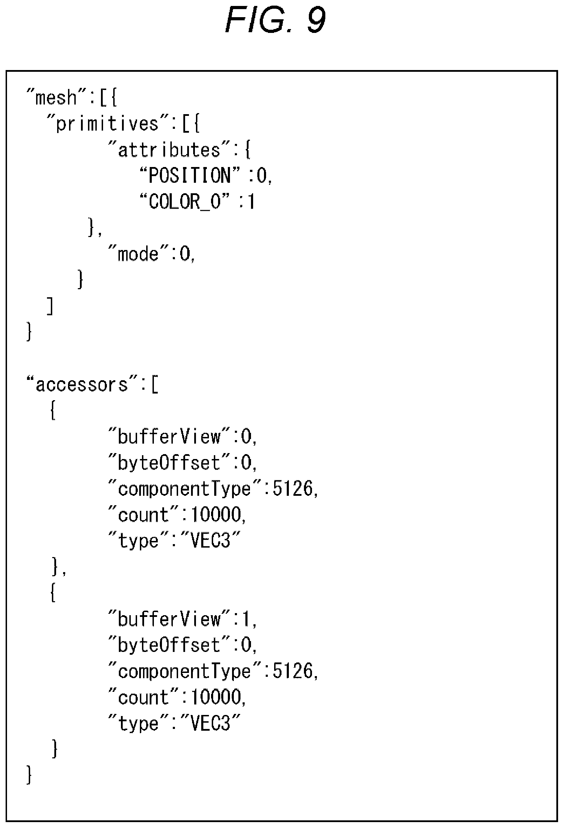

In a case where the point cloud does not change in the time direction (also referred to as static), the mesh.primitives object of the glTF 2.0 is used to designate the 3D object. Fig. 8 is a diagram illustrating a configuration example of an object in a scene description in a case where a point cloud is static. Fig. 9 is a diagram illustrating a description example of the scene description.

As illustrated in Fig. 9, the mode of the primitives object is designated to 0 indicating that data (data) is treated as a point (point) of a point cloud. As illustrated in Figs. 8 and 9, in the position property (POSITION property) of the attributes object in mesh.primitives, an accessor (accessor) to a buffer (buffer) that stores position information about a point (Point) is designated. Similarly, in the color property (COLOR property) of the attributes object, an accessor (accessor) to a buffer (buffer) that stores color information about a point (Point) is designated. There may be one buffer (buffer) and one buffer view (bufferView) (data (data) may be stored in one file (file)) .

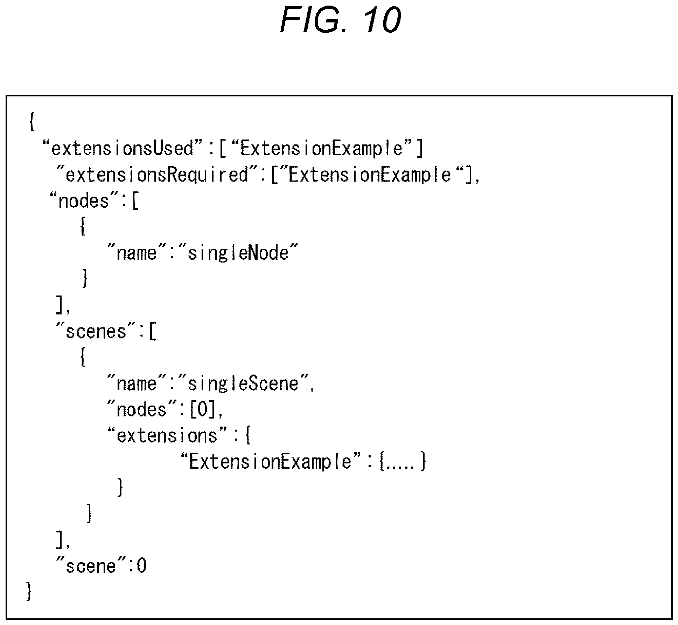

Next, an extension of an object of such a scene description will be described. Each object of glTF 2.0 may store a newly defined object in an extension object (extension object). Fig. 10 illustrates a description example in a case where a newly defined object (ExtensionExample) is specified. As illustrated in Fig. 10, in a case where a newly defined extension is used, the extension object name (in the example of Fig. 10, ExtensionExample) is described in "extensionUsed" and "extensionRequired". This indicates that this extension is an extension that is used or is an extension required for load (load).

### <Client process>

Next, processing of the client device in the MPEG-I Scene Description will be described. The client device acquires a scene description, acquires data of a 3D object on the basis of the scene description, and generates a display image using the scene description and the data of the 3D object.

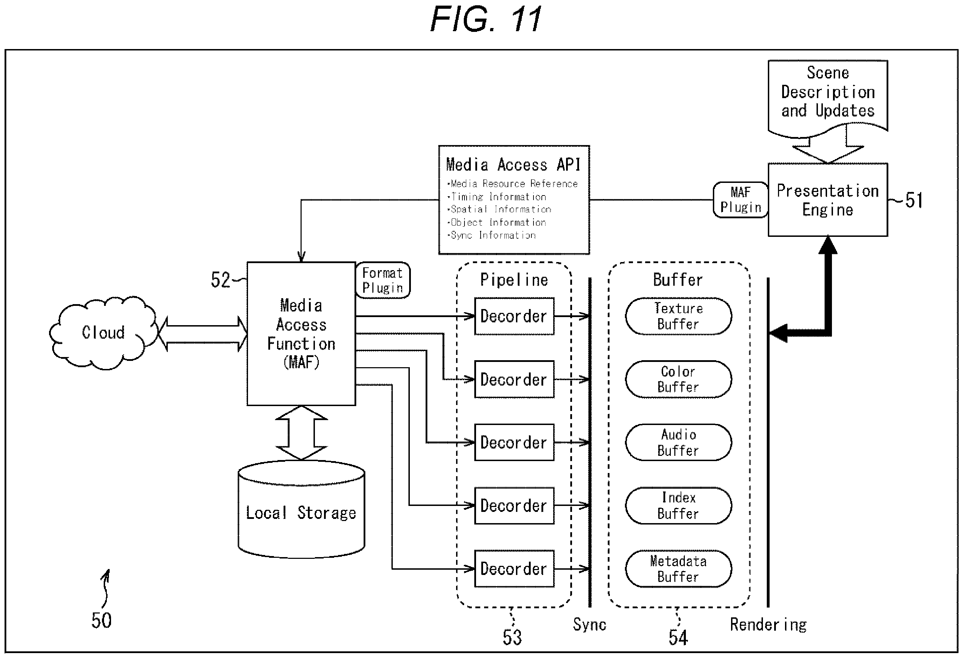

As described in Non Patent Document 2, in the client device, a presentation engine, a media access function, or the like performs a process. For example, as illustrated in Fig. 11, a presentation engine (Presentation Engine) 51 of a client device 50 acquires an initial value of a scene description and information (hereinafter, also referred to as update information) for updating the scene description, and generates the scene description at the processing target time. Then, the presentation engine 51 parses the scene description and identifies a medium (moving image, audio, or the like) to be played back. Then, the presentation engine 51 requests a media access function (Media Access Function) 52 to acquire the medium via a media access API (Media Access API (Application Program Interface)). Furthermore, the presentation engine 51 also performs setting of a pipeline process, designation of a buffer, and the like.

The media access function 52 acquires various pieces of data of media requested by the presentation engine 51 from a cloud (Cloud), a local storage (Local Storage), or the like. The media access function 52 supplies the acquired various pieces of data (coded data) of the media to a pipeline (Pipeline) 53.

The pipeline 53 decodes various pieces of data (coded data) of the supplied media by a pipeline process, and supplies a decoding result to a buffer (Buffer) 54. The buffer 54 holds various pieces of data of the supplied medium.

The presentation engine 51 performs rendering (Rendering) or the like using various pieces of data of media held in the buffer 54.

### <Application of timed media>

In recent years, for example, as described in Non Patent Document 2, in the MPEG-I Scene Description, it has been studied to extend the glTF 2.0 and to apply timed media (Timed media) as 3D object content. The timed media is media data that changes in the time axis direction like a moving image in a two-dimensional image.

The glTF was applicable only to still image data as media data (3D object content). That is, the glTF does not correspond to media data of a moving image. In the case of moving the 3D object, animation (a method of switching a still image along a time axis) has been applied.

In the MPEG-I Scene Description, it has been studied to apply the glTF 2.0, apply a JSON format file as a scene description, and further extend the glTF so that timed media (for example, video data) can be handled as media data. In order to handle timed media, for example, the following extension is performed.

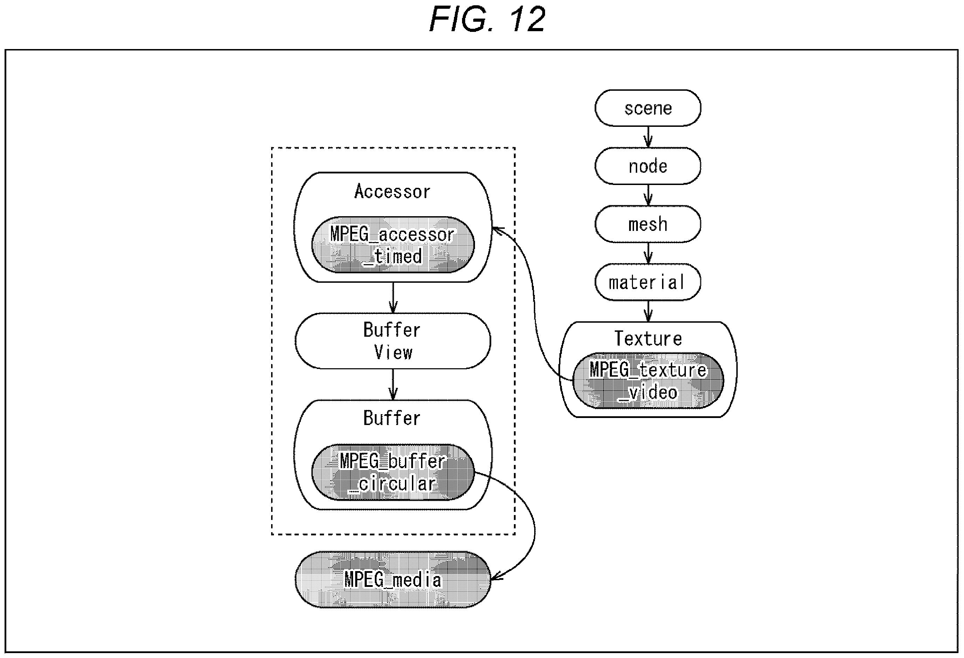

Fig. 12 is a diagram for describing the extension for handling timed media. In the example of Fig. 12, the MPEG media object (MPEG_media) is an extension of glTF, and is an object that designates attributes of MPEG media such as video data, for example, uri, track, renderingRate, startTime, and the like.

Furthermore, as illustrated in Fig. 12, an MPEG texture video object (MPEG_texture_video) is provided as an extension object (extensions) of the texture object (texture). In the MPEG texture video object, information about an accessor corresponding to a buffer object to be accessed is stored. That is, the MPEG texture video object is an object that designates an index of an accessor (accessor) corresponding to a buffer (buffer) in which texture media (texture media) designated by the MPEG media object (MPEG_media) are decoded and stored.

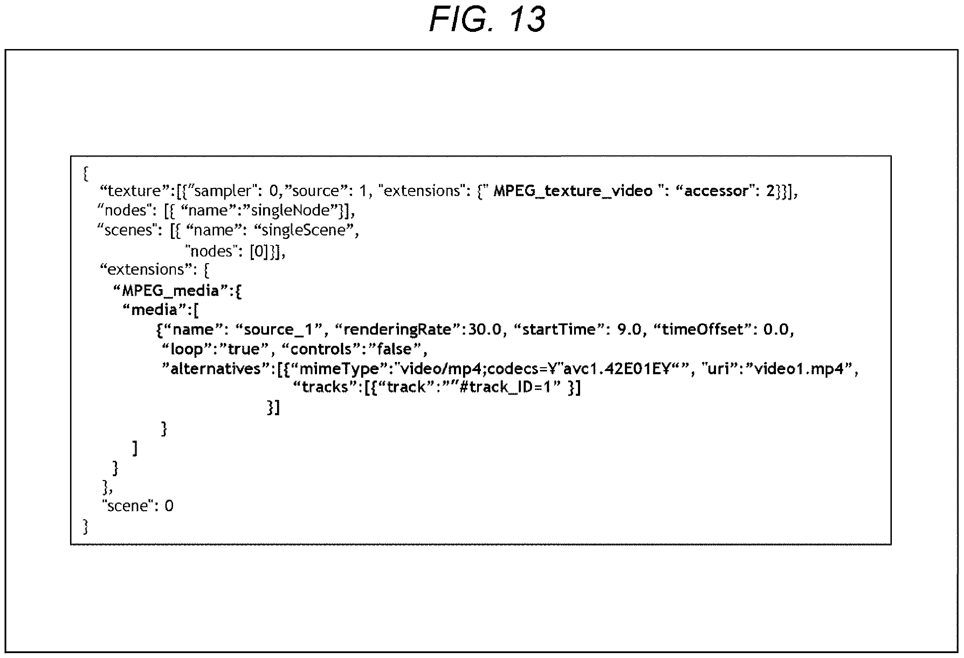

Fig. 13 is a diagram illustrating a description example of an MPEG media object (MPEG_media) and an MPEG texture video object (MPEG_texture_video) in a scene description for describing an extension for handling timed media. In the example of Fig. 13, in the second line from the top, an MPEG texture video object (MPEG_texture_video) is set as an extension object (extensions) of a texture object (texture) as described below. Then, an index of an accessor ("2" in this example) is designated as the value of the MPEG video texture object.

```
        "texture":[{"sampler":0, "source":1,
 "extensions":{"MPEG_texture_video ":"accessor":2}}],
```

Furthermore, in the case of the example of Fig. 13, in the seventh to 16 lines from the top, an MPEG media object (MPEG_media) is set as an extension object (extensions) of the glTF as described below. Then, as the value of the MPEG media object, for example, various pieces of information related to the MPEG media object such as encoding and URI of the MPEG media object are stored.

```
"MPEG_media":{
        "media":[
        {"name":"source_1", "renderingRate": 30.0,
 "startTime":9.0, "timeOffset":0.0,
        "loop":"true", "controls":"false",
        "alternatives": [{"mimeType":"video/mp4;codecs=¥"avc
 1.42E01E¥"", "uri":"video1.mp4",
        "tracks":[{"track":""#track_ID=1"}]
        }]
        }
        ]
        }
```

In addition, each frame data is decoded and sequentially stored in a buffer, but its position and the like fluctuate. Therefore, the scene description has a mechanism to store the fluctuating information so that the renderer (renderer) can read the data. For example, as illustrated in Fig. 12, an MPEG buffer circular object (MPEG_buffer_circular) is provided as an extension object (extensions) of the buffer object (buffer). Information for dynamically storing data in the buffer object is stored in the MPEG buffer circular object. For example, information such as information indicating the data length of the buffer header (bufferHeader) and information indicating the number of frames is stored in the MPEG buffer circular object. Note that the buffer header stores, for example, information such as an index (index), a time stamp of stored frame data, a data length, and the like.

Further, as illustrated in Fig. 12, an MPEG accessor timed object (MPEG_timed_accessor) is provided as an extension object (extensions) of the accessor object (accessor). In this case, since the media data is a moving image, the buffer view object (bufferView) referred to in the time direction may change (the position may vary). Therefore, information indicating the buffer view object to be referred to is stored in the MPEG accessor timed object. For example, the MPEG accessor timed object stores information indicating a reference to a buffer view object (bufferView) in which a timed accessor information header (timedAccessor information header) is described. Note that the timed accessor information header is, for example, header information that stores information in the dynamically changing accessor object and the buffer view object.

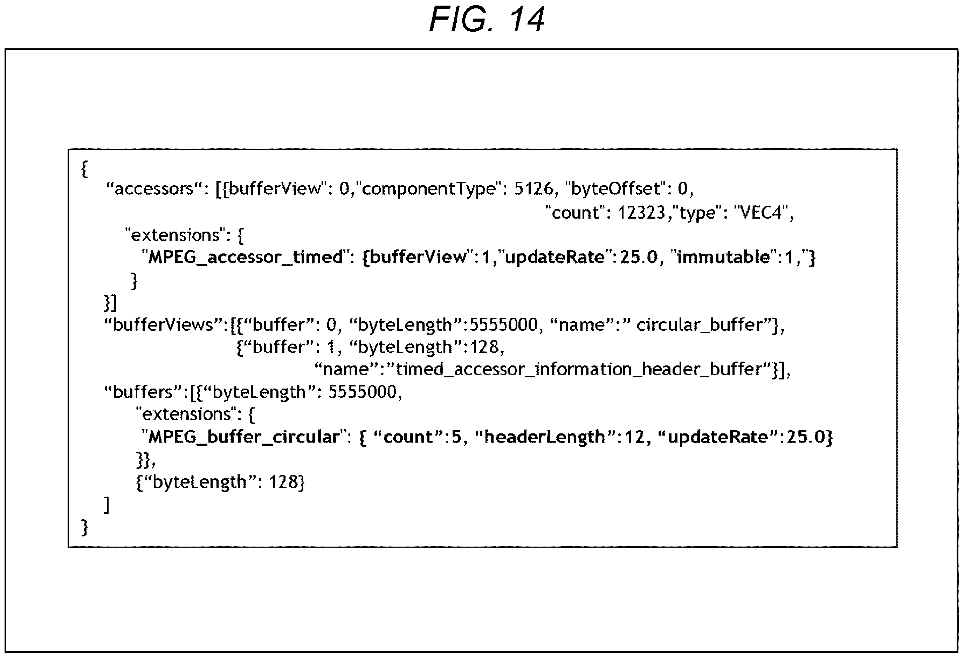

Fig. 14 is a diagram illustrating a description example of an MPEG buffer circular object (MPEG_buffer_circular) and an MPEG accessor timed object (MPEG_accessor_timed) in a scene description for describing an extension for handling timed media. In the case of the example of Fig. 14, in the fifth line from the top, an MPEG accessor timed object (MPEG_accessor_timed) is set as an extension object (extensions) of the accessor object (accessors) as described below. Then, parameters such as an index ("1" in this example) of the buffer view object, an update rate (updateRate), and immutable information (immutable) as the values of the MPEG accessor timed object and values thereof are designated.

```
        "MPEG_accessor_timed":{"bufferView":1,
 "updateRate":25.0, "immutable":1,"}
```

Furthermore, in the case of the example of Fig. 14, in the 13th line from the top, an MPEG buffer circular object (MPEG_buffer_circular) is set as the extension objects (extensions) of the buffer object (buffer) as described below. Then, parameters such as a buffer frame count (count), a header length (headerLength), and an update rate (updateRate) as the values of the MPEG buffer circular object and values thereof are designated.

```
"MPEG_buffer_circular":{"count":5,
 "headerLength":12, "updateRate":25.0}
```

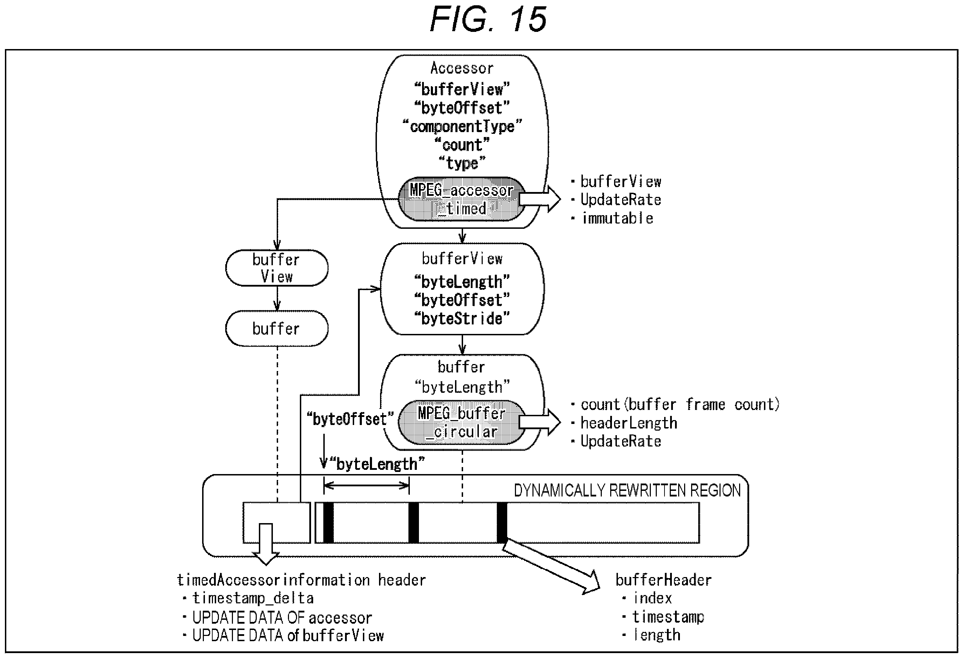

Fig. 15 is a diagram for describing extension for handling timed media. Fig. 15 illustrates an example of a relationship between an MPEG accessor timed object or an MPEG buffer circular object, and the accessor object, the buffer view object, and the buffer object.

As described above, the MPEG buffer circular object of the buffer object stores information necessary for storing data that changes with time in the buffer region indicated by the buffer object, such as a buffer frame count (count), a header length (headerLength), and an update rate (updateRate). In addition, parameters such as an index (index), a time stamp (timestamp), and a data length (length) are stored in the buffer header (bufferHeader) that is a header of the buffer region.

As described above, the MPEG accessor timed object of the accessor object stores information related to the buffer view object to be referred to, such as a buffer view object index (bufferView), an update rate (updateRate), and immutable information (immutable). Further, the MPEG accessor timed object stores information related to a buffer view object in which the timed accessor information header to be referred to is stored. The timed accessor information header can store a timestamp delta (timestamp_delta), update data for the accessor object, update data for the buffer view object, and the like.

### <Client process in a case where MPEG_texture_video is used>

The scene description is spatial arrangement information for disposing one or more 3D objects in a 3D space. The content of the scene description can be updated along the time axis. That is, the arrangement of the 3D objects can be updated with the lapse of time. A client process performed in the client device at this time will be described.

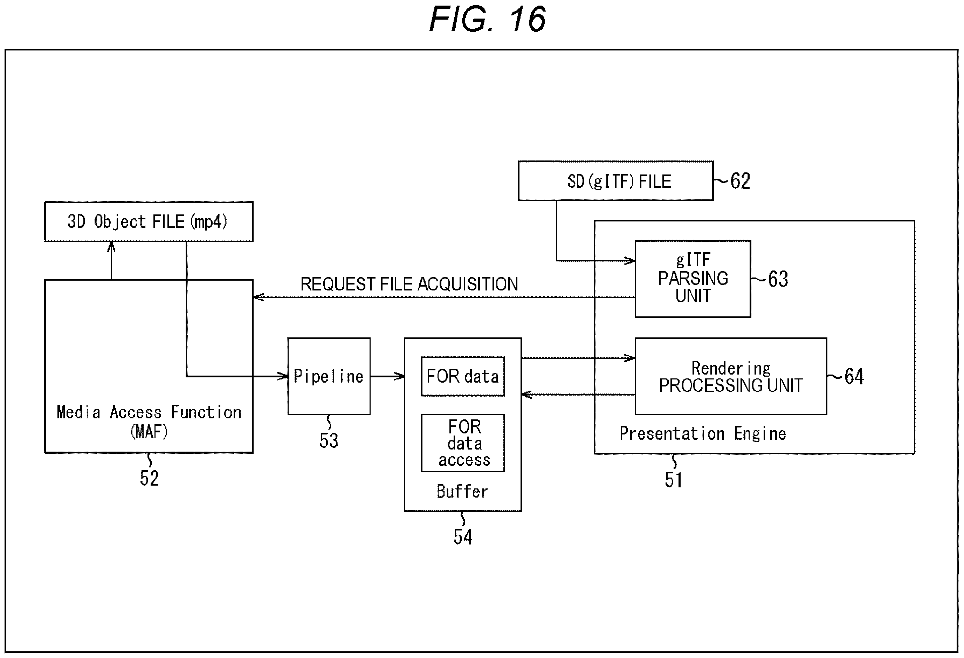

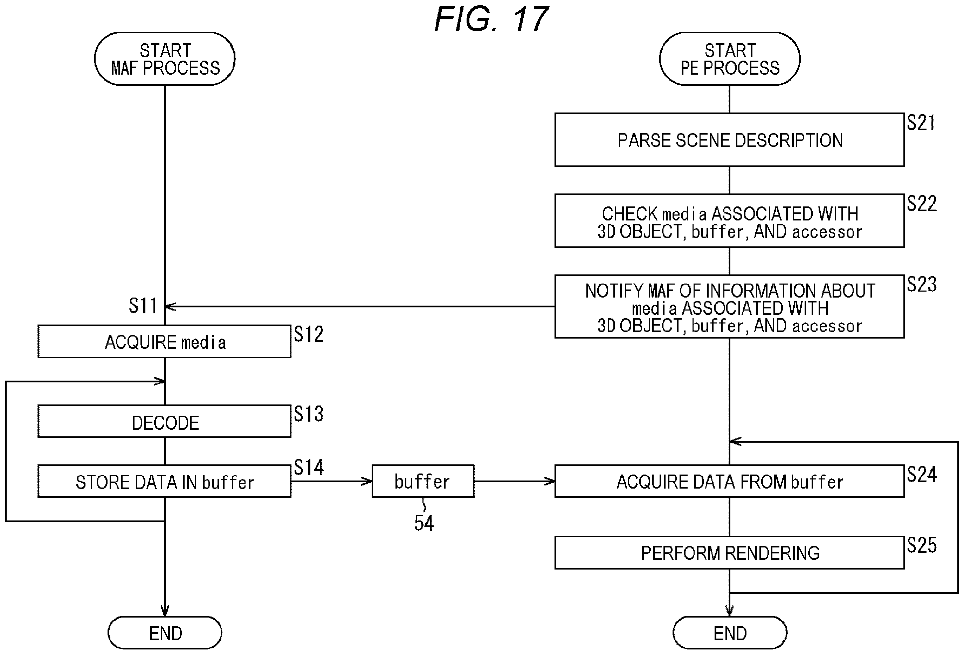

Fig. 16 is a main configuration example regarding the client process of the client device, and Fig. 17 is a flowchart illustrating an example of a flow of the client process. As illustrated in Fig. 16, the client device includes a presentation engine (Presentation Engine (hereinafter, also referred to as a PE)) 51, a media access function (Media Access Function (hereinafter, also referred to as an MAF)) 52, a pipeline (Pipeline) 53, and a buffer (Buffer) 54. The presentation engine (PE) 51 includes a glTF parsing unit 63 and a rendering (Rendering) processing unit 64.

The presentation engine (PE) 51 causes the media access function 52 to acquire media, acquires data thereof via the buffer 54, and performs a process related to display and the like. Specifically, for example, the process is performed in the following flow.

When the client process is started, the glTF parsing unit 63 of the presentation engine (PE) 51 starts the PE process as in the example of Fig. 17, and in step S21, acquires an SD (glTF) file 62 that is a scene description file and parses (parse) the scene description.

In step S22, the glTF parsing unit 63 checks media (media) associated with the 3D object (texture), a buffer (buffer) that stores the media after processing, and an accessor (accessor). In step S23, the glTF parsing unit 63 notifies the media access function 52 of the information as a file acquisition request.

The media access function (MAF) 52 starts the MAF process as in the example of Fig. 17, and acquires the notification in step 511. In step S12, the media access function 52 acquires the media (3D object file (mp4)) on the basis of the notification.

In step S13, the media access function 52 decodes the acquired media (3D object file (mp4)). In step S14, the media access function 52 stores the data of the media obtained by the decoding in the buffer 54 on the basis of the notification from the presentation engine (PE 51).

In step S24, the rendering processing unit 64 of the presentation engine 51 reads (acquires) the data from the buffer 54 at an appropriate timing. In step S25, the rendering processing unit 64 performs rendering using the acquired data and generates a display image.

The media access function 52 repeats the processing of steps S13 and S14 to execute the processing for each time (each frame). Furthermore, the rendering processing unit 64 of the presentation engine 51 repeats the processing of steps S24 and S25 to execute the processing for each time (each frame). When the process ends for all the frames, the media access function 52 ends the MAF process, and the presentation engine 51 ends the PE process. That is, the client process ends.

### <Outline of V-PCC>

Meanwhile, for example, as described in Non Patent Document 3, as a method of encoding a point cloud (point cloud) that is a set of points simultaneously having position information and attribute information (color, reflection, and the like) in a three-dimensional space, a video based point cloud compression (V-PCC) has been proposed in which the point cloud is segmented to form regions, planar projection is performed for each region, and encoding is performed by a video codec.

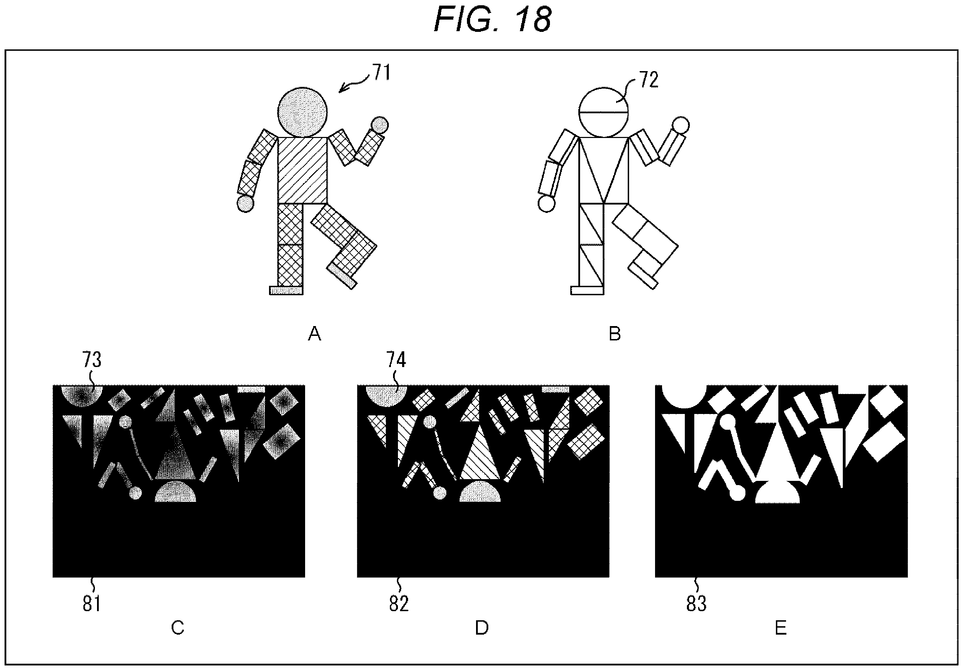

In the V-PCC, the geometry and the attribute of a point cloud are projected on a two-dimensional plane for each small region. In the present disclosure, this small region may be referred to as a partial region. An image in which the geometry and the attribute are projected on a two-dimensional plane is also referred to as a projection image. Furthermore, the projection image for each small region (partial region) is referred to as a patch (patch). For example, an object 1 (3D data) in A of Fig. 18 is decomposed into patches 72 (2D data) as illustrated in B of Fig. 18. In a case of a geometry patch, each pixel value indicates position information about a point. However, in this case, the position information about the point is expressed as position information (a depth value (Depth)) in a direction (a depth direction) perpendicular to a projection plane thereof.

Then, each patch generated in this way is disposed in a frame image (also referred to as a video frame) of a video sequence. The frame image in which the geometry patch is disposed is also referred to as a geometry video frame (Geometry video frame). Furthermore, the frame image in which the attribute patch is disposed is also referred to as an attribute video frame (Attribute video frame). For example, from an object 71 in A of Fig. 18, a geometry video frame 81 in which geometry patches 73 are disposed as illustrated in C of Fig. 18 and an attribute video frame 82 in which attribute patches 74 are disposed as illustrated in D of Fig. 18 are generated. For example, each pixel value of the geometry video frame 81 indicates the depth value described above.

Then, these video frames are encoded by an encoding method for a two-dimensional image, such as, for example, advanced video coding (AVC) or high efficiency video coding (HEVC). That is, point cloud data that is 3D data representing a three-dimensional structure can be encoded using a codec for a two-dimensional image.

Note that an occupancy map (also referred to as an occupancy image) can also be used. The occupancy map is map information indicating the presence or absence of the projection image (patch) for every N × N pixels of the geometry video frame or the attribute video frame. For example, the occupancy map indicates a region (N × N pixels) in which a patch is present by a value "1", and indicates a region (N × N pixels) in which no patch is present by a value "0" in the geometry video frame or the attribute video frame.

A decoder can grasp whether or not a patch is present in the region by referring to this occupancy map, so that an influence of noise or the like caused by encoding and decoding can be suppressed, and 3D data can be restored more precisely. For example, even when the depth value changes due to encoding and decoding, the decoder can ignore the depth value of the region where no patch exists by referring to the occupancy map. That is, the decoder can be prevented from performing the process as the position information about the 3D data by referring to the occupancy map.

For example, for a geometry video frame 11 and an attribute video frame 12, an occupancy map 83 as illustrated in E of Fig. 18 may be generated. In the occupancy map 83, a white portion indicates the value "1", and a black portion indicates the value "0".

Such an occupancy map may be encoded as data (a video frame) separate from the geometry video frame and the attribute video frame, and transmitted to the decoding side. That is, as in the geometry video frame and the attribute video frame, the occupancy map can also be encoded by the encoding method for a two-dimensional image such as AVC or HEVC.

Coded data (bit stream) generated by encoding the geometry video frame is also referred to as a geometry video sub-bit stream (geometry video sub-bitstream). Coded data (bit stream) generated by encoding the attribute video frame is also referred to as an attribute video sub-bit stream (attribute video sub-bitstream). Coded data (bit stream) generated by encoding the occupancy map is also referred to as an occupancy map video sub-bit stream (occupancy map video sub-bitstream). Note that the geometry video sub-bit stream, the attribute video sub-bit stream, and the occupancy map video sub-bit stream are referred to as a video sub-bit stream (video sub-bitstream) in a case where it is not necessary to distinguish from one another for description.

Moreover, atlas information (atlas) that is information for reconstructing a point cloud (3D data) from a patch (2D data), is encoded and transmitted to the decoding side. An encoding method (and a decoding method) of the atlas information is any method. Coded data (bit stream) generated by encoding the atlas information is also referred to as an atlas sub-bit stream (atlas sub-bitstream).

Note that, in the following description, it is assumed that (the object of) the point cloud can change in the time direction (also referred to as being dynamic) like a moving image of a two-dimensional image. That is, the geometry data and the attribute data have a concept of a time direction, and are data sampled at every predetermined time interval like a moving image of a two-dimensional image. Note that, like the video frame of a two-dimensional image, data at each sampling time is referred to as a frame. That is, the point cloud data (geometry data and attribute data) includes a plurality of frames like a moving image of a two-dimensional image. In the present disclosure, the frame of the point cloud is also referred to as a point cloud frame. In a case of the V-PCC, even such a point cloud of a moving image (a plurality of frames) can be encoded with high efficiency using a moving image encoding method by converting each point cloud frame into the video frame to form the video sequence.

### <Structure of V-PCC bit stream>

An encoder multiplexes the coded data of the geometry video frame, the attribute video frame, the occupancy map, and the atlas information as described above to generate one bit stream. This bit stream is also referred to as a V-PCC bit stream (V-PCC Bitstream).

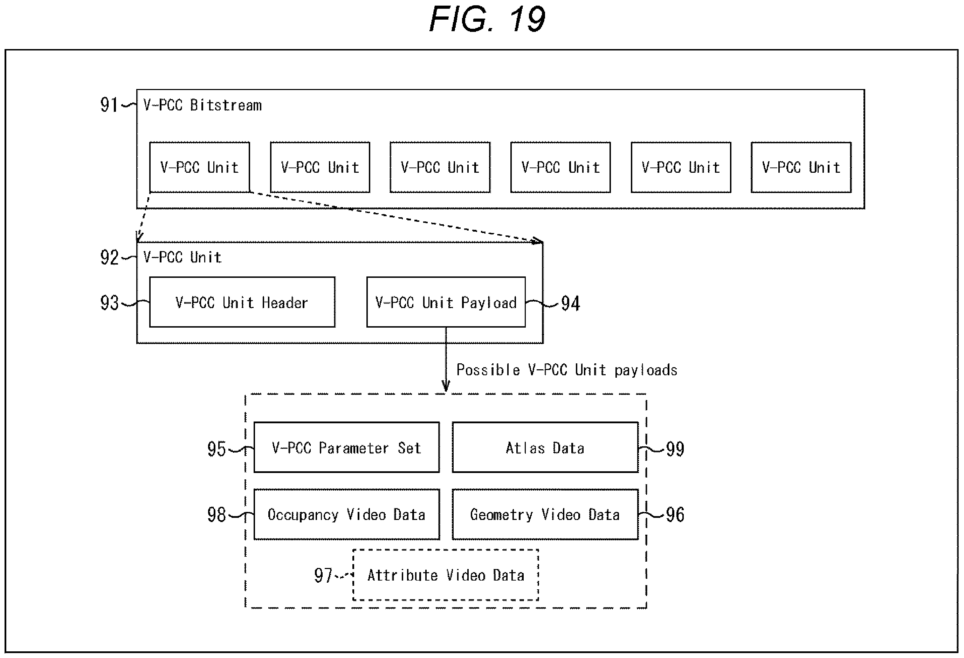

Fig. 19 is a diagram illustrating a main configuration example of a V-PCC bit stream. As illustrated in Fig. 19, a V-PCC bit stream 91 includes a plurality of V-PCC units (V-PCC Unit) 92.

The V-PCC unit 92 includes a V-PCC unit header (V-PCC unit header) 93 and a V-PCC unit payload (V-PCC unit payload) 94. The V-PCC unit header 93 includes information indicating a type of information to be stored in the V-PCC unit payload 94. The V-PCC unit payload 94 may store, depending on a type signaled in its V-PCC unit header 93, a V-PCC parameter set (V-PCC Parameter Set) 95, a geometry video sub-bit stream 96 (Geometry Video Data), an attribute video sub-bit stream 97 (Attribute Video Data), an occupancy map video sub-bit stream 98 (Occupancy Video Data), an atlas sub-bit stream 99 (Atlas Data), and the like. The V-PCC parameter set (V-PCC Parameter Set) 95 stores parameters related to the V-PCC unit 92.

### <Storage method in ISOBMFF>

Furthermore, for example, as described in Non Patent Document 4, a method of storing a V-PCC bit stream (also referred to as a V3C bit stream) configured by coded data of a point cloud encoded by the V-PCC in the ISOBMFF has been studied. Non Patent Document 4 specifies two types of methods of storing the V3C bit stream in the ISOBMFF, that is, a single track structure (single track structure) and a multi-track structure (multi-track structure).

The single track structure is a method of storing a V3C bit stream into one track. That is, in this case, a geometry video sub-bit stream, an attribute video sub-bit stream, an occupancy map video sub-bit stream, and an atlas sub-bit stream are stored in mutually the same track.

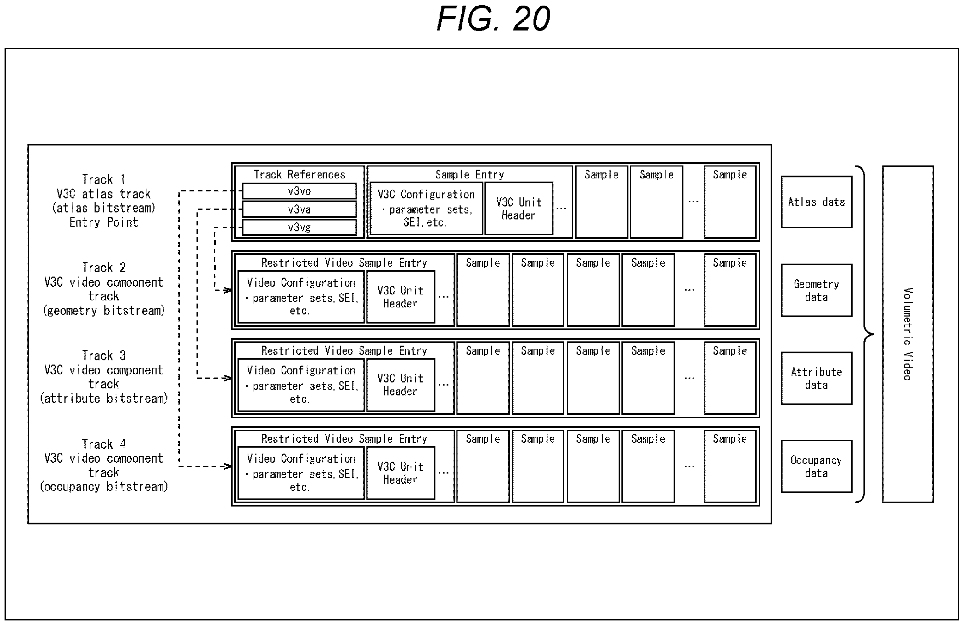

The multi-track structure is a method of storing the geometry video sub-bit stream, the attribute video sub-bit stream, the occupancy video sub-bit stream, and the atlas sub-bit stream in separate tracks (track) respectively. Since each video sub-bit stream is a conventional 2D video stream, the video sub-bit stream can be stored (managed) in a similar manner to that of a case of 2D. Fig. 20 illustrates a configuration example of a file in a case where the multi-track structure is applied. As illustrated in Fig. 20, in the case of the multi-track structure, one track (V3C atlas track (V3C atlas track)) stores track reference (Track References) that are information for accessing another track (also referred to as a V3C video component track (V3C video component track)) storing the V3C bit stream. That is, each V3C video component track is associated with the V3C atlas track by this track reference.

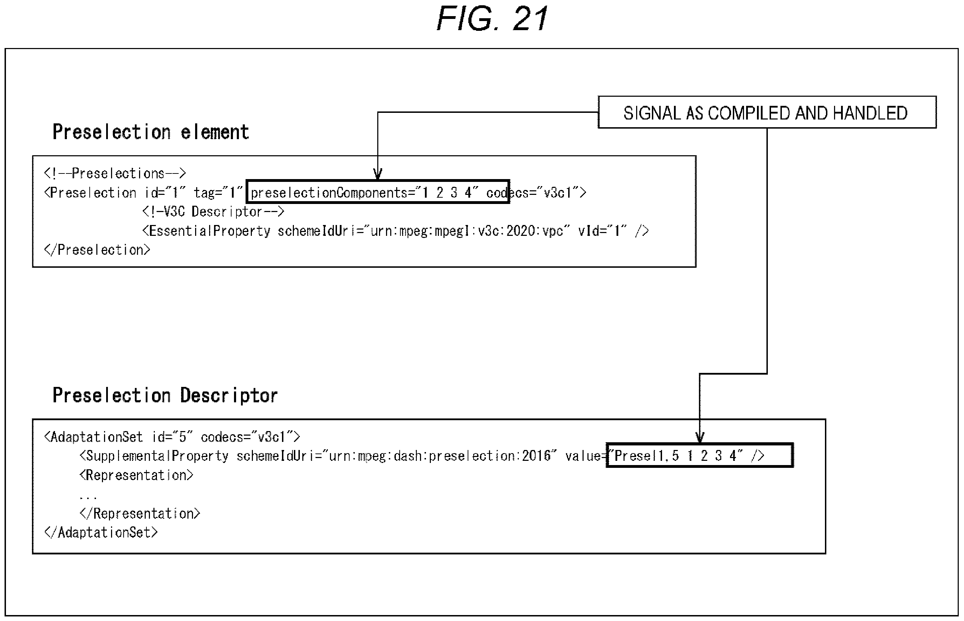

Note that, in a case where moving picture experts group dynamic adaptive streaming over hypertext transfer protocol (HTTP) (MPEG-DASH) is applied to distribute 3D object content, a preselection element or a preselection descriptor may be stored in media presentation description (MPD) that is a control file for controlling the distribution, as information for compiling AdaptationSet constituting the V-PCC. Fig. 21 illustrates a description example thereof. That is, in this case, the respective bit streams constituting the V3C bit stream are associated with each other by these pieces of information about the MPD.

### <Pattern of client process>

A client device that plays back content (3D data) decodes a V3C bit stream, and reconstructs 3D data (for example, a point cloud) from the obtained 2D data. In this case, the client device can reconstruct the 3D data by a media access function (MAF) or a presentation engine (PE). In each case, data stored in the buffer is different.

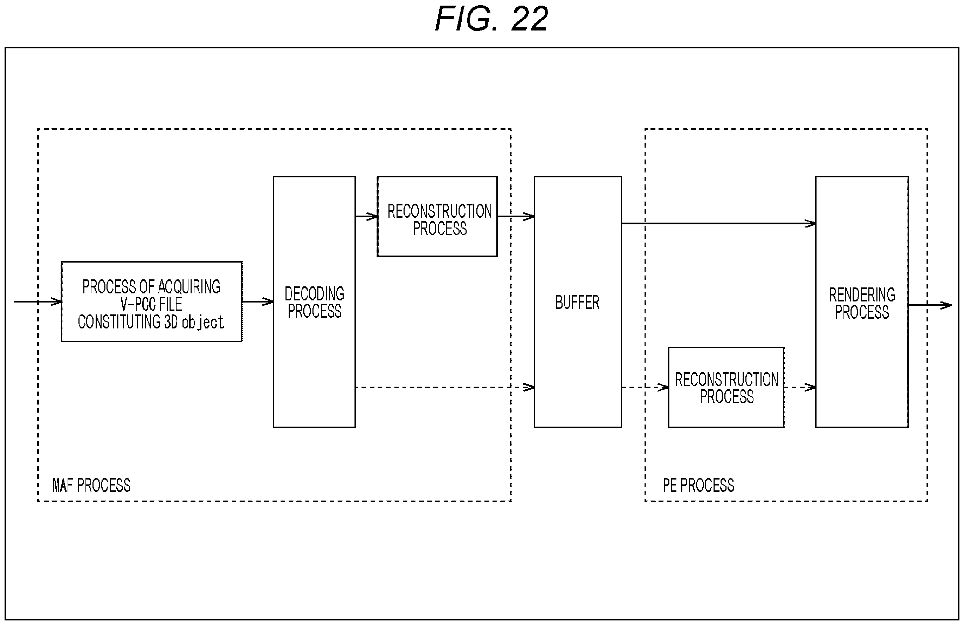

For example, as illustrated in Fig. 22, in the MAF process executed by the MAF, the acquisition process of the V-PCC file constituting the 3D object and the decoding process of the V-PCC file (V3C bit stream) are performed. In a case where the 3D data is reconstructed by the MAF, the reconstruction process is performed as indicated by the solid arrow on the upper side of Fig. 22 after the decoding process, and the processing result, that is, the 3D data is stored in the buffer. In this case, in the PE process executed by the PE, the 3D data stored in the buffer is read, and the rendering process is performed to generate the display image.

On the other hand, in a case where the 3D data is reconstructed by the PE, in the MAF process, the decoding processing result, that is, the 2D data or the like is stored in the buffer as indicated by a dotted arrow on the lower side of Fig. 22. In this case, in the PE process, the 2D data and the like stored in the buffer are read, the 3D data is reconstructed by the reconstruction process, and the rendering process is performed to generate the display image.

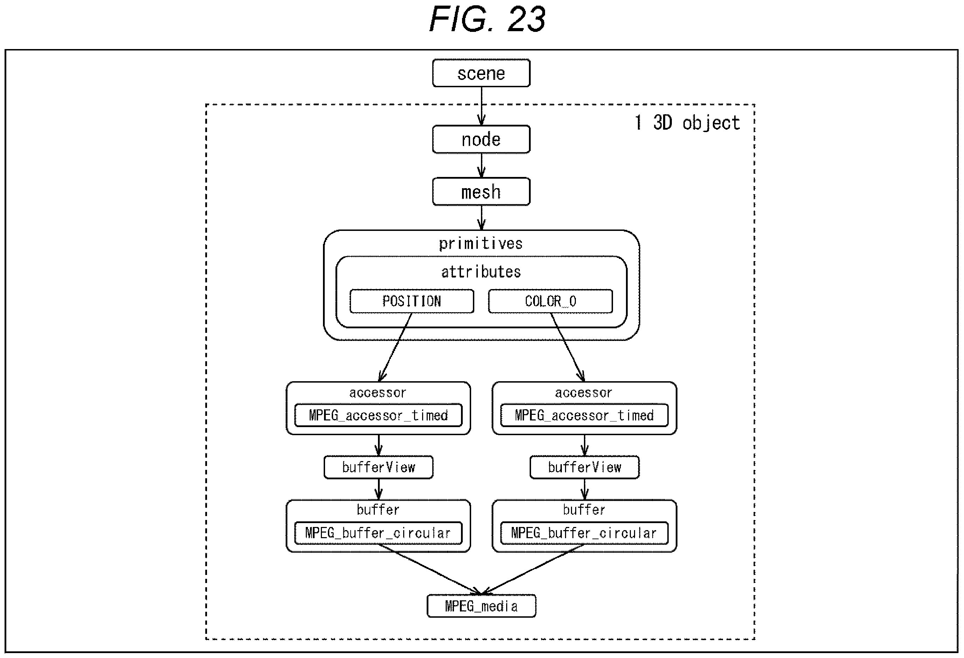

Therefore, in a case where the 3D data (point cloud data) is reconstructed by the MAF, an attribute (attribute) for the 3D data is stored in the scene description as illustrated in Fig. 23. However, the data stored in the buffer is reconstructed. On the other hand, data designated by MPEG_media is data before being reconstructed. That is, the attribute is not associated with the track on a one-to-one basis. Therefore, MPEG_media referred to from each buffer is a V3C atlas track (V3C atlas track) that compiles all the component data.

On the other hand, in a case where the 3D data (point cloud data) is reconstructed by the PE, the V3C component stream (V3C component stream) that is the V3C decoded is stored in the buffer. That is, 2D data and the like are stored in the buffer. Therefore, an attribute (attribute) for the V3C component (2D data) is stored in the scene description.

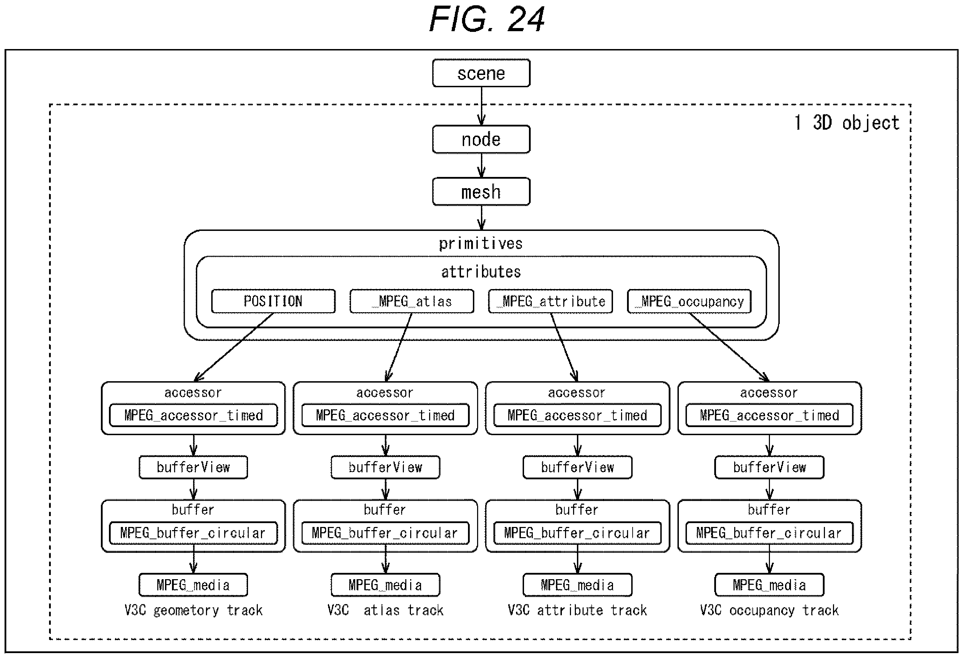

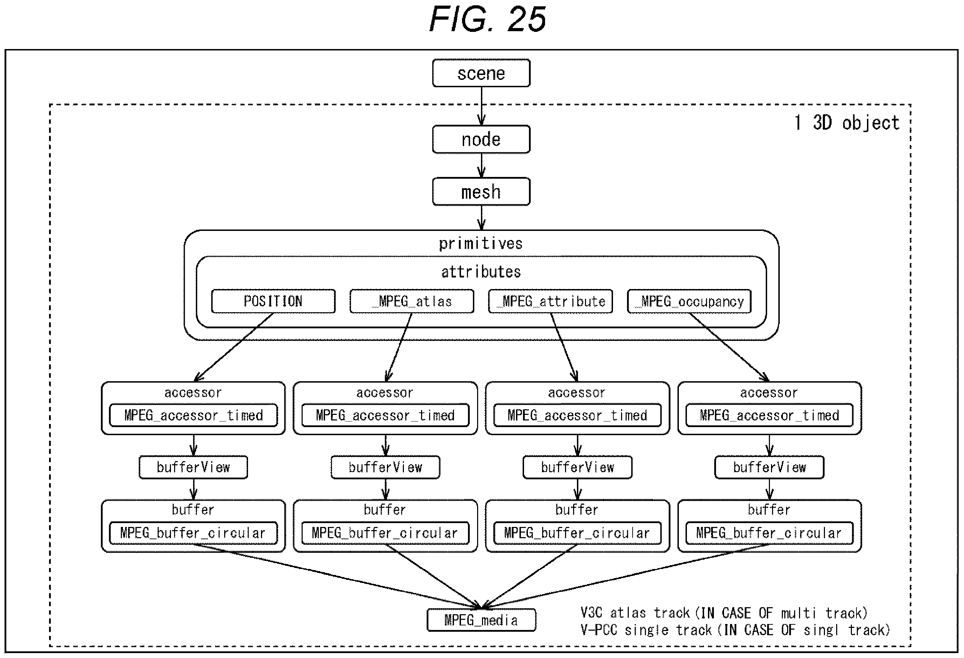

In this case, there are the following two methods of associating the V3C component data stored in the buffer with the track indicated by MPEG_media. That is, for example, as illustrated in Fig. 24, the buffer and the V3C component track may be associated on a one-to-one basis. In addition, as illustrated in Fig. 25, the V3C atlas track (V3C atlas track) that compiles all the component data may be referred to from each buffer.

### <Application of scene description>

As described above, the playback method in which the 3D data is reconstructed by the MAF and the playback method in which the 3D data is reconstructed by the PE are different from each other in the configuration of the scene description. Therefore, one scene description cannot be used in both playback methods. Therefore, in order to make one content support both playback methods, it is necessary to prepare a scene description file for each playback method for one content.

Therefore, for example, in the device that generates a scene description file, the scene description file is generated for each playback method, and there is a possibility that a load related to generation of the scene description file increases. Furthermore, in this case, in each scene description file, only the corresponding playback methods are different, and the 3D objects to be disposed are the same. Therefore, it can be said that generating the scene description file for each playback method is a redundant process.

In addition, in the device that manages the generated content file or the scene description file, the management is complicated, and there is a possibility that a load related to the management increases. In addition, in the device that plays back the 3D content using the scene description file, there is a possibility that a load related to selection, acquisition, and the like of the scene description file used for the playback increases. For example, only to acquire the scene description file, there has been a possibility that processing unnecessary for playback and exchange of unnecessary information, such as confirmation of a playback method, are required.

### <3. Scene description corresponding to a plurality of playback methods>

### <Identification using extension (#1)>

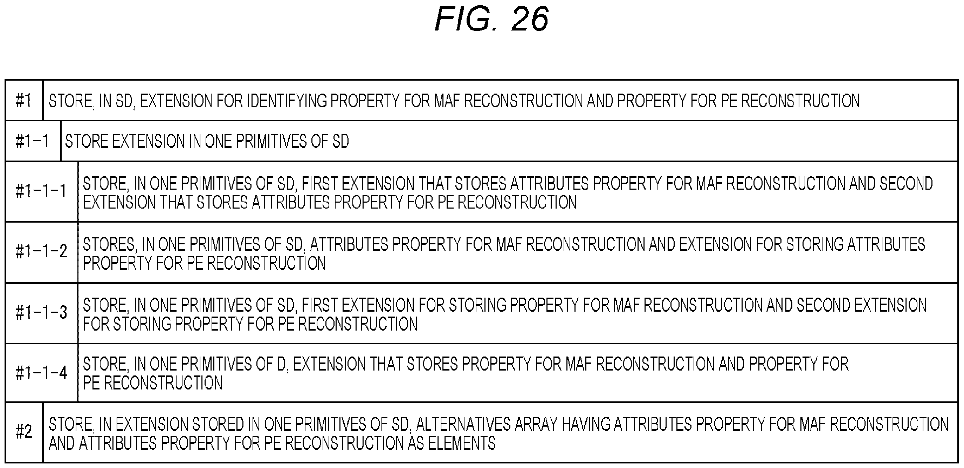

Therefore, as illustrated in the top row of the table illustrated in Fig. 26, an extension (extension) for identifying a property for a playback method in which the 3D data is reconstructed by the MAF (also referred to as a property for MAF reconstruction) and a property for a playback method in which the 3D data is reconstructed by the PE (also referred to as a property for PE reconstruction) may be stored in the scene description (hereinafter, also referred to as an SD) (#1). Then, the property for MAF reconstruction and the property for PE reconstruction may be identified on the basis of the extension, and the property corresponding to the playback method may be selected.

For example, the information processing device (for example, the client device) includes a file processing unit that selects a property corresponding to a method of playing back the 3D data on the basis of an extension specified in a scene description, and processes the 3D data by the playback method using the selected property.

For example, the information processing method includes selecting a property corresponding to a method of playing back the 3D data on the basis of the extension specified in the scene description, and processing the 3D data by the playback method using the selected property.

For example, the information processing device (for example, the file generation device) includes a file generation unit that generates a scene description file that stores an extension for identifying a property for each method of playing back the 3D data.

For example, the information processing method includes generating a scene description file storing an extension for identifying a property for each method of playing back the 3D data.

By combining scene descriptions corresponding to respective playback methods into one, the scene description including information related to a plurality of playback methods is formed. However, it is difficult to identify which part of the scene description corresponds to which playback method only by simply combining a plurality of scene description files into one (for example, connecting them in series). That is, it is difficult to realize a scene description file corresponding to a plurality of playback methods.

On the other hand, by using the extension as described above, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

For example, in the device that generates a scene description file, it is not necessary to generate a scene description file for each playback method of one content, so that it is possible to suppress an increase in load related to generation of a scene description file, such as suppressing an increase in redundant processing.

In addition, in the device that manages the generated content file or scene description file, it is possible to suppress an increase in load related to management of the scene description file, such as facilitating management of the scene description file.

Furthermore, in the device that plays back the 3D content using the scene description file, it is possible to suppress an increase in processing unnecessary for playback and exchange of unnecessary information, such as confirmation of a playback method and selection of the scene description file. Therefore, it is possible to suppress an increase in load related to use of the scene description file.

### <Extension in primitives>

Note that an arrangement place of the extension is any place. For example, in the case of (#1), as illustrated in the second row from the top of the table illustrated in Fig. 26, this extension may be stored in one primitives (primitives) of the scene description (#1-1).

### <Extension for each playback method>

In the case of (#1-1), for example, as illustrated in the third row from the top of the table illustrated in Fig. 26, a first extension that stores attributes property (attributes property) (also referred to as an attributes property for MAF reconstruction) for a playback method in which the 3D data is reconstructed by the MAF and a second extension that stores attributes property (also referred to as an attributes property for PE reconstruction) for a playback method in which the 3D data is reconstructed by the PE may be stored in one primitives of the scene description (#1-1-1).

For example, a first extension and a second extension may be specified in one primitives of a scene description, one or a plurality of first attributes properties corresponding to a first method of playing back the 3D data may be stored in the first extension, and one or a plurality of second attributes properties corresponding to a second method of playing back the 3D data may be stored in the second extension. Then, in the information processing device (for example, the client device), the file processing unit may select one or a plurality of first attributes properties stored in the first extension or one or a plurality of second attributes properties stored in the second extension according to the method of playing back the 3D data.

For example, in the information processing device (for example, the file generation device), the file generation unit may specify the first extension and the second extension in one primitives of the scene description file. Then, the file generation unit may store one or a plurality of first attributes properties corresponding to the first method of playing back the 3D data in the first extension. Then, the file generation unit may store one or a plurality of second attributes properties corresponding to the second method of playing back the 3D data in the second extension.

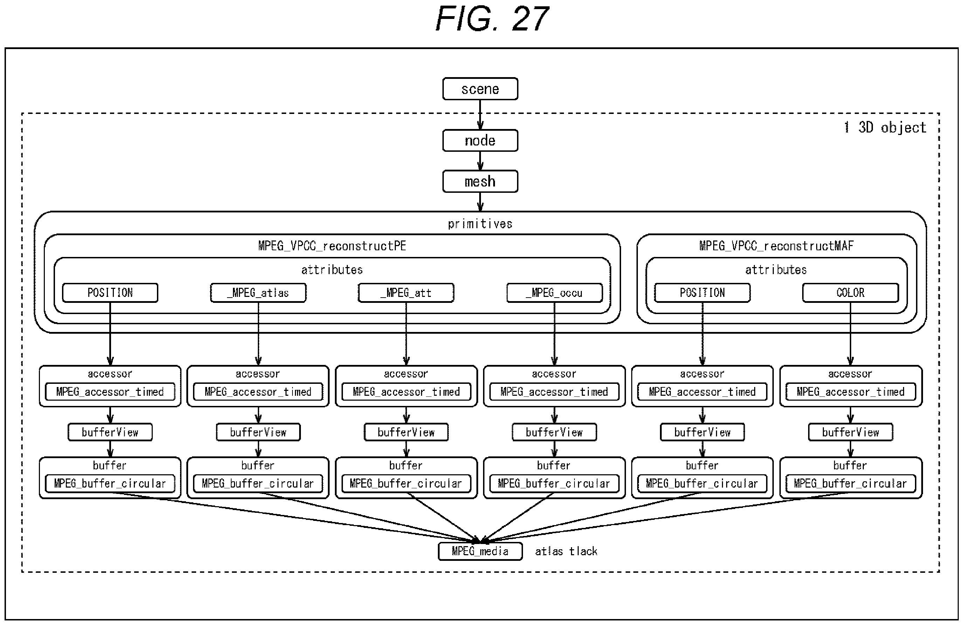

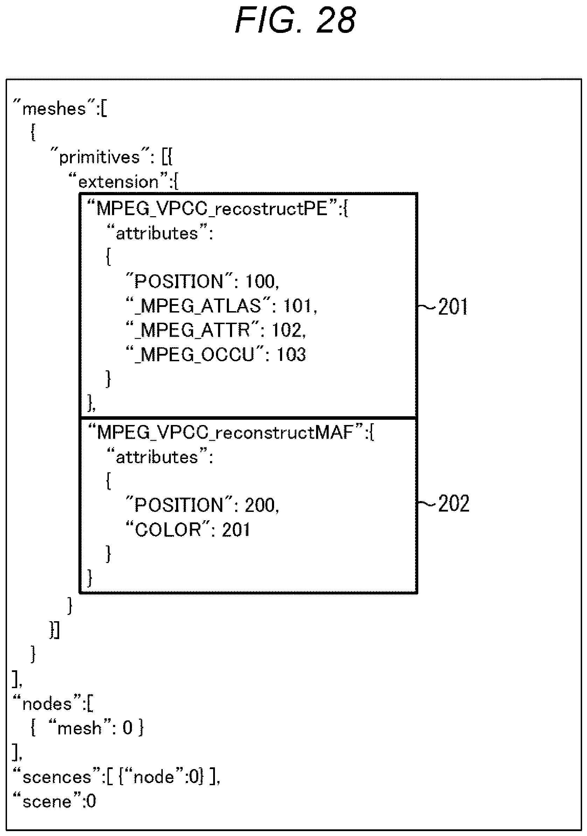

Fig. 27 illustrates a main configuration example of the object in the scene description in this case. Further, a description example thereof is illustrated in Fig. 28. As illustrated in Figs. 27 and 28, in the case of this example, an extension (MPEG_VPCC_reconstructMAF) is specified in the primitives (primitives), and the attributes properties for MAF reconstruction (POSITION, COLOR, etc.) are stored in the extension (in a square frame 202 in Fig. 28). In a case where the 3D data is reconstructed by the MAF, the file processing unit of the information processing device (for example, the client device) can supply the reconstructed data from the MAF to the PE via the buffer by using the accessors associated with these attributes properties for MAF reconstruction.

Further, an extension (MPEG_VPCC_reconstructPE) is specified in the primitives (primitives), and the attributes properties for PE reconstruction (POSITION, _MPEG_ATLAS, _MPEG_ATTR, _MPEG_OCCU, and the like) are stored in the extension (in a square frame 201 in Fig. 28). In a case where the 3D data is reconstructed by the PE, the file processing unit of the information processing device (for example, the client device) can supply the data before reconstruction from the MAF to the PE via the buffer by using the accessors associated with these attributes properties for PE reconstruction.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the attributes property for MAF reconstruction or the extension that stores the attributes property for PE reconstruction on the basis of the extension name. Therefore, the file processing unit can correctly select the extension in which the desired attributes property is stored and use the desired attributes property.

### <Presence or absence of extension>

In the case of (#1-1), for example, as illustrated in the fourth row from the top of the table illustrated in Fig. 26, the attributes property for MAF reconstruction and the extension for storing the attributes property for PE reconstruction may be stored in one primitives of the scene description (#1-1-2).

For example, an extension may be specified in one primitives of the scene description. Then, one or a plurality of first attributes properties corresponding to the first method of playing back the 3D data may be stored in the primitives. Also, one or a plurality of second attributes properties corresponding to the second method of playing back the 3D data may be stored in the extension. Then, in the information processing device (for example, the client device), the file processing unit may select one or a plurality of first attributes properties stored in the primitives or one or a plurality of second attributes properties stored in the extension according to the method of playing back the 3D data.

For example, in the information processing device (for example, the file generation device), the file generation unit may specify an extension in one primitives of the scene description file. Then, the file generation unit may store one or a plurality of first attributes properties corresponding to the first method of playing back the 3D data in the primitives. Then, the file generation unit may store one or a plurality of second attributes properties corresponding to the second method of playing back the 3D data in the extension.

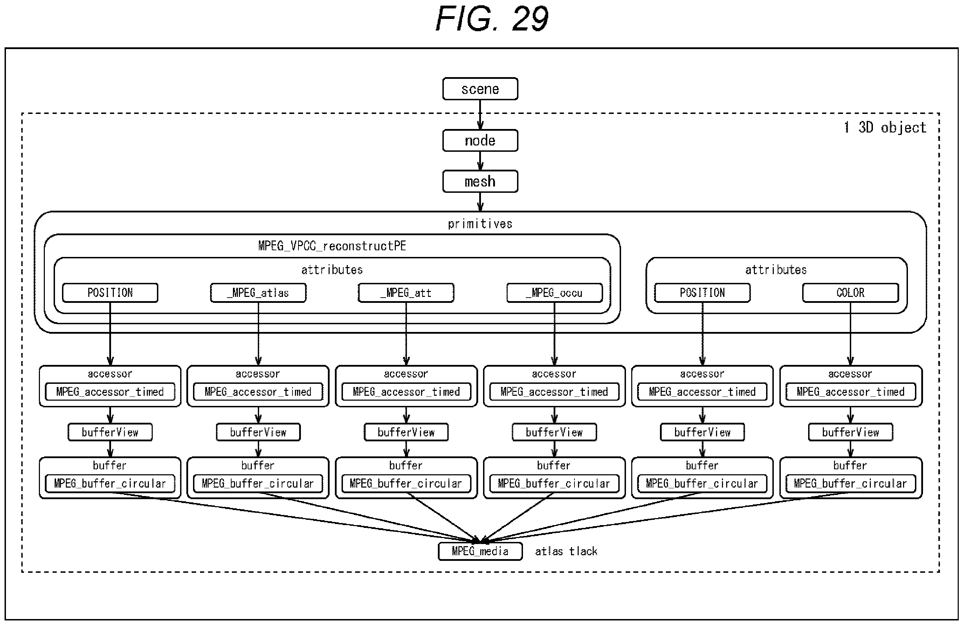

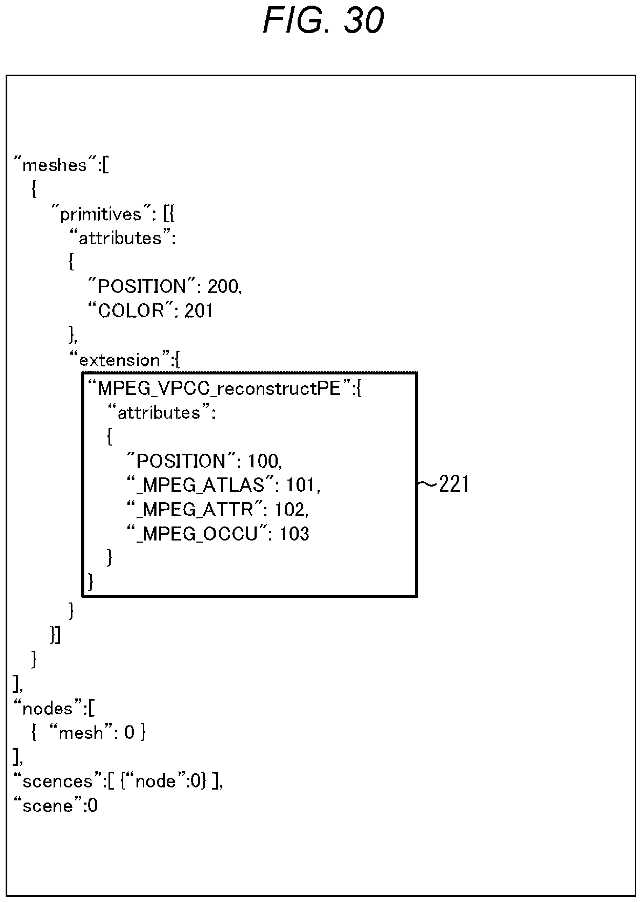

Fig. 29 illustrates a main configuration example of the object in the scene description in this case. Further, a description example thereof is illustrated in Fig. 30. As illustrated in Figs. 29 and 30, in the case of this example, an extension (MPEG_VPCC_reconstructPE) is specified in the primitives (primitives), and the attributes properties for PE reconstruction (POSITION, _MPEG_ATLAS, _MPEG_ATTR, _MPEG_OCCU, and the like) are stored in the extension (in the square frame 221 in Fig. 30). In a case where the 3D data is reconstructed by the PE, the file processing unit of the information processing device (for example, the client device) can supply the data before reconstruction from the MAF to the PE via the buffer by using the accessors associated with these attributes properties for PE reconstruction.

In addition, the attributes properties for MAF reconstruction (POSITION, COLOR, etc.) are stored in the primitives (primitives). In a case where the 3D data is reconstructed by the MAF, the file processing unit of the information processing device (for example, the client device) can supply the reconstructed data from the MAF to the PE via the buffer by using the accessors associated with these attributes properties for MAF reconstruction.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the attributes property is the attributes property for MAF reconstruction or the attributes property for PE reconstruction on the basis of whether or not the attributes property is stored in the extension. Therefore, the file processing unit can correctly select and use a desired attributes property.

### <Property specification>

Note that a property for each attribute of the V-PCC may be newly specified and used without using the attributes property. For example, in the case of (#1-1), as illustrated in the fifth row from the top of the table illustrated in Fig. 26, a first extension that stores a property (property) (also referred to as a property for MAF reconstruction) for a playback method in which the 3D data is reconstructed by the MAF and a second extension that stores a property (property) (also referred to as a property for PE reconstruction) for a playback method in which the 3D data is reconstructed by the PE may be stored in one primitives of the scene description (#1-1-3) .

For example, the first extension and the second extension may be specified in one primitives of the scene description. Then, one or a plurality of first properties corresponding to the first method of playing back the 3D data may be stored in the first extension. Also, one or a plurality of second properties corresponding to the second method of playing back the 3D data may be stored in the second extension. Then, in the information processing device (for example, the client device), the file processing unit may select one or a plurality of first properties stored in the first extension or one or a plurality of second properties stored in the second extension according to the method of playing back the 3D data.

For example, in the information processing device (for example, the file generation device), the file generation unit may specify the first extension and the second extension in one primitives of the scene description file. Then, the file generation unit may store one or a plurality of first properties corresponding to the first method of playing back the 3D data in the first extension. Then, the file generation unit may store one or a plurality of second properties corresponding to the second method of playing back the 3D data in the second extension.

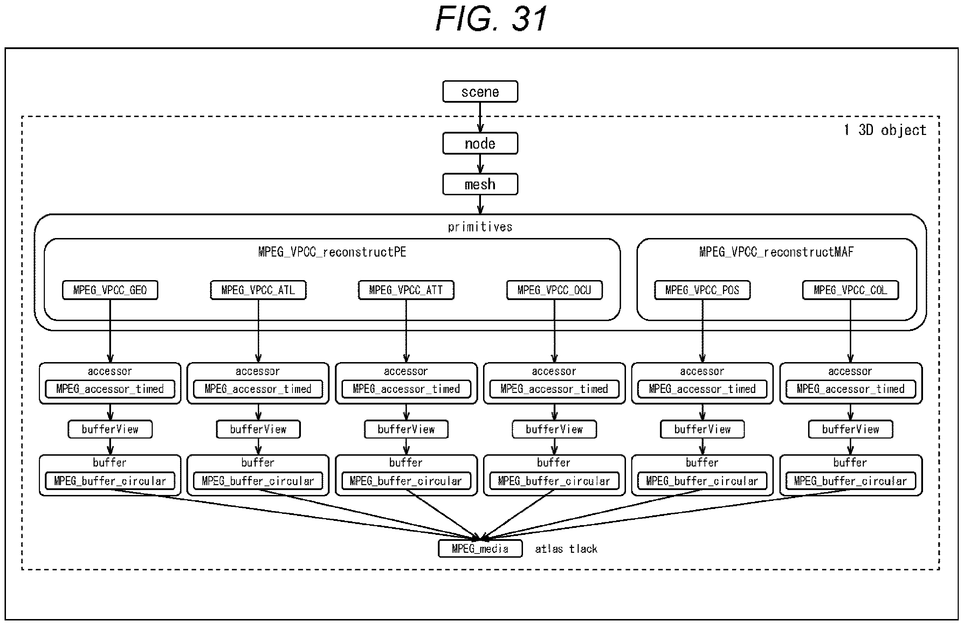

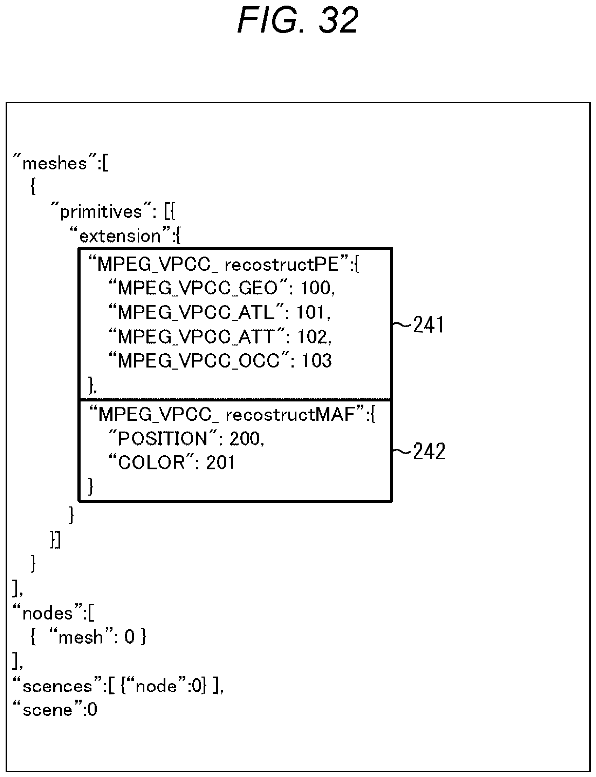

Fig. 31 illustrates a main configuration example of the object in the scene description in this case. Further, a description example thereof is illustrated in Fig. 32. As illustrated in Figs. 31 and 32, in this example, an extension (MPEG_VPCC_reconstructPE) is specified in the primitives (primitives), and newly specified properties for PE reconstruction (MPEG_VPCC_GEO, MPEG_VPCC_ATL, MPEG_VPCC_ATT, _MPEG_VPCC_OCU, and the like) are stored in the extension (in a square frame 241 in Fig. 32). In a case where the 3D data is reconstructed by the PE, the file processing unit of the information processing device (for example, the client device) can supply the data before reconstruction from the MAF to the PE via the buffer by using the accessors associated with these properties for PE reconstruction.

Further, an extension (MPEG_VPCC_reconstructMAF) is specified in the primitives (primitives), and newly specified properties for MAF reconstruction (MPEG_VPCC_POS, MPEG_VPCC_COL, and the like) are stored in the extension (in a square frame 242 in Fig. 32). In a case where the 3D data is reconstructed by the MAF, the file processing unit of the information processing device (for example, the client device) can supply the reconstructed data from the MAF to the PE via the buffer by using the accessors associated with these properties for MAF reconstruction.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the property for MAF reconstruction or the extension that stores the property for PE reconstruction on the basis of the extension name. Therefore, the file processing unit can correctly select the extension in which the desired property is stored and use the desired property.

The method of newly specifying and using the property for each attribute of the V-PCC without using the attributes property may be applied to the case where the presence or absence of the extension is the identification information described with reference to Figs. 29 and 30.

For example, in the case of (#1-1), as illustrated in the sixth row from the top of the table illustrated in Fig. 26, the property for MAF reconstruction and the extension for storing the property for PE reconstruction may be stored in one primitives of the scene description (#1-1-4) .

For example, an extension may be specified in one primitives of the scene description. Then, one or a plurality of first properties corresponding to the first method of playing back the 3D data may be stored in the primitives. Also, one or a plurality of second properties corresponding to the second method of playing back the 3D data may be stored in the extension. Then, in the information processing device (for example, the client device), the file processing unit may select one or a plurality of first properties stored in the primitives or one or a plurality of second properties stored in the extension according to the method of playing back the 3D data.

For example, in the information processing device (for example, the file generation device), the file generation unit may specify an extension in one primitives of the scene description file. Then, the file generation unit may store one or a plurality of first properties corresponding to the first method of playing back the 3D data in the primitives. Then, the file generation unit may store one or a plurality of second properties corresponding to the second method of playing back the 3D data in the extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the property is the property for MAF reconstruction or the property for PE reconstruction on the basis of whether or not the property is stored in the extension. Therefore, the file processing unit can correctly select and use a desired property.

### <Identification using alternatives array (#2)>

Although the example of identifying the property for each playback method using the extension is described above, the method of identifying the property for each playback method is any method and is not limited to this example. For example, the property for each playback method may be identified using the alternatives (alternatives) array to indicate that elements of the array are used alternatively.

For example, as illustrated in the lowermost row of the table illustrated in Fig. 26, a first alternatives array having the attributes property for MAF reconstruction as an element and a second alternatives array having the attributes property for PE reconstruction as an element may be stored in the extension stored in one primitives of the scene description (#2). Then, the attributes property for MAF reconstruction and the attributes property for PE reconstruction may be identified on the basis of these alternatives arrays, and a property corresponding to the playback method may be selected.

For example, the information processing device (for example, the client device) includes a file processing unit that selects an alternatives array corresponding to a method of playing back the 3D data from among alternatives arrays specified in the scene description, and processes 3D data by the playback method using a property that is an element of the selected alternatives array.

For example, the information processing method includes selecting an alternatives array corresponding to the method of playing back the 3D data from among the alternatives arrays specified in the scene description, and processing the 3D data by the playback method using a property that is an element of the selected alternatives array.

For example, the information processing device (for example, the file generation device) includes a file generation unit that generates a scene description file that stores a plurality of alternatives arrays having properties corresponding to the mutually same method of playing back the 3D data as elements.

For example, the information processing method includes generating a scene description file storing a plurality of alternatives arrays having properties corresponding to the mutually same method of playing back the 3D data as elements.

As described above, by using the alternatives array, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

For example, in the device that generates a scene description file, it is not necessary to generate a scene description file for each playback method of one content, so that it is possible to suppress an increase in load related to generation of a scene description file, such as suppressing an increase in redundant processing.

In addition, in the device that manages the generated content file or scene description file, it is possible to suppress an increase in load related to management of the scene description file, such as facilitating management of the scene description file.

Furthermore, in the device that plays back the 3D content using the scene description file, it is possible to suppress an increase in processing unnecessary for playback and exchange of unnecessary information, such as confirmation of a playback method and selection of the scene description file. Therefore, it is possible to suppress an increase in load related to use of the scene description file.

Also in this case, the arrangement place of (the extension for storing) the alternatives array is any arrangement place. For example, (the extension that stores) this alternatives array may be stored in one primitives (primitives) of the scene description.

For example, an extension may be specified in one primitives of the scene description. A first alternatives array and a second alternatives array may then be specified within the extension. Then, the first alternatives array may have each of the one or a plurality of first properties corresponding to the first method of playing back the 3D data as an element. Also, the second alternatives array may have each of the one or a plurality of second properties corresponding to the second method of playing back the 3D data as an element. Then, in the information processing device (for example, the client device), in a case where the first playback method is applied, the file processing unit may select the first alternatives array and process the 3D data by the first playback method using one or a plurality of first properties. Furthermore, in a case where the second playback method is applied, the file processing unit may select the second alternatives array and process the 3D data by the second playback method using one or a plurality of second properties.

For example, in the information processing device (for example, the file generation device), the file generation unit may specify an extension in one primitives of the scene description file. Then, the file generation unit may store, in the extension, a first alternatives array having each of one or a plurality of first properties corresponding to the first method of playing back the 3D data as an element. Furthermore, the file generation unit may further store, in the extension, a second alternatives array having each of one or a plurality of second properties corresponding to the second method of playing back the 3D data as an element.

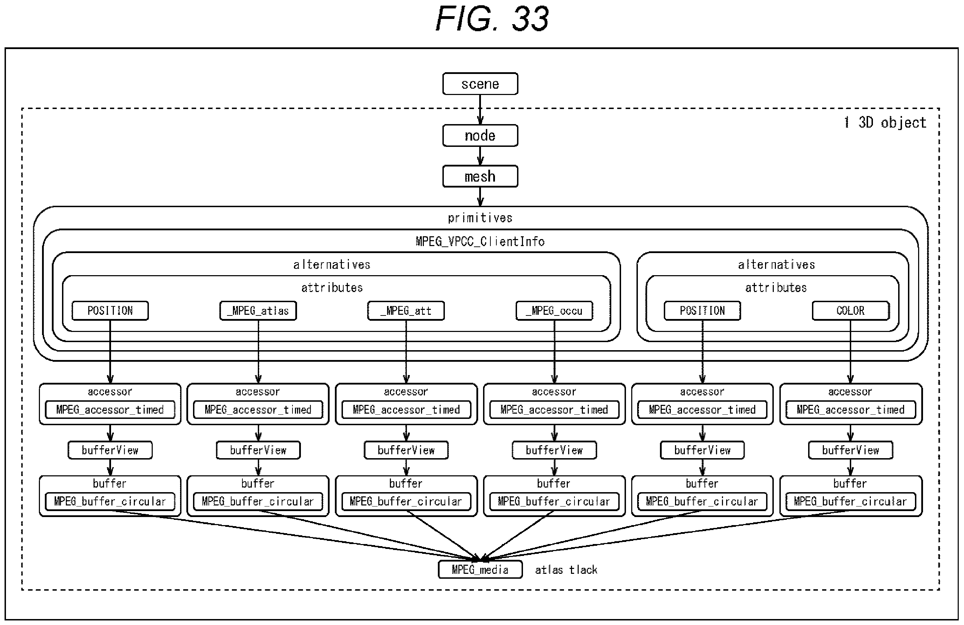

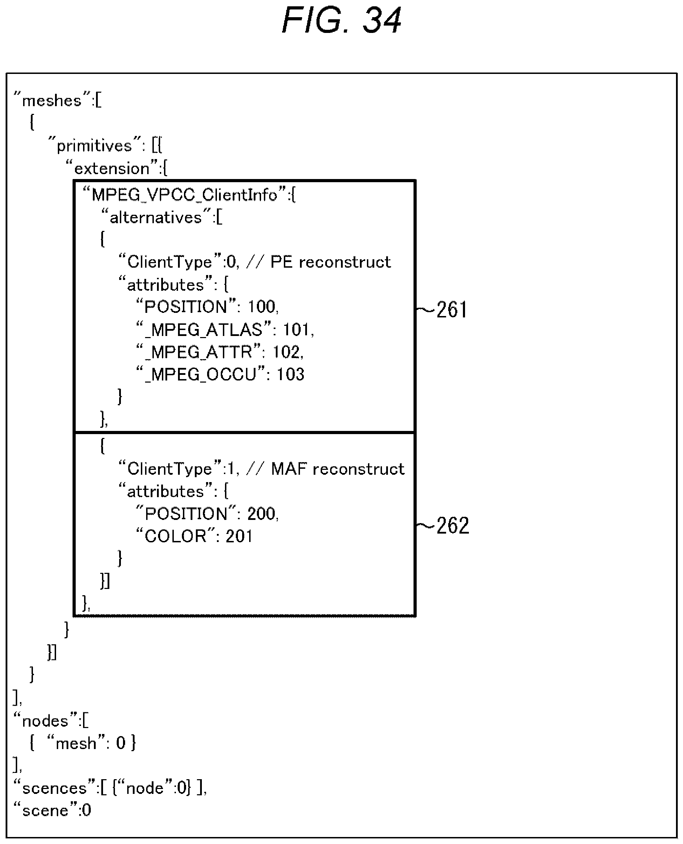

Fig. 33 illustrates a main configuration example of the object in the scene description in this case. Further, a description example thereof is illustrated in Fig. 34. As illustrated in Figs. 33 and 34, in this example, an extension (MPEG_VPCC_ClientInfo) is specified in the primitives (primitives), and the alternatives array having the attributes properties for PE reconstruction (POSITION, _MPEG_ATLAS, _MPEG_ATTR, _MPEG_OCCU, and the like) as elements is stored in the extension (in a square frame 261 in Fig. 34). Also, the alternatives array having the attributes properties for MAF reconstruction (POSITION, COLOR, etc.) as elements is also stored in the extension (in the square frame 262 in Fig. 34). The alternatives array is an array that indicates that elements of the array are used alternatively. That is, the attributes property for each playback method is selected by selecting an alternatives array to be applied.

Note that, as illustrated in Fig. 34, a client type (ClientType) is specified in an element of each alternatives array, and this parameter indicates that an attributes corresponding to which playback method (reconstruction method) is stored.

### <Extension (#3) in mesh object>

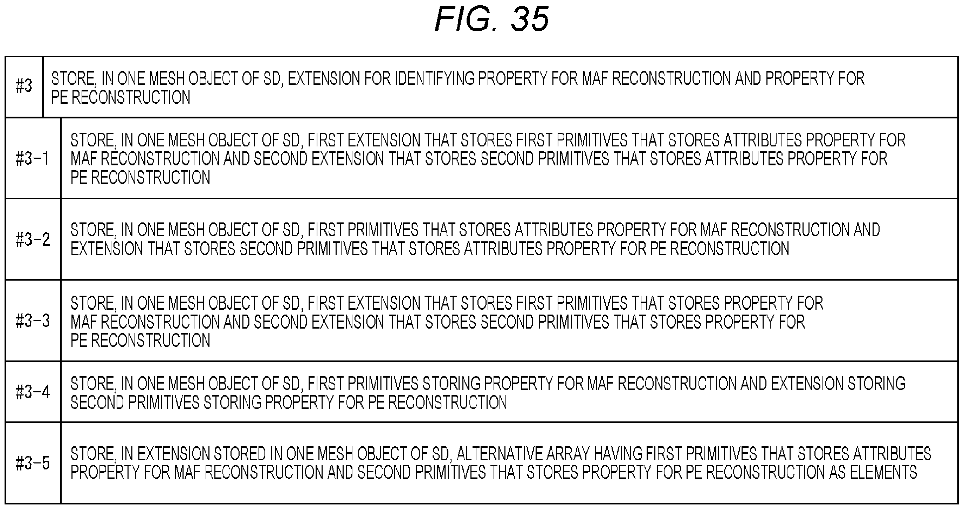

The extension as described above in the examples of (#1) and (#2) may be specified in the mesh object of the scene description. For example, as illustrated in the top row of the table shown in Fig. 35, an extension for identifying a (attributes) property for MAF reconstruction and a (attributes) property for PE reconstruction may be stored in one mesh object of the scene description (#3).

### <Extension for each playback method>

In the case of (#3), for example, as illustrated in the second row from the top of the table illustrated in Fig. 35, a first extension that stores a first primitives that stores the attributes property for MAF reconstruction and a second extension that stores a second primitives that stores the attributes property for PE reconstruction may be stored in one mesh object of the scene description (#3-1).

For example, the first extension and the second extension may be specified in one mesh object of the scene description. Then, one or a plurality of first attributes properties corresponding to the first method of playing back the 3D data may be stored in the first extension. Also, one or a plurality of second attributes properties corresponding to the second method of playing back the 3D data may be stored in the second extension. Then, in the information processing device (for example, the client device), the file processing unit may select one or a plurality of first attributes properties stored in the first extension or one or a plurality of second attributes properties stored in the second extension according to the method of playing back the 3D data.

For example, in the information processing device (for example, the file generation device), the file generation unit may specify the first extension and the second extension in one mesh object of the scene description file. Then, the file generation unit may store one or a plurality of first attributes properties corresponding to the first method of playing back the 3D data in the first extension. In addition, the file generation unit may store one or a plurality of second attributes properties corresponding to the second method of playing back the 3D data in the second extension.

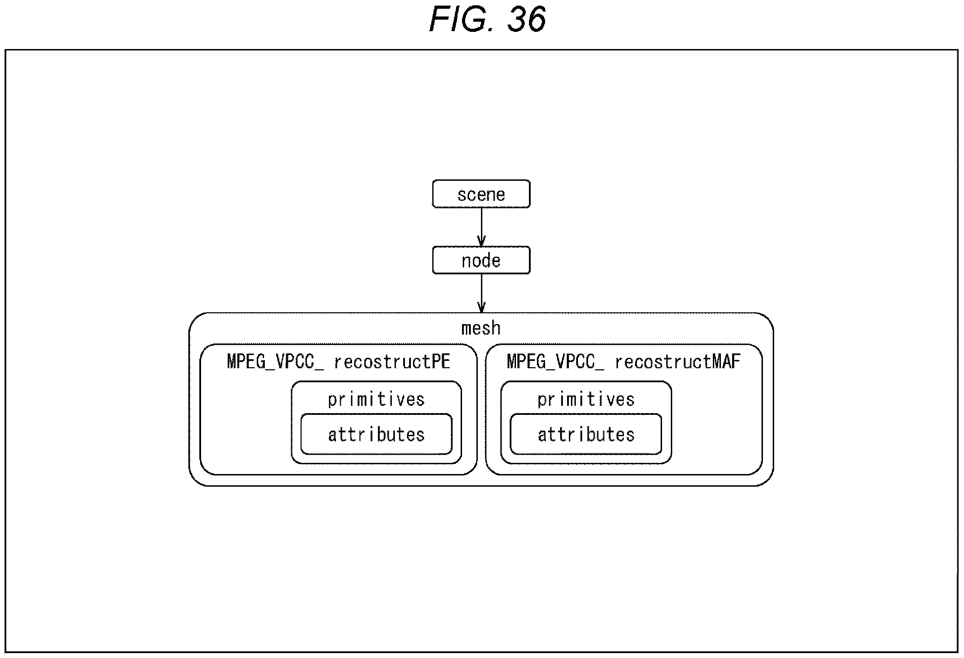

Fig. 36 illustrates an example of part of the configuration of the object in the scene description in this case. As illustrated in Fig. 36, in the case of this example, an extension (MPEG_VPCC_reconstructPE) is specified in the mesh object (mesh), and the primitives in which the attributes property for PE reconstruction is stored is stored in the extension. Furthermore, an extension (MPEG_VPCC_reconstructMAF) is specified in the mesh object (mesh), and the primitives in which the attributes property for MAF reconstruction is stored is stored in the extension.

For example, the file processing unit of the information processing device (for example, the client device) can select MPEG_VPCC_reconstructPE and supply the data before reconstruction from the MAF to the PE via the buffer by using the accessor associated with the attributes property for PE reconstruction. Furthermore, the file processing unit of the information processing device (for example, the client device) can select MPEG_VPCC_reconstructMAF and supply the reconstructed data from the MAF to the PE via the buffer by using the accessor associated with the attributes property for MAF reconstruction.

That is, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the attributes property for MAF reconstruction or the extension that stores the attributes property for PE reconstruction on the basis of the extension name. Therefore, the file processing unit can correctly select the extension in which the desired attributes property is stored and use the desired attributes property.

### <Presence or absence of extension>

Furthermore, in the case of (#3), for example, as illustrated in the third row from the top of the table illustrated in Fig. 35, the first primitives that stores the attributes property for MAF reconstruction and the extension that stores the second primitives that stores the attributes property for PE reconstruction may be stored in one mesh object of the scene description (#3-2) .

For example, an extension may be specified in one mesh object of the scene description. Then, one or a plurality of first attributes properties corresponding to the first method of playing back the 3D data may be stored in the mesh object. Also, one or a plurality of second attributes properties corresponding to the second method of playing back the 3D data may be stored in the extension. Then, in the information processing device (for example, the client device), the file processing unit may select one or a plurality of first attributes properties stored in the mesh object or one or a plurality of second attributes properties stored in the extension according to the method of playing back the 3D data.

For example, in the information processing device (for example, the file generation device), the file generation unit may specify the extension in one mesh object of the scene description file. Then, the file generation unit may store one or a plurality of first attributes properties corresponding to the first method of playing back the 3D data in the primitives. In addition, the file generation unit may store one or a plurality of second attributes properties corresponding to the second method of playing back the 3D data in the extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the attributes property is the attributes property for MAF reconstruction or the attributes property for PE reconstruction on the basis of whether or not the attributes property is stored in the extension. Therefore, the file processing unit can correctly select and use a desired attributes property.

### <Property specification>

Note that a property for each attribute of the V-PCC may be newly specified and used without using the attributes property. For example, in the case of (#3), as illustrated in the fourth row from the top of the table illustrated in Fig. 35, a first extension that stores a first primitives that stores a property for MAF reconstruction and a second extension that stores a second primitives that stores a property for PE reconstruction may be stored in one mesh object of the scene description (#3-3).

For example, the first extension and the second extension may be specified in one mesh object of the scene description. Then, one or a plurality of first properties corresponding to the first method of playing back the 3D data may be stored in the first extension. Also, one or a plurality of second properties corresponding to the second method of playing back the 3D data may be stored in the second extension. Then, in the information processing device (for example, the client device), the file processing unit may select one or a plurality of first properties stored in the first extension or one or a plurality of second properties stored in the second extension according to the method of playing back the 3D data.

For example, in the information processing device (for example, the file generation device), the file generation unit may specify the first extension and the second extension in one mesh object of the scene description file. Then, the file generation unit may store one or a plurality of first properties corresponding to the first method of playing back the 3D data in the first extension. The file generation unit may store one or a plurality of second properties corresponding to the second method of playing back the 3D data in the second extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the property for MAF reconstruction or the extension that stores the property for PE reconstruction on the basis of the extension name. Therefore, the file processing unit can correctly select the extension in which the desired property is stored and use the desired property.

Furthermore, for example, in the case of (#3), as illustrated in the fifth row from the top of the table illustrated in Fig. 35, the first primitives that stores the property for MAF reconstruction and the extension that stores the second primitives that stores the property for PE reconstruction may be stored in one mesh object of the scene description (#3-4).

For example, the extension may be specified in one mesh object of the scene description. Then, one or a plurality of first properties corresponding to the first method of playing back the 3D data may be stored in the mesh object. Also, one or a plurality of second properties corresponding to the second method of playing back the 3D data may be stored in the extension. Then, in the information processing device (for example, the client device), the file processing unit may select one or a plurality of first properties stored in the mesh object or one or a plurality of second properties stored in the extension according to the method of playing back the 3D data.

For example, in the information processing device (for example, the file generation device), the file generation unit may specify the extension in one mesh object of the scene description file. Then, the file generation unit may store one or a plurality of first properties corresponding to the first method of playing back the 3D data in the mesh object. Also, one or a plurality of second properties corresponding to the second method of playing back the 3D data may be stored in the extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the property is the property for MAF reconstruction or the property for PE reconstruction on the basis of whether or not the property is stored in the extension. Therefore, the file processing unit can correctly select and use a desired property.

### <Identification using alternatives array>

Furthermore, for example, in the case of (#3), as illustrated in the lowermost row of the table illustrated in Fig. 35, a first alternatives array having a first primitives as an element that stores the attributes property for MAF reconstruction and a second alternatives array having a second primitives as an element that stores the attributes property for PE reconstruction may be stored in the extension stored in one mesh object of the scene description (#3-5). Then, the attributes property for MAF reconstruction and the attributes property for PE reconstruction may be identified on the basis of these alternatives arrays, and a property corresponding to the playback method may be selected.

For example, an extension may be specified in one mesh object of the scene description. A first alternatives array and a second alternatives array may then be specified within the extension. Then, the first alternatives array may have each of the one or a plurality of first properties corresponding to the first method of playing back the 3D data as an element. Further, the second alternatives array may have each of the one or a plurality of second properties corresponding to the second method of playing back the 3D data as an element. Then, in the information processing device (for example, the client device), in a case where the first playback method is applied, the file processing unit may select the first alternatives array and process the 3D data by the first playback method using one or a plurality of first properties. Furthermore, in a case where the second playback method is applied, the file processing unit may select the second alternatives array and process the 3D data by the second playback method using one or a plurality of second properties.

For example, in the information processing device (for example, the file generation device), the file generation unit may specify the extension in one mesh object of the scene description file. Then, the file generation unit may store, in the extension, a first alternatives array having each of one or a plurality of first properties corresponding to the first method of playing back the 3D data as an element. Furthermore, a second alternatives array having each of one or a plurality of second properties corresponding to the second method of playing back the 3D data as an element may be further stored in the extension.

Note that, also in this case, a client type (ClientType) is specified in an element of each alternatives array, and this parameter indicates that a property corresponding to which playback method (reconstruction method) is stored.

As described above, by using the alternatives array, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

### <Extension in node (#4)>

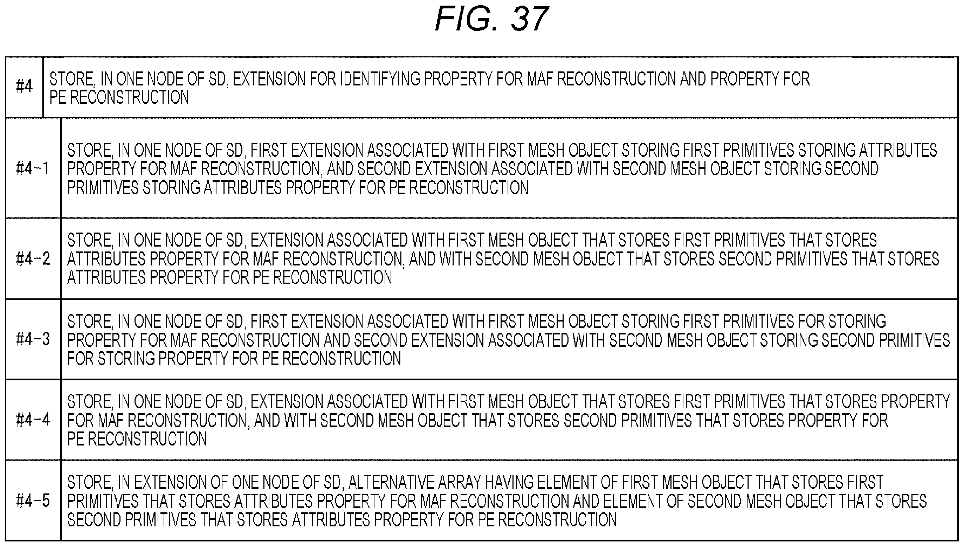

The extension as described above in the examples (#1) to (#3) may be specified in the node of the scene description. For example, as illustrated in the top row of the table shown in Fig. 37, an extension for identifying a (attributes) property for MAF reconstruction and a (attributes) property for PE reconstruction may be stored in one node of the scene description (#4).

### <Extension for each playback method>

In the case of (#4), for example, as illustrated in the second row from the top of the table illustrated in Fig. 37, a first extension associated with a first mesh object that stores a first primitives that stores the attributes property for MAF reconstruction and a second extension associated with a second mesh object that stores a second primitives that stores the attributes property for PE reconstruction may be stored in one node of the scene description (#4-1).

For example, the first extension and the second extension may be specified in one node of the scene description. Then, one or a plurality of first attributes properties corresponding to the first method of playing back the 3D data may be associated with the first extension. Furthermore, one or a plurality of second attributes properties corresponding to the second method of playing back the 3D data may be associated with the second extension. Then, in the information processing device (for example, the client device), the file processing unit may select one or a plurality of first attributes properties associated with the first extension or one or a plurality of second attributes properties associated with the second extension according to the method of playing back the 3D data.

For example, in the information processing device (for example, the file generation device), the file generation unit may specify the first extension and the second extension in one node of the scene description file. Then, the file generation unit may associate one or a plurality of first attributes properties corresponding to the first method of playing back the 3D data with the first extension. In addition, the file generation unit may associate one or a plurality of second attributes properties corresponding to the second method of playing back the 3D data in the second extension.

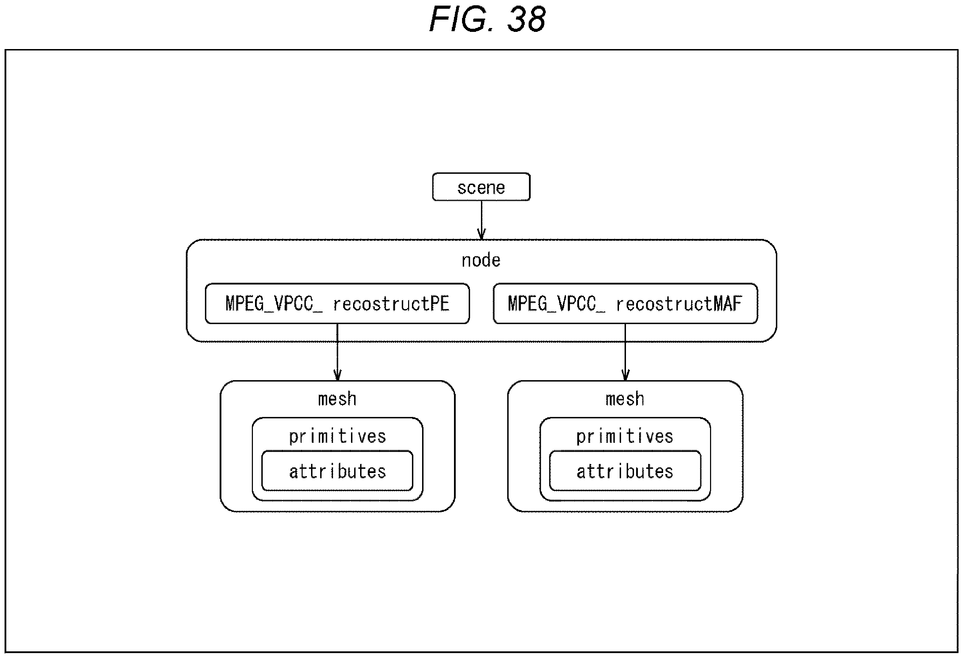

Fig. 38 illustrates an example of part of the configuration of the object in the scene description in this case. As illustrated in Fig. 38, in the case of this example, an extension (MPEG_VPCC_reconstructPE) is specified in the node (node), and a mesh object (mesh) that stores (primitives that stores) the attributes property for PE reconstruction is associated with the extension. Furthermore, an extension (MPEG_VPCC_reconstructMAF) is specified in the node (node), and a mesh object (mesh) that stores (primitives that stores) the attributes property for MAF reconstruction is associated with the extension.

Therefore, for example, the file processing unit of the information processing device (for example, the client device) can select MPEG_VPCC_reconstructPE and supply the data before reconstruction from the MAF to the PE via the buffer by using the accessor associated with (the attributes property for PE reconstruction associated with) the MPEG_VPCC_reconstructPE. Furthermore, the file processing unit of the information processing device (for example, the client device) selects MPEG_VPCC_reconstructMAF, and uses the accessor associated with (the attributes property for MAF reconstruction associated with) the MPEG_VPCC_reconstructMAF, so that the reconstructed data can be supplied from the MAF to the PE via the buffer.

That is, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the attributes property for MAF reconstruction or the extension that stores the attributes property for PE reconstruction on the basis of the extension name. Therefore, the file processing unit can correctly select the extension in which the desired attributes property is stored and use the desired attributes property.

### <Presence or absence of extension>

In the case of (#4), for example, as illustrated in the third row from the top of the table illustrated in Fig. 37, a first mesh object storing a first primitives that stores the attributes property for MAF reconstruction may be associated, and an extension associated with a second mesh object storing a second primitives that stores the attributes property for PE reconstruction may be stored in one node of the scene description (#4-2).

For example, an extension may be specified in one node of the scene description. Then, one or a plurality of first attributes properties corresponding to the first method of playing back the 3D data may be associated with the node. Further, one or a plurality of second attributes properties corresponding to the second method of playing back the 3D data may be associated with the extension. Then, in the information processing device (for example, the client device), the file processing unit may select one or a plurality of first attributes properties associated with the node or one or a plurality of second attributes properties associated with the extension according to the method of playing back the 3D data.

For example, in the information processing device (for example, the file generation device), the file generation unit may specify the extension in one node of the scene description file. Then, the file generation unit may associate one or a plurality of first attributes properties corresponding to the first method of playing back the 3D data with the node. In addition, the file generation unit may associate one or a plurality of second attributes properties corresponding to the second method of playing back the 3D data with the extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the attributes property is the attributes property for MAF reconstruction or the attributes property for PE reconstruction on the basis of whether or not the attributes property is stored in the extension. Therefore, the file processing unit can correctly select and use a desired attributes property.

### <Property specification>

Note that a property for each attribute of the V-PCC may be newly specified and used without using the attributes property. For example, in the case of (#4), as illustrated in the fourth row from the top of the table illustrated in Fig. 37, a first extension associated with a first mesh object that stores a first primitives that stores a property for MAF reconstruction and a second extension associated with a second mesh object that stores a second primitives that stores a property for PE reconstruction may be stored in one node of the scene description (#4-3).

For example, the first extension and the second extension may be specified in one node of the scene description. Then, one or a plurality of first properties corresponding to the first method of playing back the 3D data may be associated with the first extension. Further, one or a plurality of second properties corresponding to the second method of playing back the 3D data may be associated with the second extension. Then, in the information processing device (for example, the client device), the file processing unit may select one or a plurality of first properties associated with the first extension or one or a plurality of second properties associated with the second extension according to the method of playing back the 3D data.

For example, in the information processing device (for example, the file generation device), the file generation unit may specify the first extension and the second extension in one node of the scene description file. Then, the file generation unit may associate one or a plurality of first properties corresponding to the first method of playing back the 3D data with the first extension. Furthermore, the file generation unit may associate one or a plurality of second properties corresponding to the second method of playing back the 3D data with the second extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, each extension name (for example, MPEG_VPCC_reconstructMAF, MPEG_VPCC_reconstructPE) may be the identification information. That is, for example, the file processing unit of the information processing device (for example, the client device) can identify whether or not the extension is the extension that stores the property for MAF reconstruction or the extension that stores the property for PE reconstruction on the basis of the extension name. Therefore, the file processing unit can correctly select the extension in which the desired property is stored and use the desired property.

Furthermore, for example, in the case of (#4), as illustrated in the fifth row from the top of the table illustrated in Fig. 37, an extension with which a first mesh object storing a first primitives that stores a property for MAF reconstruction is associated and a second mesh object storing a second primitives that stores a property for PE reconstruction is associated may be stored in one node of the scene description (#4-4).

For example, an extension may be specified in one node of the scene description. Then, one or a plurality of first properties corresponding to the first method of playing back the 3D data may be associated with the node. Then, one or a plurality of second properties corresponding to the second method of playing back the 3D data may be associated with the extension. Then, in the information processing device (for example, the client device), the file processing unit may select one or a plurality of first properties associated with the node or one or a plurality of second properties associated with the extension according to the method of playing back the 3D data.

For example, in the information processing device (for example, the file generation device), the file generation unit may specify the extension in one node of the scene description file. Then, the file generation unit may associate one or a plurality of first properties corresponding to the first method of playing back the 3D data with the node. Furthermore, the file generation unit may associate one or a plurality of second properties corresponding to the second method of playing back the 3D data with the extension.

By doing so, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

In this example, the presence or absence of the extension may be the identification information. That is, for example, the file processing unit of the information processing device (for example, the client device) can identify whether or not the property is the property for MAF reconstruction or the property for PE reconstruction on the basis of whether or not the property is stored in the extension. Therefore, the file processing unit can correctly select and use a desired property.

### <Identification using alternatives array>

Furthermore, for example, in the case of (#4), as illustrated in the lowermost row of the table illustrated in Fig. 35, a first alternatives array having an element associated with a first mesh object that stores a first primitives that stores the attributes property for MAF reconstruction, and a second alternatives array having an element associated with a second mesh object that stores a second primitives that stores the attributes property for PE reconstruction may be stored in the extension of one node of the scene description (#4-5). Then, the attributes property for MAF reconstruction and the attributes property for PE reconstruction may be identified on the basis of these alternatives arrays, and a property corresponding to the playback method may be selected.

For example, an extension may be specified in one node of the scene description. A first alternatives array and a second alternatives array may then be specified within the extension. Then, the first alternatives array may have an element associated with each of the one or a plurality of first properties corresponding to the first method of playing back the 3D data. Further, the second alternatives array may have an element associated with each of the one or a plurality of second properties corresponding to the second method of playing back the 3D data. Then, in the information processing device (for example, the client device), in a case where the first playback method is applied, the file processing unit may select the first alternatives array and process the 3D data by the first playback method using one or a plurality of first properties. Furthermore, in a case where the second playback method is applied, the file processing unit may select the second alternatives array and process the 3D data by the second playback method using one or a plurality of second properties.

For example, in the information processing device (for example, the file generation device), the file generation unit may specify the extension in one node of the scene description file. Then, the file generation unit may store, in the extension, a first alternatives array having an element associated with each of one or a plurality of first properties corresponding to the first method of playing back the 3D data. Furthermore, the file generation unit may further store, in the extension, a second alternatives array having an element associated with each of one or a plurality of second properties corresponding to the second method of playing back the 3D data.

Note that, also in this case, a client type (ClientType) is specified in an element of each alternatives array, and this parameter indicates that a property corresponding to which playback method (reconstruction method) is stored.

As described above, by using the alternatives array, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

The present technology may be applied by appropriately combining a plurality of the above-described elements.

### <4. First embodiment>

### <File generation device>

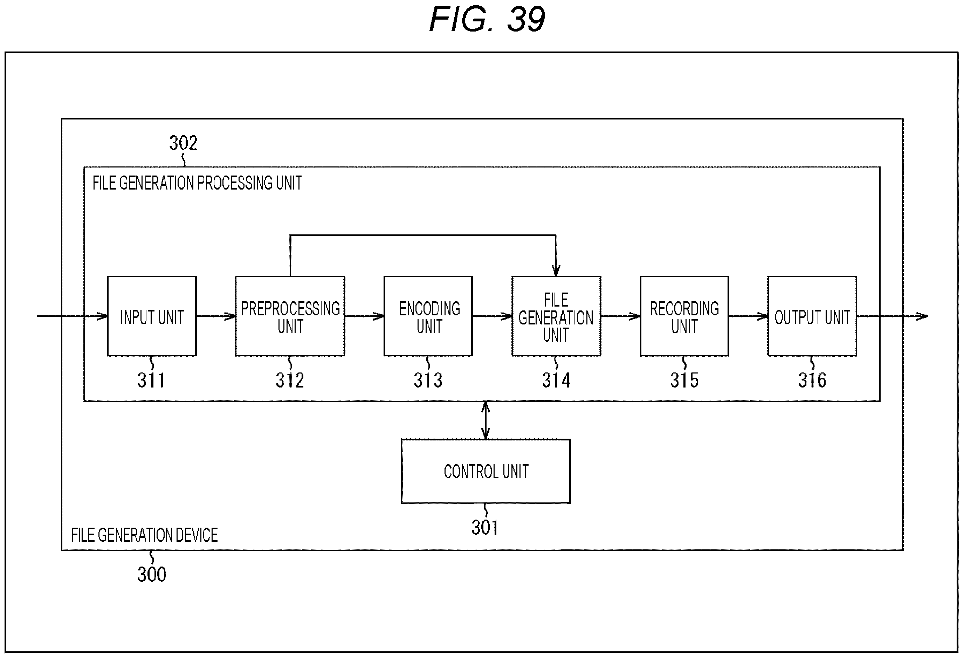

The above-described present technology can be applied to any device. Fig. 39 is a block diagram illustrating an example of a configuration of a file generation device that is an aspect of an information processing device to which the present technology is applied. A file generation device 300 illustrated in Fig. 39 is a device that encodes 3D object content (for example, 3D data such as a point cloud) and stores the encoded 3D object content in a file container such as an ISOBMFF. In addition, the file generation device 300 generates a scene description file of the 3D object content.

Note that, in Fig. 39, main processing units, main data flows, and the like are illustrated, and those illustrated in Fig. 39 are not necessarily all. That is, in the file generation device 300, there may be a processing unit not illustrated as a block in Fig. 39, or there may be a process or a data flow not illustrated as an arrow or the like in Fig. 39.

As illustrated in Fig. 39, the file generation device 300 includes a control unit 301 and a file generation processing unit 302. The control unit 301 controls the file generation processing unit 302. The file generation processing unit 302 is controlled by the control unit 301 and performs a process related to file generation. For example, the file generation processing unit 302 may acquire data of 3D object content to be stored in a file. Furthermore, the file generation processing unit 302 may generate a content file by storing the acquired data of the 3D object content in a file container. In addition, the file generation processing unit 302 may generate a scene description corresponding to the 3D object content and store the scene description in the scene description file. The file generation processing unit 302 may output the generated file to the outside of the file generation device 300. For example, the file generation processing unit 302 may upload the generated file to a distribution server or the like.

The file generation processing unit 302 includes an input unit 311, a preprocessing unit 312, an encoding unit 313, a file generation unit 314, a recording unit 315, and an output unit 316.

The input unit 311 performs a process related to acquisition of data of the 3D object content. For example, the input unit 311 may acquire the data of the 3D object content from the outside of the file generation device 300. The data of the 3D object content may be any data as long as the data is 3D data representing the three-dimensional structure of the object. For example, it may be data of a point cloud. The input unit 311 may supply the acquired data of the 3D object content to the preprocessing unit 312.

The preprocessing unit 312 performs a process related to a preprocessing performed on the data of the 3D object content before encoding. For example, the preprocessing unit 312 may acquire the data of the 3D object content supplied from the input unit 311. Furthermore, the preprocessing unit 312 may acquire information necessary for generating a scene description from the acquired data of the 3D object content or the like. In addition, the preprocessing unit 312 may supply the acquired information to the file generation unit 314. Furthermore, the preprocessing unit 312 may supply data of the 3D object content to the encoding unit 313.

The encoding unit 313 performs a process related to encoding of data of the 3D object content. For example, the encoding unit 313 may acquire the data of the 3D object content supplied from the preprocessing unit 312. Furthermore, the encoding unit 313 may encode the acquired data of the 3D object content and generate the coded data. Furthermore, the encoding unit 313 may supply the coded data of the generated 3D object content to the file generation unit 314 as a V3C bit stream.

The file generation unit 314 performs a process related to generation of a file or the like. For example, the file generation unit 314 may acquire the V3C bit stream supplied from the encoding unit 313. In addition, the file generation unit 314 may acquire information supplied from the preprocessing unit 312. Furthermore, the file generation unit 314 may generate a file container (content file) that stores the V3C bit stream supplied from the encoding unit 313. The specification and the like of the content file (file container) are any specification, and any file may be used as long as the V3C bit stream can be stored. For example, it may be an ISOBMFF.

In addition, the file generation unit 314 may generate a scene description corresponding to the V3C bit stream using the information supplied from the preprocessing unit 312. Then, the file generation unit 314 may generate a scene description file and store the generated scene description. Furthermore, in a case where the V3C bit stream is distributed by a system conforming to the MPEG-DASH, the file generation unit 314 may generate an MPD corresponding to the V3C bit stream. Furthermore, the file generation unit 314 may supply the generated file or the like (ISOBMFF, scene description file, MPD, and the like) to the recording unit 315.

The recording unit 315 includes any recording medium such as a hard disk or a semiconductor memory, for example, and performs a process related to data recording. For example, the recording unit 315 may record the file or the like supplied from the file generation unit 314 in the recording medium. Furthermore, the recording unit 315 may read a file or the like recorded in the recording medium in accordance with a request from the control unit 301 or the output unit 316 or at a predetermined timing, and supply the file or the like to the output unit 316.

The output unit 316 may acquire the file or the like supplied from the recording unit 315 to output the file or the like to the outside of the file generation device 300 (for example, a distribution server, a playback device, or the like).

In the file generation device 300 having the above configuration, the present technology described above may be applied in <3. Scene description corresponding to a plurality of playback methods>.

For example, the file generation unit 314 may generate a scene description file that stores an extension for identifying a property for each method of playing back the 3D data.

In this case, the file generation unit 314 may specify the first extension and the second extension in one primitives of the scene description file. Then, the file generation unit 314 may store one or a plurality of first attributes properties corresponding to the first method of playing back the 3D data in the first extension. In addition, the file generation unit 314 may store one or a plurality of second attributes properties corresponding to the second method of playing back the 3D data in the second extension.

In addition, the file generation unit 314 may specify an extension in one primitives of the scene description file. Then, the file generation unit 314 may store one or a plurality of first attributes properties corresponding to the first method of playing back the 3D data in the primitives. In addition, the file generation unit 314 may store one or a plurality of second attributes properties corresponding to the second method of playing back the 3D data in the extension.

In addition, the file generation unit 314 may specify the first extension and the second extension in one primitives of the scene description file. Then, the file generation unit 314 may store one or a plurality of first properties corresponding to the first method of playing back the 3D data in the first extension. In addition, the file generation unit 314 may store one or a plurality of second properties corresponding to the second method of playing back the 3D data in the second extension.

In addition, the file generation unit 314 may specify an extension in one primitives of the scene description file. Then, the file generation unit 314 may store one or a plurality of first properties corresponding to the first method of playing back the 3D data in the primitives. Furthermore, the file generation unit 314 may store one or a plurality of second properties corresponding to the second method of playing back the 3D data in the extension.

In addition, the file generation unit 314 may specify the first extension and the second extension in one mesh object of the scene description file. Then, the file generation unit 314 may store one or a plurality of first attributes properties corresponding to the first method of playing back the 3D data in the first extension. In addition, the file generation unit 314 may store one or a plurality of second attributes properties corresponding to the second method of playing back the 3D data in the second extension.

In addition, the file generation unit 314 may specify an extension in one mesh object of the scene description file. Then, the file generation unit 314 may store one or a plurality of first attributes properties corresponding to the first method of playing back the 3D data in the mesh object. In addition, the file generation unit 314 may store one or a plurality of second attributes properties corresponding to the second method of playing back the 3D data in the extension.

In addition, the file generation unit 314 may specify the first extension and the second extension in one mesh object of the scene description file. Then, the file generation unit 314 may store one or a plurality of first properties corresponding to the first method of playing back the 3D data in the first extension. In addition, the file generation unit 314 may store one or a plurality of second properties corresponding to the second method of playing back the 3D data in the second extension.

In addition, the file generation unit 314 may specify an extension in one mesh object of the scene description file. Then, the file generation unit 314 may store one or a plurality of first properties corresponding to the first method of playing back the 3D data in the mesh object. Furthermore, the file generation unit 314 may store one or a plurality of second properties corresponding to the second method of playing back the 3D data in the extension.

In addition, the file generation unit 314 may specify the first extension and the second extension in one node of the scene description file. Then, the file generation unit 314 may associate one or a plurality of first attributes properties corresponding to the first method of playing back the 3D data with the first extension. In addition, the file generation unit 314 may associate one or a plurality of second attributes properties corresponding to the second method of playing back the 3D data in the second extension.

In addition, the file generation unit 314 may specify an extension in one node of the scene description file. Then, the file generation unit 314 may associate one or a plurality of first attributes properties corresponding to the first method of playing back the 3D data with the node. In addition, the file generation unit 314 may associate one or a plurality of second attributes properties corresponding to the second method of playing back the 3D data with the extension.

In addition, the file generation unit 314 may specify the first extension and the second extension in one node of the scene description file. Then, the file generation unit 314 may associate one or a plurality of first properties corresponding to the first method of playing back the 3D data with the first extension. Furthermore, the file generation unit 314 may associate one or a plurality of second properties corresponding to the second method of playing back the 3D data with the second extension.

In addition, the file generation unit 314 may specify an extension in one node of the scene description file. Then, the file generation unit 314 may associate one or a plurality of first properties corresponding to the first method of playing back the 3D data with the node. Furthermore, the file generation unit 314 may associate one or a plurality of second properties corresponding to the second method of playing back the 3D data with the extension.

In addition, the file generation unit 314 may generate a scene description file that stores a plurality of alternatives arrays having properties corresponding to the mutually same method of playing back the 3D data as elements.

In this case, the file generation unit 314 may specify the extension in one primitives of the scene description file. Then, the file generation unit 314 may store a first alternatives array having each of one or a plurality of first properties corresponding to the first method of playing back the 3D data as an element in the extension. Furthermore, the file generation unit 314 may further store, in the extension, a second alternatives array having each of one or a plurality of second properties corresponding to the second method of playing back the 3D data as an element.

In addition, the file generation unit 314 may specify an extension in one mesh object of the scene description file. Then, the file generation unit 314 may store a first alternatives array having each of one or a plurality of first properties corresponding to the first method of playing back the 3D data as an element in the extension. Furthermore, the file generation unit 314 may further store, in the extension, a second alternatives array having each of one or a plurality of second properties corresponding to the second method of playing back the 3D data as an element.

In addition, the file generation unit 314 may specify an extension in one node of the scene description file. Then, the file generation unit 314 may store, in the extension, a first alternatives array having an element associated with each of one or a plurality of first properties corresponding to the first method of playing back the 3D data. Furthermore, the file generation unit 314 may further store, in the extension, a second alternatives array having an element associated with each of one or a plurality of second properties corresponding to the second method of playing back the 3D data.

Of course, another present technologies described above may be applied in <3. Scene description corresponding to a plurality of playback methods>. Furthermore, a plurality of the present technologies may be appropriately combined and applied.

Since the file generation device 300 has such a configuration, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

### <Flow 1 of file generation process>

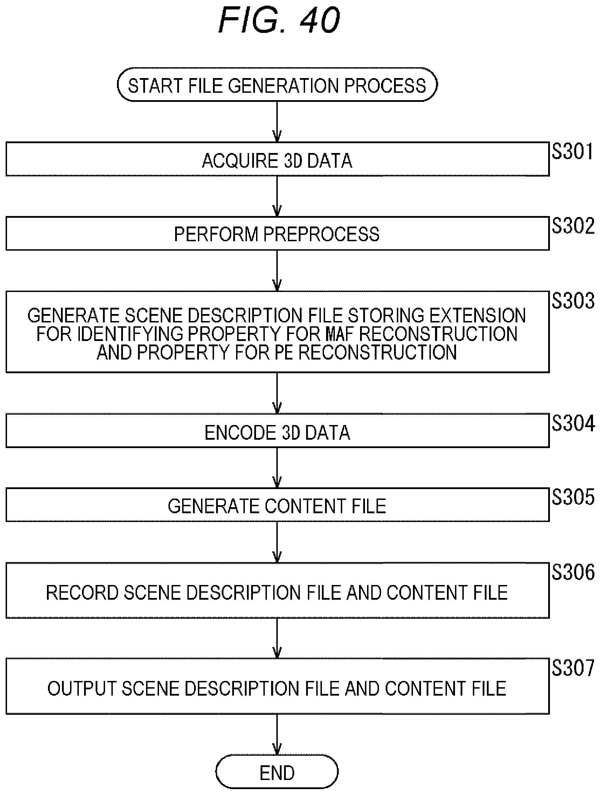

An example of a flow of file generation processing executed by the file generation device 300 having such a configuration will be described with reference to a flowchart of Fig. 40. The example of Fig. 40 illustrates an example of a flow of a file generation process in a case where a property for each playback method is identified using an extension.

In this case, in a case where the file generation process is started, the input unit 311 of the file generation device 300 acquires the data (3D data) of the 3D object in step S301. For example, the input unit 311 acquires data of a point cloud as the 3D data.

In step S302, the preprocessing unit 312 performs a preprocessing on the data of the 3D object acquired in step S301. For example, the preprocessing unit 312 acquires, from the data of the 3D object, information to be used for generating a scene description that is spatial arrangement information for disposing one or more 3D objects in a 3D space.

In step S303, using the information, the file generation unit 314 generates a scene description file storing an extension for identifying the (attributes) property for MAF reconstruction and the (attributes) property for PE reconstruction. That is, the file generation unit 314 generates a scene description file that stores an extension for identifying the (attributes) property for each method of playing back the 3D data.

In step S304, the encoding unit 313 encodes the data (3D data) of the point cloud acquired in step S301, and generates the coded data (V3C bit stream).

In step S305, the file generation unit 314 generates a content file (ISOBMFF) that stores the V3C bit stream generated in step S304.

In step S306, the recording unit 315 records the generated scene description file and the generated content file in the recording medium.

In step S307, the output unit 316 reads the file or the like recorded in step S306 from the recording medium to output the read file to the outside of the file generation device 300 at a predetermined timing. For example, the output unit 316 may transmit (upload) the file read from the recording medium to another device such as a distribution server or a playback device via a communication medium such as a network. Furthermore, the output unit 316 may record a file or the like read from a recording medium in an external recording medium such as a removable medium. In this case, the output file may be supplied to another device (a distribution server, a playback device, or the like) via the external recording medium, for example.

When the process of step S307 ends, the file generation processing ends.

By executing the file generation process in this manner, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

Note that, in step S303, the file generation unit 314 may specify the first extension and the second extension in one primitives of the scene description file. Then, the file generation unit 314 may store one or a plurality of first attributes properties corresponding to the first method of playing back the 3D data in the first extension. In addition, the file generation unit 314 may store one or a plurality of second attributes properties corresponding to the second method of playing back the 3D data in the second extension.

Furthermore, in step S303, the file generation unit 314 may specify an extension in one primitives of the scene description file. Then, the file generation unit 314 may store one or a plurality of first attributes properties corresponding to the first method of playing back the 3D data in the primitives. In addition, the file generation unit 314 may store one or a plurality of second attributes properties corresponding to the second method of playing back the 3D data in the extension.

Furthermore, in step S303, the file generation unit 314 may specify the first extension and the second extension in one primitives of the scene description file. Then, the file generation unit 314 may store one or a plurality of first properties corresponding to the first method of playing back the 3D data in the first extension. In addition, the file generation unit 314 may store one or a plurality of second properties corresponding to the second method of playing back the 3D data in the second extension.

Furthermore, in step S303, the file generation unit 314 may specify an extension in one primitives of the scene description file. Then, the file generation unit 314 may store one or a plurality of first properties corresponding to the first method of playing back the 3D data in the primitives. Furthermore, the file generation unit 314 may store one or a plurality of second properties corresponding to the second method of playing back the 3D data in the extension.

Furthermore, in step S303, the file generation unit 314 may specify the first extension and the second extension in one mesh object of the scene description file. Then, the file generation unit 314 may store one or a plurality of first attributes properties corresponding to the first method of playing back the 3D data in the first extension. In addition, the file generation unit 314 may store one or a plurality of second attributes properties corresponding to the second method of playing back the 3D data in the second extension.

Furthermore, in step S303, the file generation unit 314 may specify the extension in one mesh object of the scene description file. Then, the file generation unit 314 may store one or a plurality of first attributes properties corresponding to the first method of playing back the 3D data in the mesh object. In addition, the file generation unit 314 may store one or a plurality of second attributes properties corresponding to the second method of playing back the 3D data in the extension.

Furthermore, in step S303, the file generation unit 314 may specify the first extension and the second extension in one mesh object of the scene description file. Then, the file generation unit 314 may store one or a plurality of first properties corresponding to the first method of playing back the 3D data in the first extension. In addition, the file generation unit 314 may store one or a plurality of second properties corresponding to the second method of playing back the 3D data in the second extension.

In addition, the file generation unit 314 may specify an extension in one mesh object of the scene description file. Then, the file generation unit 314 may store one or a plurality of first properties corresponding to the first method of playing back the 3D data in the mesh object. Furthermore, the file generation unit 314 may store one or a plurality of second properties corresponding to the second method of playing back the 3D data in the extension.

In addition, in step S303, the file generation unit 314 may specify the first extension and the second extension in one node of the scene description file. Then, the file generation unit 314 may associate one or a plurality of first attributes properties corresponding to the first method of playing back the 3D data with the first extension. In addition, the file generation unit 314 may associate one or a plurality of second attributes properties corresponding to the second method of playing back the 3D data in the second extension.

In addition, in step S303, the file generation unit 314 may specify an extension in one node of the scene description file. Then, the file generation unit 314 may associate one or a plurality of first attributes properties corresponding to the first method of playing back the 3D data with the node. In addition, the file generation unit 314 may associate one or a plurality of second attributes properties corresponding to the second method of playing back the 3D data with the extension.

In addition, in step S303, the file generation unit 314 may specify the first extension and the second extension in one node of the scene description file. Then, the file generation unit 314 may associate one or a plurality of first properties corresponding to the first method of playing back the 3D data with the first extension. Furthermore, the file generation unit 314 may associate one or a plurality of second properties corresponding to the second method of playing back the 3D data with the second extension.

In addition, in step S353, the file generation unit 314 may specify an extension in one node of the scene description file. Then, the file generation unit 314 may associate one or a plurality of first properties corresponding to the first method of playing back the 3D data with the node. Furthermore, the file generation unit 314 may associate one or a plurality of second properties corresponding to the second method of playing back the 3D data with the extension.

Of course, another present technologies described above may be applied in <3. Scene description corresponding to a plurality of playback methods>. Furthermore, a plurality of the present technologies may be appropriately combined and applied.

### <Flow 2 of file generation process>

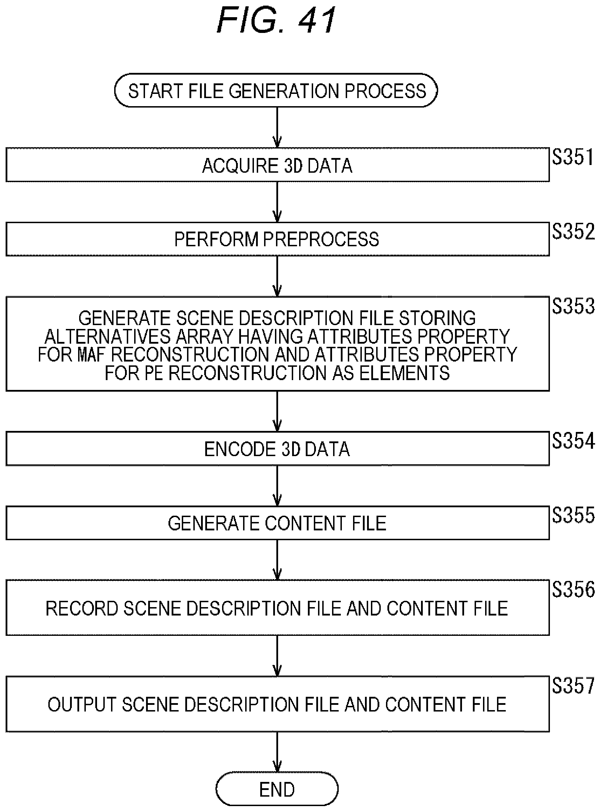

Next, an example of a flow of a file generation process in a case where a property for each playback method is identified using an alternatives array will be described with reference to a flowchart of Fig. 41.

In this case, in a case where the file generation process is started, the processes of steps S351 and S352 are executed as in the processes of steps S301 and S302 of Fig. 40.

In step S353, the file generation unit 314 generates a scene description file storing the alternatives array having the attributes property for MAF reconstruction and the attributes property for PE reconstruction as elements. That is, the file generation unit 314 generates a scene description file that stores a plurality of alternatives arrays having properties corresponding to the mutually same method of playing back the 3D data as elements.

When the process of step S353 ends, the processes of steps S354 to S357 are executed as in the processes of steps S304 to S307 of Fig. 40.

When the process of step S357 ends, the file generation processing ends.

By executing the file generation process in this manner, the configuration of the scene description can be set to a state in which the property can be identified for each playback method. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

Note that, in step S353, the file generation unit 314 may specify an extension in one primitives of the scene description file. Then, the file generation unit 314 may store a first alternatives array having each of one or a plurality of first properties corresponding to the first method of playing back the 3D data as an element in the extension. Furthermore, the file generation unit 314 may further store, in the extension, a second alternatives array having each of one or a plurality of second properties corresponding to the second method of playing back the 3D data as an element.

Furthermore, in step S353, the file generation unit 314 may specify the extension in one mesh object of the scene description file. Then, the file generation unit 314 may store a first alternatives array having each of one or a plurality of first properties corresponding to the first method of playing back the 3D data as an element in the extension. Furthermore, the file generation unit 314 may further store, in the extension, a second alternatives array having each of one or a plurality of second properties corresponding to the second method of playing back the 3D data as an element.

In addition, in step S353, the file generation unit 314 may specify an extension in one node of the scene description file. Then, the file generation unit 314 may store, in the extension, a first alternatives array having an element associated with each of one or a plurality of first properties corresponding to the first method of playing back the 3D data. Furthermore, the file generation unit 314 may further store, in the extension, a second alternatives array having an element associated with each of one or a plurality of second properties corresponding to the second method of playing back the 3D data.

Of course, another present technologies described above may be applied in <3. Scene description corresponding to a plurality of playback methods>. Furthermore, a plurality of the present technologies may be appropriately combined and applied.

### <5. Second embodiment>

### <Client device>

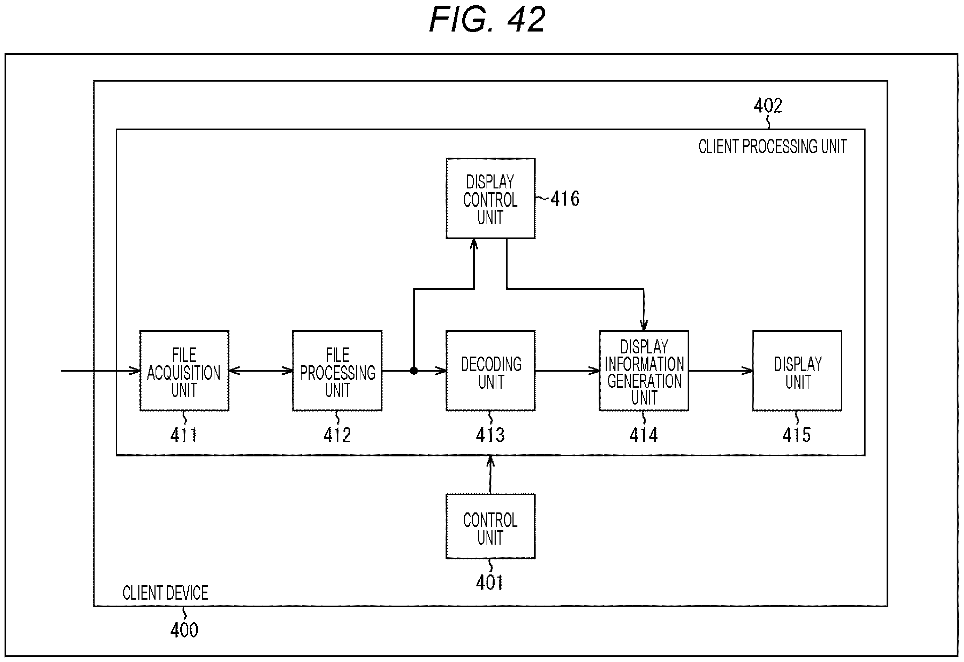

Fig. 42 is a block diagram illustrating an example of a configuration of a client device that is an aspect of an information processing device to which the present technology is applied. A client device 400 illustrated in Fig. 42 is a playback device that performs a playback process of 3D object content on the basis of the scene description. For example, the client device 400 plays back the data of the 3D object stored in the content file generated by the file generation device 300. At this time, the client device 400 performs a process related to the playback on the basis of the scene description.

Note that, in Fig. 42, main processing units, main data flows, and the like are illustrated, and those illustrated in Fig. 42 are not necessarily all. That is, in the client device 400, there may be a processing unit not illustrated as a block in Fig. 42, or there may be processing or a data flow not illustrated as an arrow or the like in Fig. 42.

As illustrated in Fig. 42, the client device 400 includes a control unit 401 and a playback processing unit 402. The control unit 401 performs a process related to control of the playback processing unit 402. The playback processing unit 402 performs a process related to playback of the data of the 3D object.

The playback processing unit 402 includes a file acquisition unit 411, a file processing unit 412, a decoding unit 413, a display information generation unit 414, a display unit 415, and a display control unit 416.

The file acquisition unit 411 performs a process related to file acquisition. For example, the file acquisition unit 411 may acquire a file or the like supplied from the outside of the client device 400, such as the distribution server or the file generation device 300. In addition, the file acquisition unit 411 may acquire a file or the like stored in a local storage (not illustrated). For example, the file acquisition unit 411 may acquire a scene description file. In addition, the file acquisition unit 411 may acquire a content file. For example, the file acquisition unit 411 may supply the acquired file to the file processing unit 412. The file acquisition unit 411 may perform a process related to the acquisition of the file under the control of the file processing unit 412. For example, the file acquisition unit 411 may acquire a file requested by the file processing unit 412 from the outside or a local storage and supply the file to the file processing unit 412.

The file processing unit 412 performs a process related to processing on a file or the like. For example, the file processing unit 412 may have a configuration (for example, MAF 52, buffer 54, PE 51, and the like) as described with reference to Fig. 16.

The file processing unit 412 may cause the file acquisition unit 411 to acquire the scene description file from the outside of the client device 400, a local storage, or the like. In addition, the file processing unit 412 may cause the file acquisition unit 411 to acquire the V3C bit stream from a content file of the outside of the client device 400, a local storage, or the like on the basis of the scene description file.

Further, the file processing unit 412 may cause the decoding unit 413 to decode the V3C bit stream. Then, the file processing unit 412 may reconstruct the 3D data using the data obtained by the decoding. At this time, the file processing unit 412 may reconstruct the 3D data by the MAF 52 or may reconstruct the 3D data by the PE 51.

Furthermore, the file processing unit 412 may cause the display information generation unit 414 to render the reconstructed 3D data and generate a display image. Furthermore, the file processing unit 412 may cause the display unit 415 to display the display image.

The decoding unit 413 performs a process related to decoding. For example, the decoding unit 413 may be controlled by the file processing unit 412 and decode the V3C bit stream supplied from the file processing unit 412. Further, the decoding unit 413 may supply data obtained by the decoding to the file processing unit 412.

The display information generation unit 414 performs a process related to display. For example, under the control of the file processing unit 412, the display information generation unit 414 may render the 3D data supplied from the file processing unit 412 and generate a display image or the like. At this time, the display information generation unit 414 may appropriately follow the control of the display control unit 416. In addition, the display information generation unit 414 may supply the generated display image or the like to the file processing unit 412.

The display unit 415 includes a display device and performs a process related to image display. For example, the display unit 415 may display the display image (the display image generated by the display information generation unit 414) supplied from the file processing unit 412 using the display device according to the control of the file processing unit 412.

The display control unit 416 performs a process related to image display control. For example, the display control unit 416 may acquire information such as a scene description supplied from the file processing unit 412. Furthermore, the display control unit 416 may control the display information generation unit 414 on the basis of the information.

In the client device 400 having the above configuration, the present technology described above may be applied in <3. Scene description corresponding to a plurality of playback methods>.

For example, the file processing unit 412 may select a property corresponding to the method of playing back the 3D data on the basis of the extension specified in the scene description, and process the 3D data by the playback method using the selected property.

Furthermore, in this case, the first extension and the second extension may be specified in one primitives of the scene description. Then, one or a plurality of first attributes properties corresponding to the first method of playing back the 3D data may be stored in the first extension. Also, one or a plurality of second attributes properties corresponding to the second method of playing back the 3D data may be stored in the second extension. Then, the file processing unit 412 may select one or a plurality of first attributes properties stored in the first extension or one or a plurality of second attributes properties stored in the second extension according to the method of playing back the 3D data.

In addition, an extension may be specified in one primitives of the scene description. Then, one or a plurality of first attributes properties corresponding to the first method of playing back the 3D data may be stored in the primitives. Also, one or a plurality of second attributes properties corresponding to the second method of playing back the 3D data may be stored in the extension. Then, the file processing unit 412 may select one or a plurality of first attributes properties stored in the primitives or one or a plurality of second attributes properties stored in the extension according to the method of playing back the 3D data.

In addition, the first extension and the second extension may be specified in one primitives of the scene description. Then, one or a plurality of first properties corresponding to the first method of playing back the 3D data may be stored in the first extension. Also, one or a plurality of second properties corresponding to the second method of playing back the 3D data may be stored in the second extension. Then, the file processing unit 412 may select one or a plurality of first properties stored in the first extension or one or a plurality of second properties stored in the second extension according to the method of playing back the 3D data.

In addition, an extension may be specified in one primitives of the scene description. Then, one or a plurality of first properties corresponding to the first method of playing back the 3D data may be stored in the primitives. Also, one or a plurality of second properties corresponding to the second method of playing back the 3D data may be stored in the extension. Then, the file processing unit 412 may select one or a plurality of first properties stored in the primitives or one or a plurality of second properties stored in the extension according to the method of playing back the 3D data.

In addition, the first extension and the second extension may be specified in one mesh object of the scene description. Then, one or a plurality of first attributes properties corresponding to the first method of playing back the 3D data may be stored in the first extension. Also, one or a plurality of second attributes properties corresponding to the second method of playing back the 3D data may be stored in the second extension. Then, the file processing unit 412 may select one or a plurality of first attributes properties stored in the first extension or one or a plurality of second attributes properties stored in the second extension according to the method of playing back the 3D data.

Furthermore, an extension may be specified in one mesh object of the scene description. Then, one or a plurality of first attributes properties corresponding to the first method of playing back the 3D data may be stored in the mesh object. Also, one or a plurality of second attributes properties corresponding to the second method of playing back the 3D data may be stored in the extension. Then, the file processing unit 412 may select one or a plurality of first attributes properties stored in the mesh object or one or a plurality of second attributes properties stored in the extension according to the method of playing back the 3D data.

In addition, the first extension and the second extension may be specified in one mesh object of the scene description. Then, one or a plurality of first properties corresponding to the first method of playing back the 3D data may be stored in the first extension. Also, one or a plurality of second properties corresponding to the second method of playing back the 3D data may be stored in the second extension. Then, the file processing unit 412 may select one or a plurality of first properties stored in the first extension or one or a plurality of second properties stored in the second extension according to the method of playing back the 3D data.

Furthermore, an extension may be specified in one mesh object of the scene description. Then, one or a plurality of first properties corresponding to the first method of playing back the 3D data may be stored in the mesh object. Also, one or a plurality of second properties corresponding to the second method of playing back the 3D data may be stored in the extension. Then, the file processing unit 412 may select one or a plurality of first properties stored in the mesh object or one or a plurality of second properties stored in the extension according to the method of playing back the 3D data.

In addition, the first extension and the second extension may be specified in one node of the scene description. Then, one or a plurality of first attributes properties corresponding to the first method of playing back the 3D data may be associated with the first extension. Furthermore, one or a plurality of second attributes properties corresponding to the second method of playing back the 3D data may be associated with the second extension. Then, the file processing unit 412 may select one or a plurality of first attributes properties associated with the first extension or one or a plurality of second attributes properties associated with the second extension according to the method of playing back the 3D data.

In addition, an extension may be specified in one node of the scene description. Then, one or a plurality of first attributes properties corresponding to the first method of playing back the 3D data may be associated with the node. Further, one or a plurality of second attributes properties corresponding to the second method of playing back the 3D data may be associated with the extension. Then, the file processing unit 412 may select one or a plurality of first attributes properties associated with the node or one or a plurality of second attributes properties associated with the extension according to the method of playing back the 3D data.

In addition, the first extension and the second extension may be specified in one node of the scene description. Then, one or a plurality of first properties corresponding to the first method of playing back the 3D data may be associated with the first extension. Further, one or a plurality of second properties corresponding to the second method of playing back the 3D data may be associated with the second extension. Then, the file processing unit 412 may select one or a plurality of first properties associated with the first extension or one or a plurality of second properties associated with the second extension according to the method of playing back the 3D data.

In addition, an extension may be specified in one node of the scene description. Then, one or a plurality of first properties corresponding to the first method of playing back the 3D data may be associated with the node. One or a plurality of second properties corresponding to the second method of playing back the 3D data may be associated with the extension. Then, the file processing unit 412 may select one or a plurality of first properties associated with the node or one or a plurality of second properties associated with the extension according to the method of playing back the 3D data.

In addition, the file processing unit 412 may select an alternatives array corresponding to the method of playing back the 3D data from among the alternatives arrays specified in the scene description, and process the 3D data by the playback method using a property that is an element of the selected alternatives array.

In this case, an extension may be specified in one primitives of the scene description. A first alternatives array and a second alternatives array may then be specified within the extension. Then, the first alternatives array may have each of the one or a plurality of first properties corresponding to the first method of playing back the 3D data as an element. Further, the second alternatives array may have each of the one or a plurality of second properties corresponding to the second method of playing back the 3D data as an element. Then, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

Furthermore, an extension may be specified in one mesh object of the scene description. A first alternatives array and a second alternatives array may then be specified within the extension. Then, the first alternatives array may have each of the one or a plurality of first properties corresponding to the first method of playing back the 3D data as an element. Further, the second alternatives array may have each of the one or a plurality of second properties corresponding to the second method of playing back the 3D data as an element. Then, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

In addition, an extension may be specified in one node of the scene description. A first alternatives array and a second alternatives array may then be specified within the extension. Then, the first alternatives array may have an element associated with each of the one or a plurality of first properties corresponding to the first method of playing back the 3D data. Furthermore, the second alternatives array may also have an element associated with each of the one or a plurality of second properties corresponding to the second method of playing back the 3D data. Then, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

Of course, another present technologies described above may be applied in <3. Scene description corresponding to a plurality of playback methods>. Furthermore, a plurality of the present technologies may be appropriately combined and applied.

Since the client device 400 has such a configuration, the client device 400 can identify the property for each playback method in the scene description. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

### <Flow of playback process>

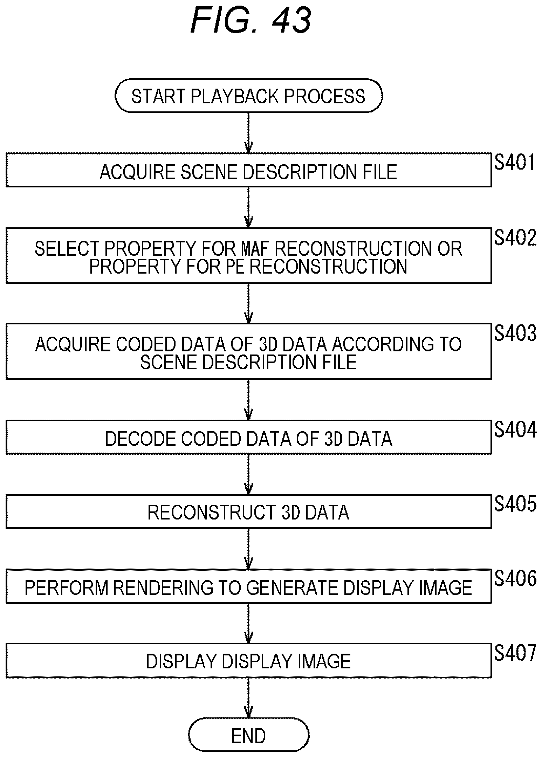

An example of a flow of the playback process executed by the client device 400 having such a configuration will be described with reference to the flowchart of Fig. 43.

When the playback process is started, the file processing unit 412 of the client device 400 causes the file acquisition unit 411 to acquire the scene description file in step S401.

In step S402, the file processing unit 412 parses the scene description file acquired in step S401, and selects the (attributes) property (for example, an (attributes) property for MAF reconstruction or an (attributes) property for PE reconstruction) corresponding to the method of playing back its own 3D object content (3D data reconstruction method).

At this time, the file processing unit 412 may select a property corresponding to the method of playing back the 3D data on the basis of the extension specified in the scene description, and process the 3D data by the playback method using the selected property.

Furthermore, the file processing unit 412 may select an alternatives array corresponding to the method of playing back the 3D data from among the alternatives arrays specified in the scene description, and process the 3D data by the playback method using a property that is an element of the selected alternatives array.

In step S403, the file processing unit 412 parses the scene description file acquired in step S401, causes the file acquisition unit 411, to acquire the coded data (V3C bit stream) of the 3D data according to the parsing result.

In step S404, the file processing unit 412 causes the decoding unit 413 to decode the V3C bit stream obtained by the processing in step S402.

In step S405, the file processing unit 412 reconstructs the 3D data using the data obtained by the processing in step S403 according to the parsing result of the scene description file.

In step S406, the file processing unit 412 causes the display information generation unit 414 to perform rendering using the 3D data reconstructed in step S405 and generate a display image.

In step S407, the file processing unit 412 causes the display unit 415 to display the display image generated in step S406. When the processing at step S407 ends, the playback process ends.

By executing the playback process in this manner, the client device 400 can identify the property for each playback method in the scene description. Therefore, one scene description can correspond to a plurality of playback methods.

That is, the content can be made to correspond to a plurality of playback methods by one scene description without preparing a plurality of scene descriptions. Therefore, it is possible to suppress an increase in load of processing related to the scene description, such as generation, management, and use of the scene description file.

Note that the first extension and the second extension may be specified in one primitives of the scene description. Then, one or a plurality of first attributes properties corresponding to the first method of playing back the 3D data may be stored in the first extension. Also, one or a plurality of second attributes properties corresponding to the second method of playing back the 3D data may be stored in the second extension. Then, in step S402, the file processing unit 412 may select one or a plurality of first attributes properties stored in the first extension or one or a plurality of second attributes properties stored in the second extension according to the method of playing back the 3D data.

In addition, an extension may be specified in one primitives of the scene description. Then, one or a plurality of first attributes properties corresponding to the first method of playing back the 3D data may be stored in the primitives. Also, one or a plurality of second attributes properties corresponding to the second method of playing back the 3D data may be stored in the extension. Then, in step S402, the file processing unit 412 may select one or a plurality of first attributes properties stored in the primitives or one or a plurality of second attributes properties stored in the extension according to the method of playing back the 3D data.

In addition, the first extension and the second extension may be specified in one primitives of the scene description. Then, one or a plurality of first properties corresponding to the first method of playing back the 3D data may be stored in the first extension. Also, one or a plurality of second properties corresponding to the second method of playing back the 3D data may be stored in the second extension. Then, in step S402, the file processing unit 412 may select one or a plurality of first properties stored in the first extension or one or a plurality of second properties stored in the second extension according to the method of playing back the 3D data.

In addition, an extension may be specified in one primitives of the scene description. Then, one or a plurality of first properties corresponding to the first method of playing back the 3D data may be stored in the primitives. Also, one or a plurality of second properties corresponding to the second method of playing back the 3D data may be stored in the extension. Then, in step S402, the file processing unit 412 may select one or a plurality of first properties stored in the primitives or one or a plurality of second properties stored in the extension according to the method of playing back the 3D data.

In addition, the first extension and the second extension may be specified in one mesh object of the scene description. Then, one or a plurality of first attributes properties corresponding to the first method of playing back the 3D data may be stored in the first extension. Also, one or a plurality of second attributes properties corresponding to the second method of playing back the 3D data may be stored in the second extension. Then, in step S402, the file processing unit 412 may select one or a plurality of first attributes properties stored in the first extension or one or a plurality of second attributes properties stored in the second extension according to the method of playing back the 3D data.

Furthermore, an extension may be specified in one mesh object of the scene description. Then, one or a plurality of first attributes properties corresponding to the first method of playing back the 3D data may be stored in the mesh object. Also, one or a plurality of second attributes properties corresponding to the second method of playing back the 3D data may be stored in the extension. Then, in step S402, the file processing unit 412 may select one or a plurality of first attributes properties stored in the mesh object or one or a plurality of second attributes properties stored in the extension according to the method of playing back the 3D data.

In addition, the first extension and the second extension may be specified in one mesh object of the scene description. Then, one or a plurality of first properties corresponding to the first method of playing back the 3D data may be stored in the first extension. Also, one or a plurality of second properties corresponding to the second method of playing back the 3D data may be stored in the second extension. Then, in step S402, the file processing unit 412 may select one or a plurality of first properties stored in the first extension or one or a plurality of second properties stored in the second extension according to the method of playing back the 3D data.

Furthermore, an extension may be specified in one mesh object of the scene description. Then, one or a plurality of first properties corresponding to the first method of playing back the 3D data may be stored in the mesh object. Also, one or a plurality of second properties corresponding to the second method of playing back the 3D data may be stored in the extension. Then, in step S402, the file processing unit 412 may select one or a plurality of first properties stored in the mesh object or one or a plurality of second properties stored in the extension according to the method of playing back the 3D data.

In addition, the first extension and the second extension may be specified in one node of the scene description. Then, one or a plurality of first attributes properties corresponding to the first method of playing back the 3D data may be associated with the first extension. Furthermore, one or a plurality of second attributes properties corresponding to the second method of playing back the 3D data may be associated with the second extension. Then, in step S402, the file processing unit 412 may select one or a plurality of first attributes properties associated with the first extension or one or a plurality of second attributes properties associated with the second extension according to the method of playing back the 3D data.

In addition, an extension may be specified in one node of the scene description. Then, one or a plurality of first attributes properties corresponding to the first method of playing back the 3D data may be associated with the node. Further, one or a plurality of second attributes properties corresponding to the second method of playing back the 3D data may be associated with the extension. Then, in step S402, the file processing unit 412 may select one or a plurality of first attributes properties associated with the node or one or a plurality of second attributes properties associated with the extension according to the method of playing back the 3D data.

In addition, the first extension and the second extension may be specified in one node of the scene description. Then, one or a plurality of first properties corresponding to the first method of playing back the 3D data may be associated with the first extension. Further, one or a plurality of second properties corresponding to the second method of playing back the 3D data may be associated with the second extension. Then, in step S402, the file processing unit 412 may select one or a plurality of first properties associated with the first extension or one or a plurality of second properties associated with the second extension according to the method of playing back the 3D data.

In addition, an extension may be specified in one node of the scene description. Then, one or a plurality of first properties corresponding to the first method of playing back the 3D data may be associated with the node. One or a plurality of second properties corresponding to the second method of playing back the 3D data may be associated with the extension. Then, in step S402, the file processing unit 412 may select one or a plurality of first properties associated with the node or one or a plurality of second properties associated with the extension according to the method of playing back the 3D data.

In addition, an extension may be specified in one primitives of the scene description. A first alternatives array and a second alternatives array may then be specified within the extension. Then, the first alternatives array may have each of the one or a plurality of first properties corresponding to the first method of playing back the 3D data as an element. Further, the second alternatives array may have each of the one or a plurality of second properties corresponding to the second method of playing back the 3D data as an element. Then, in step S402, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

Furthermore, an extension may be specified in one mesh object of the scene description. A first alternatives array and a second alternatives array may then be specified within the extension. Then, the first alternatives array may have each of the one or a plurality of first properties corresponding to the first method of playing back the 3D data as an element. Further, the second alternatives array may have each of the one or a plurality of second properties corresponding to the second method of playing back the 3D data as an element. Then, in step S402, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

In addition, an extension may be specified in one node of the scene description. A first alternatives array and a second alternatives array may then be specified within the extension. Then, the first alternatives array may have an element associated with each of the one or a plurality of first properties corresponding to the first method of playing back the 3D data. Furthermore, the second alternatives array may also have an element associated with each of the one or a plurality of second properties corresponding to the second method of playing back the 3D data. Then, in step S402, in a case where the first playback method is applied, the file processing unit 412 may select the first alternatives array and process the 3D data by the first playback method using one or a plurality of first properties. Furthermore, in a case where the second playback method is applied, the file processing unit 412 may select the second alternatives array and process the 3D data by the second playback method using one or a plurality of second properties.

Of course, another present technologies described above may be applied in <3. Scene description corresponding to a plurality of playback methods>. Furthermore, a plurality of the present technologies may be appropriately combined and applied.

### <6. Appendix>

### <Combination>

Each example of the present technology described above may be applied in appropriate combination with other examples as long as there is no contradiction. Furthermore, each example of the present technology described above may be applied in combination with another technology other than the above-described technology.

### <Computer>

The above-described series of processes can be executed by hardware or software. In a case where the series of processes is executed by software, a program constituting the software is installed in a computer. Here, the computer includes a computer incorporated in dedicated hardware, a general-purpose personal computer capable of executing various functions by installing various programs, and the like, for example.

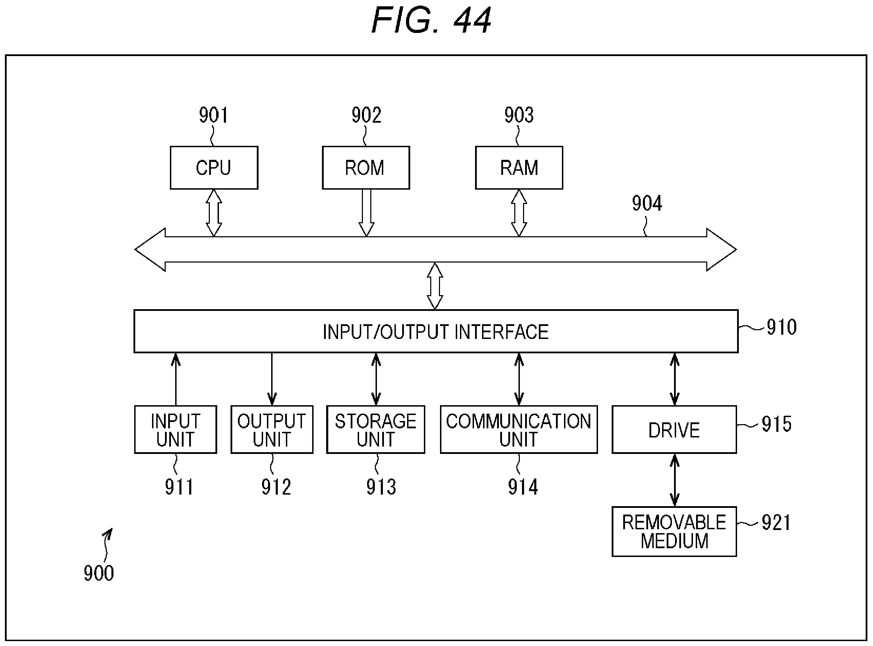

Fig. 44 is a block diagram illustrating a configuration example of hardware of a computer that executes the above-described series of processes by a program.

In a computer 900 illustrated in Fig. 44, a central processing unit (CPU) 901, a read only memory (ROM) 902, and a random access memory (RAM) 903 are mutually connected via a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes a network interface, for example. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processes is performed. The R_AM 903 also appropriately stores data and the like necessary for the CPU 901 to execute various processes.

The program executed by the computer can be applied by being recorded on, for example, the removable medium 921 as a package medium or the like. In this case, the program can be installed in the storage unit 913 via the input/output interface 910 by attaching the removable medium 921 to the drive 915.

Furthermore, this program can also be provided via a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

### <Object to which the present technology is applicable>

The present technology can be applied to any encoding/decoding method.

Furthermore, the present technology can be applied to any configuration. For example, the present technology can be applied to various electronic devices.

Furthermore, for example, the present technology can also be implemented as a partial configuration of an apparatus, such as a processor (for example, a video processor) as a system large scale integration (LSI) or the like, a module (for example, a video module) using a plurality of processors or the like, a unit (for example, a video unit) using a plurality of modules or the like, or a set (for example, a video set) obtained by further adding other functions to a unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts), and the like), and it does not matter whether or not all the components are in the same housing. Consequently, both of a plurality of devices stored in different housings and connected via a network, and one device in which a plurality of modules is stored in one housing are systems.

### <Field and application to which present technology is applicable>

The system, device, processing unit and the like to which the present technology is applied may be used in arbitrary fields such as traffic, medical care, crime prevention, agriculture, livestock industry, mining, beauty care, factory, household appliance, weather, and natural surveillance, for example. Furthermore, any application thereof may be used.

For example, the present technology can be applied to systems and devices used for providing content for appreciation and the like. Furthermore, for example, the present technology can also be applied to systems and devices used for traffic, such as traffic condition management and automated driving control. Moreover, for example, the present technology can also be applied to systems and devices used for security. Furthermore, for example, the present technology can be applied to systems and devices used for automatic control of a machine or the like. Moreover, for example, the present technology can also be applied to systems and devices provided for use in agriculture and livestock industry. Furthermore, the present technology can also be applied to systems and devices that monitor, for example, the status of nature such as a volcano, a forest, and the ocean, wildlife, and the like. Moreover, for example, the present technology can also be applied to systems and devices used for sports.

### <Others>

Note that, in this specification, the "flag" is information for identifying a plurality of states, and includes not only information used for identifying two states of true (1) and false (0) but also information capable of identifying three or more states. Therefore, the value that may be taken by the "flag" may be, for example, a binary of 1/0 or a ternary or more. That is, the number of bits forming this "flag" is arbitrary, and may be one bit or a plurality of bits. Furthermore, identification information (including the flag) is assumed to include not only identification information thereof in a bitstream but also difference information of the identification information with respect to a certain reference information in the bitstream, and thus, in the present description, the "flag" and "identification information" include not only the information thereof but also the difference information with respect to the reference information.

Furthermore, various types of information (such as metadata) related to coded data (bit stream) may be transmitted or recorded in any form as long as it is associated with the coded data. Herein, the term "associate" is intended to mean to make, when processing one data, the other data available (linkable), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be not the entire data but a part of data. For example, an image and information corresponding to the image may be associated with each other in any unit such as a plurality of frames, one frame, or a part within a frame.

Note that, in the present specification, terms such as "combine", "multiplex", "add", "integrate", "include", "store", "put in", "introduce", "insert", and the like mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, a configuration other than the above-described configurations may be added to the configuration of each device (or each processing unit). Moreover, when the configuration and operation of the entire system are substantially the same, part of the configuration of a certain device (or processing unit) may be included in the configuration of another device (or another processing unit).

Furthermore, for example, the above-described program may be executed in any device. In this case, it is sufficient that the device has a necessary function (functional block or the like) and is only required to obtain necessary information.

Furthermore, for example, each step of one flowchart may be executed by one device, or may be shared and executed by a plurality of devices. Furthermore, in a case where a plurality of processes is included in one step, the plurality of processes may be executed by one device, or may be shared and executed by a plurality of devices. In other words, a plurality of processes included in one step can also be executed as processes of a plurality of steps. Conversely, the processing described as a plurality of steps can be collectively executed as one step.

Furthermore, for example, in the program executed by the computer, process of steps describing the program may be executed in time series in the order described in the present specification, or may be executed in parallel or individually at necessary timing such as when a call is made. That is, as long as there is no contradiction, the processing of each step may be executed in an order different from the above-described order. Furthermore, the process of steps describing this program may be executed in parallel with the processing of another program, or may be executed in combination with the processing of another program.

Furthermore, for example, a plurality of techniques related to the present technology can be implemented independently as a single body as long as there is no contradiction. Of course, a plurality of arbitrary present technologies can be implemented in combination. For example, part or all of the present technologies described in any of the embodiments can be implemented in combination with part or all of the present technologies described in other embodiments. Furthermore, part or all of any of the above-described present technologies can be implemented using together with another technology that is not described above.

Note that the present technology can also have the following configurations.
(1) An information processing device including
   a file processing unit that selects a property corresponding to a method of playing back 3D data on the basis of an extension specified in a scene description, and processes the 3D data by the playback method using the selected property.
(2) The information processing device according to Item (1),
   in which a first extension and a second extension are specified in one primitives of the scene description,
   one or a plurality of first attributes properties corresponding to a first method of playing back the 3D data is stored in the first extension, and
   one or a plurality of second attributes properties corresponding to a second method of playing back the 3D data is stored in the second extension, and
   the file processing unit selects one or a plurality of the first attributes properties stored in the first extension or one or a plurality of the second attributes properties stored in the second extension according to a method of playing back the 3D data.
(3) The information processing device according to Item (1),
   in which the extension is specified in one primitives of the scene description,
   one or a plurality of first attributes properties corresponding to a first method of playing back the 3D data is stored in the primitives, and
   one or a plurality of second attributes properties corresponding to a second method of playing back the 3D data is stored in the extension, and
   the file processing unit selects one or a plurality of the first attributes properties stored in the primitives or one or a plurality of the second attributes properties stored in the extension according to a method of playing back the 3D data.
(4) The information processing device according to Item (1),
   in which a first extension and a second extension are specified in one primitives of the scene description,
   one or a plurality of first properties corresponding to a first method of playing back the 3D data is stored in the first extension, and
   one or a plurality of second properties corresponding to a second method of playing back the 3D data is stored in the second extension, and
   the file processing unit selects one or a plurality of the first properties stored in the first extension or one or a plurality of the second properties stored in the second extension according to a method of playing back the 3D data.
(5) The information processing device according to Item (1),
   in which the extension is specified in one primitives of the scene description,
   one or a plurality of first properties corresponding to a first method of playing back the 3D data is stored in the primitives, and
   one or a plurality of second properties corresponding to a second method of playing back the 3D data is stored in the extension, and
   the file processing unit selects one or a plurality of the first properties stored in the primitives or one or a plurality of the second properties stored in the extension according to a method of playing back the 3D data.
(6) The information processing device according to Item (1),
   in which a first extension and a second extension are specified in one mesh object of the scene description,
   one or a plurality of first attributes properties corresponding to a first method of playing back the 3D data is stored in the first extension, and
   one or a plurality of second attributes properties corresponding to a second method of playing back the 3D data is stored in the second extension, and
   the file processing unit selects one or a plurality of the first attributes properties stored in the first extension or one or a plurality of the second attributes properties stored in the second extension according to a method of playing back the 3D data.
(7) The information processing device according to Item (1),
   in which the extension is specified in one mesh object of the scene description,
   one or a plurality of first attributes properties corresponding to a first method of playing back the 3D data is stored in the mesh object, and
   one or a plurality of second attributes properties corresponding to a second method of playing back the 3D data is stored in the extension, and
   the file processing unit selects one or a plurality of the first attributes properties stored in the mesh object or one or a plurality of the second attributes properties stored in the extension according to a method of playing back the 3D data.
(8) The information processing device according to Item (1),
   in which a first extension and a second extension are specified in one mesh object of the scene description,
   one or a plurality of first properties corresponding to a first method of playing back the 3D data is stored in the first extension, and
   one or a plurality of second properties corresponding to a second method of playing back the 3D data is stored in the second extension, and
   the file processing unit selects one or a plurality of the first properties stored in the first extension or one or a plurality of the second properties stored in the second extension according to a method of playing back the 3D data.
(9) The information processing device according to Item (1),
   in which the extension is specified in one mesh object of the scene description,
   one or a plurality of first properties corresponding to a first method of playing back the 3D data is stored in the mesh object, and
   one or a plurality of second properties corresponding to a second method of playing back the 3D data is stored in the extension, and
   the file processing unit selects one or a plurality of the first properties stored in the mesh object or one or a plurality of the second properties stored in the extension according to a method of playing back the 3D data.
(10) The information processing device according to Item (1),
   in which a first extension and a second extension are specified in one node of the scene description,
   one or a plurality of first attributes properties corresponding to a first method of playing back the 3D data is associated with the first extension, and
   one or a plurality of second attributes properties corresponding to a second method of playing back the 3D data is associated with the second extension, and
   the file processing unit selects one or a plurality of the first attributes properties associated with the first extension or one or a plurality of the second attributes properties associated with the second extension according to a method of playing back the 3D data.
(11) The information processing device according to Item (1),
   in which the extension are specified in one node of the scene description,
   one or a plurality of first attributes properties corresponding to a first method of playing back the 3D data is associated with the node, and
   one or a plurality of second attributes properties corresponding to a second method of playing back the 3D data is associated with the extension, and
   the file processing unit selects one or a plurality of the first attributes properties associated with the node or one or a plurality of the second attributes properties associated with the extension according to a method of playing back the 3D data.
(12) The information processing device according to Item (1),
   in which a first extension and a second extension are specified in one node of the scene description,
   one or a plurality of first properties corresponding to a first method of playing back the 3D data is associated with the first extension, and
   one or a plurality of second properties corresponding to a second method of playing back the 3D data is associated with the second extension, and
   the file processing unit selects one or a plurality of the first properties associated with the first extension or one or a plurality of the second properties associated with the second extension according to a method of playing back the 3D data.
(13) The information processing device according to Item (1),
   in which the extension are specified in one node of the scene description,
   one or a plurality of first properties corresponding to a first method of playing back the 3D data is associated with the node, and
   one or a plurality of second properties corresponding to a second method of playing back the 3D data is associated with the extension, and
   the file processing unit selects one or a plurality of the first properties associated with the node or one or a plurality of the second properties associated with the extension according to a method of playing back the 3D data.
(14) An information processing method including selecting a property corresponding to a method of playing back 3D data on the basis of an extension specified in a scene description, and processing the 3D data by the playback method using the selected property.
(21) An information processing device including
   a file processing unit that selects, from among alternatives arrays specified in a scene description, an alternatives array corresponding to a method of playing back 3D data, and processes the 3D data by the playback method using a property that is an element of the selected alternatives array.
(22) The information processing device according to Item (21),
   in which an extension is specified in one primitives of the scene description,
   a first alternatives array and a second alternatives array are specified in the extension,
   the first alternatives array has each of one or a plurality of first properties corresponding to a first method of playing back the 3D data as an element, and
   the second alternatives array has each of one or a plurality of second properties corresponding to a second method of playing back the 3D data as an element, and
   the file processing unit
   selects the first alternatives array and processes the 3D data by the first playback method using one or a plurality of the first properties in a case where the first playback method is applied, and
   selects the second alternatives array and processes the 3D data by the second playback method using one or a plurality of the second properties in a case where the second playback method is applied.
(23) The information processing device according to Item (21),
   in which an extension is specified in one mesh object of the scene description,
   a first alternatives array and a second alternatives array are specified in the extension,
   the first alternatives array has each of one or a plurality of first properties corresponding to a first method of playing back the 3D data as an element, and
   the second alternatives array has each of one or a plurality of second properties corresponding to a second method of playing back the 3D data as an element, and
   the file processing unit
   selects the first alternatives array and processes the 3D data by the first playback method using one or a plurality of the first properties in a case where the first playback method is applied, and
   selects the second alternatives array and processes the 3D data by the second playback method using one or a plurality of the second properties in a case where the second playback method is applied.
(24) The information processing device according to Item (21),
   in which an extension is specified in one node of the scene description, a first alternatives array and a second alternatives array are specified in the extension,
   the first alternatives array has an element associated with each of one or a plurality of first properties corresponding to a first method of playing back the 3D data, and
   the second alternatives array has an element associated with each of one or a plurality of second properties corresponding to a second method of playing back the 3D data, and
   the file processing unit
   selects the first alternatives array and processes the 3D data by the first playback method using one or a plurality of the first properties in a case where the first playback method is applied, and
   selects the second alternatives array and processes the 3D data by the second playback method using one or a plurality of the second properties in a case where the second playback method is applied.
(25) An information processing method including
   selecting, from among alternatives arrays specified in a scene description, an alternatives array corresponding to a method of playing back 3D data, and processing the 3D data by the playback method using a property that is an element of the selected alternatives array.
(31) An information processing device further including
   a file generation unit that generates a scene description file that stores an extension for identifying a property for each method of playing back 3D data.
(32) The information processing device according to Item (31),
   in which the file generation unit
   specifies a first extension and a second extension in one primitives of the scene description file,
   stores, in the first extension, one or a plurality of first attributes properties corresponding to a first method of playing back the 3D data, and
   stores, in the second extension, one or a plurality of second attributes properties corresponding to a second method of playing back the 3D data.
(33) The information processing device according to Item (31),
   in which the file generation unit
   specifies the extension in one primitives of the scene description file,
   stores, in the primitives, one or a plurality of first attributes properties corresponding to a first method of playing back the 3D data, and
   stores, in the extension, one or a plurality of second attributes properties corresponding to a second method of playing back the 3D data.
(34) The information processing device according to Item (31),
   in which the file generation unit
   specifies a first extension and a second extension in one primitives of the scene description file,
   stores, in the first extension, one or a plurality of first properties corresponding to a first method of playing back the 3D data, and
   stores, in the second extension, one or a plurality of second properties corresponding to a second method of playing back the 3D data.
(35) The information processing device according to Item (31),
   in which the file generation unit
   specifies the extension in one primitives of the scene description file,
   stores, in the primitives, one or a plurality of first properties corresponding to a first method of playing back the 3D data, and
   stores, in the extension, one or a plurality of second properties corresponding to a second method of playing back the 3D data.
(36) The information processing device according to Item (31),
   in which the file generation unit
   specifies a first extension and a second extension in one mesh object of the scene description file,
   stores, in the first extension, one or a plurality of first attributes properties corresponding to a first method of playing back the 3D data, and
   stores, in the second extension, one or a plurality of second attributes properties corresponding to a second method of playing back the 3D data.
(37) The information processing device according to Item (31),
   in which the file generation unit
   specifies the extension in one mesh object of the scene description file,
   stores, in the mesh object, one or a plurality of first attributes properties corresponding to a first method of playing back the 3D data, and
   stores, in the extension, one or a plurality of second attributes properties corresponding to a second method of playing back the 3D data.
(38) The information processing device according to Item (31),
   in which the file generation unit
   specify a first extension and a second extension in one mesh object of the scene description file,
   stores, in the first extension, one or a plurality of first properties corresponding to a first method of playing back the 3D data, and
   stores, in the second extension, one or a plurality of second properties corresponding to a second method of playing back the 3D data.
(39) The information processing device according to Item (31),
   in which the file generation unit
   specifies the extension in one mesh object of the scene description file,
   stores, in the mesh object, one or a plurality of first properties corresponding to the first method of playing back the 3D data, and
   stores, in the extension, one or a plurality of second properties corresponding to a second method of playing back the 3D data.
(40) The information processing device according to Item (31),
   in which the file generation unit
   specifies a first extension and a second extension in one node of the scene description file,
   associates one or a plurality of first attributes properties corresponding to a first method of playing back the 3D data with the first extension, and
   associates, in the second extension, one or a plurality of second attributes properties corresponding to a second method of playing back the 3D data.
(41) The information processing device according to Item (31),
   in which the file generation unit
   specifies the extension in one node of the scene description file,
   associates one or a plurality of first attributes properties corresponding to a first method of playing back the 3D data with the node, and
   associates one or a plurality of second attributes properties corresponding to a second method of playing back the 3D data with the extension.
(42) The information processing device according to Item (31),
   in which the file generation unit
   specifies a first extension and a second extension in one node of the scene description file,
   associates one or a plurality of first properties corresponding to a first method of playing back the 3D data with the first extension, and
   associates one or a plurality of second properties corresponding to a second method of playing back the 3D data with the second extension.
(43) The information processing device according to Item (31),
   in which the file generation unit
   specifies the extension in one node of the scene description file,
   associates one or a plurality of first properties corresponding to a first method of playing back the 3D data with the node, and
   associates one or a plurality of second properties corresponding to a second method of playing back the 3D data with the extension.
(44) An information processing method including
   generating a scene description file that stores an extension for identifying a property for each method of playing back 3D data.
(51) An information processing device including
   a file generation unit that generates a scene description file that stores a plurality of alternatives arrays having properties corresponding to the mutually same method of playing back 3D data as elements.
(52) The information processing device according to Item (51),
   in which the file generation unit
   specifies an extension in one primitives of the scene description file,
   stores, in the extension, a first alternatives array having each of one or a plurality of first properties corresponding to a first method of playing back the 3D data as an element, and
   further stores, in the extension, a second alternatives array having each of one or a plurality of second properties corresponding to a second method of playing back the 3D data as an element.
(53) The information processing device according to Item (51),
   in which the file generation unit
   specifies an extension in one mesh object of the scene description file,
   stores, in the extension, a first alternatives array having each of one or a plurality of first properties corresponding to a first method of playing back the 3D data as an element, and
   further stores, in the extension, a second alternatives array having each of one or a plurality of second properties corresponding to a second method of playing back the 3D data as an element.
(54) The information processing device according to Item (51),
   in which the file generation unit
   specifies an extension in one node of the scene description file,
   stores, in the extension, a first alternatives array having an element associated with each of one or a plurality of first properties corresponding to a first method of playing back the 3D data, and
   further stores, in the extension, a second alternatives array having an element associated with each of one or a plurality of second properties corresponding to a second method of playing back the 3D data.
(55) An information processing device
   that generates a scene description file storing a plurality of alternatives arrays having properties corresponding to the mutually same method of playing back 3D data as elements.

### REFERENCE SIGNS LIST

- 300: File generation device
- 301: Control unit
- 302: File generation processing unit
- 311: Input unit
- 312: Preprocessing unit
- 313: Encoding unit
- 314: File generation unit
- 315: Recording unit
- 316: Output unit
- 400: Client device
- 401: Control unit
- 402: Client processing unit
- 411: File acquisition unit
- 412: File processing unit
- 413: Decoding unit
- 414: Display information generation unit
- 415: Display unit
- 416: Display control unit

## Claims

1. An information processing device comprising:
a file processing unit that selects a property corresponding to a method of playing back 3D data on a basis of an extension specified in a scene description, and processes the 3D data by the playback method using the selected property.

2. The information processing device according to claim 1,
wherein a first extension and a second extension are specified in one primitives of the scene description,
one or a plurality of first attributes properties corresponding to a first method of playing back the 3D data is stored in the first extension, and
one or a plurality of second attributes properties corresponding to a second method of playing back the 3D data is stored in the second extension, and
the file processing unit selects one or a plurality of the first attributes properties stored in the first extension or one or a plurality of the second attributes properties stored in the second extension according to a method of playing back the 3D data.

3. The information processing device according to claim 1,
wherein the extension is specified in one primitives of the scene description,
one or a plurality of first attributes properties corresponding to a first method of playing back the 3D data is stored in the primitives, and
one or a plurality of second attributes properties corresponding to a second method of playing back the 3D data is stored in the extension, and
the file processing unit selects one or a plurality of the first attributes properties stored in the primitives or one or a plurality of the second attributes properties stored in the extension according to a method of playing back the 3D data.

4. The information processing device according to claim 1,
wherein a first extension and a second extension are specified in one primitives of the scene description,
one or a plurality of first properties corresponding to a first method of playing back the 3D data is stored in the first extension, and
one or a plurality of second properties corresponding to a second method of playing back the 3D data is stored in the second extension, and
the file processing unit selects one or a plurality of the first properties stored in the first extension or one or a plurality of the second properties stored in the second extension according to a method of playing back the 3D data.

5. The information processing device according to claim 1,
wherein the extension is specified in one primitives of the scene description,
one or a plurality of first properties corresponding to a first method of playing back the 3D data is stored in the primitives, and
one or a plurality of second properties corresponding to a second method of playing back the 3D data is stored in the extension, and
the file processing unit selects one or a plurality of the first properties stored in the primitives or one or a plurality of the second properties stored in the extension according to a method of playing back the 3D data.

6. The information processing device according to claim 1,
wherein a first extension and a second extension are specified in one mesh object of the scene description,
one or a plurality of first attributes properties corresponding to a first method of playing back the 3D data is stored in the first extension, and
one or a plurality of second attributes properties corresponding to a second method of playing back the 3D data is stored in the second extension, and
the file processing unit selects one or a plurality of the first attributes properties stored in the first extension or one or a plurality of the second attributes properties stored in the second extension according to a method of playing back the 3D data.

7. The information processing device according to claim 1,
wherein the extension is specified in one mesh object of the scene description,
one or a plurality of first attributes properties corresponding to a first method of playing back the 3D data is stored in the mesh object, and
one or a plurality of second attributes properties corresponding to a second method of playing back the 3D data is stored in the extension, and
the file processing unit selects one or a plurality of the first attributes properties stored in the mesh object or one or a plurality of the second attributes properties stored in the extension according to a method of playing back the 3D data.

8. The information processing device according to claim 1,
wherein a first extension and a second extension are specified in one mesh object of the scene description,
one or a plurality of first properties corresponding to a first method of playing back the 3D data is stored in the first extension, and
one or a plurality of second properties corresponding to a second method of playing back the 3D data is stored in the second extension, and
the file processing unit selects one or a plurality of the first properties stored in the first extension or one or a plurality of the second properties stored in the second extension according to a method of playing back the 3D data.

9. The information processing device according to claim 1,
wherein the extension is specified in one mesh object of the scene description,
one or a plurality of first properties corresponding to a first method of playing back the 3D data is stored in the mesh object, and
one or a plurality of second properties corresponding to a second method of playing back the 3D data is stored in the extension, and
the file processing unit selects one or a plurality of the first properties stored in the mesh object or one or a plurality of the second properties stored in the extension according to a method of playing back the 3D data.

10. The information processing device according to claim 1,
wherein a first extension and a second extension are specified in one node of the scene description,
one or a plurality of first attributes properties corresponding to a first method of playing back the 3D data is associated with the first extension, and
one or a plurality of second attributes properties corresponding to a second method of playing back the 3D data is associated with the second extension, and
the file processing unit selects one or a plurality of the first attributes properties associated with the first extension or one or a plurality of the second attributes properties associated with the second extension according to a method of playing back the 3D data.

11. The information processing device according to claim 1,
wherein the extension is specified in one node of the scene description,
one or a plurality of first attributes properties corresponding to a first method of playing back the 3D data is associated with the node, and
one or a plurality of second attributes properties corresponding to a second method of playing back the 3D data is associated with the extension, and
the file processing unit selects one or a plurality of the first attributes properties associated with the node or one or a plurality of the second attributes properties associated with the extension according to a method of playing back the 3D data.

12. The information processing device according to claim 1,
wherein a first extension and a second extension are specified in one node of the scene description,
one or a plurality of first properties corresponding to a first method of playing back the 3D data is associated with the first extension, and
one or a plurality of second properties corresponding to a second method of playing back the 3D data is associated with the second extension, and
the file processing unit selects one or a plurality of the first properties associated with the first extension or one or a plurality of the second properties associated with the second extension according to a method of playing back the 3D data.

13. The information processing device according to claim 1,
wherein the extension is specified in one node of the scene description,
one or a plurality of first properties corresponding to a first method of playing back the 3D data is associated with the node, and
one or a plurality of second properties corresponding to a second method of playing back the 3D data is associated with the extension, and
the file processing unit selects one or a plurality of the first properties associated with the node or one or a plurality of the second properties associated with the extension according to a method of playing back the 3D data.

14. An information processing method comprising:
selecting a property corresponding to a method of playing back 3D data on a basis of an extension specified in a scene description, and processing the 3D data by the playback method using the selected property.

15. An information processing device comprising:
a file processing unit that selects, from among alternatives arrays specified in a scene description, an alternatives array corresponding to a method of playing back 3D data, and processes the 3D data by the playback method using a property that is an element of the selected alternatives array.

16. The information processing device according to claim 15,
wherein an extension is specified in one primitives of the scene description,
a first alternatives array and a second alternatives array are specified in the extension,
the first alternatives array has each of one or a plurality of first properties corresponding to a first method of playing back the 3D data as an element, and
the second alternatives array has each of one or a plurality of second properties corresponding to a second method of playing back the 3D data as an element, and
the file processing unit
selects the first alternatives array and processes the 3D data by the first playback method using one or a plurality of the first properties in a case where the first playback method is applied, and
selects the second alternatives array and processes the 3D data by the second playback method using one or a plurality of the second properties in a case where the second playback method is applied.

17. An information processing method comprising:
selecting, from among alternatives arrays specified in a scene description, an alternatives array corresponding to a method of playing back 3D data, and processing the 3D data by the playback method using a property that is an element of the selected alternatives array.

18. An information processing device further comprising: a file generation unit that generates a scene description file that stores an extension for identifying a property for each method of playing back 3D data.

19. The information processing device according to claim 18,
wherein the file generation unit
specifies a first extension and a second extension in one primitives of the scene description file,
stores, in the first extension, one or a plurality of first attributes properties corresponding to a first method of playing back the 3D data, and
stores, in the second extension, one or a plurality of second attributes properties corresponding to a second method of playing back the 3D data.

20. An information processing method comprising:
generating a scene description file that stores an extension for identifying a property for each method of playing back 3D data.
